# EUROPEAN PATENT APPLICATION

(11) **EP 2 492 809 A2**
(43) Date of publication of application: **29.08.2012**
(21) Application number: 12153243.6
(22) Date of filing: 31.01.2012
(51) Int. Cl.: G06F 9/445, G06F 11/30, G06F 3/12

(54) **Device interaction tree and technique**

(30) Priority: 01.02.2011 US 201113019169
(71) Applicant: Ricoh Company, Ltd., Tokyo 143-8555 (JP)
(72) Inventor: Williams, David Arthur, Cupertino, CA 95014 (US)
(74) Representative: Maury, Richard Philip

(57) **Abstract**

Methods, devices, and non-transitory computer-readable storage media are disclosed for creating and using device interaction trees to determine states of devices. A device interaction tree includes a root node, intermediate nodes, and leaf nodes. The intermediate nodes specify queries and tests, and the leaf nodes specify device states. The state of the given device may be determined by traversing the device interaction tree from the root node, through one or more intermediate nodes, to a leaf node. During traversal, a query associated with a current node in the tree is sent to the given device to obtain a response. A test associated with the current node is used to evaluate the response against one or more values. The outcome of the test determines a next node on a path towards leaf nodes of the tree. The state of the device is specified by the leaf node resulting from traversal of the tree.

## Description

### FIELD OF THE INVENTION

The present invention relates to a device interaction tree for interacting with devices.

### BACKGROUND

Medium to large enterprises often have diverse computer networks with a variety of devices attached in addition to personal computers. The enterprise operates most efficiently when devices such as printers and multi-function devices are maintained in online, working condition, with enough paper and toner to handle incoming requests. An information technology department with a limited budget and staff typically maintains and repairs these devices to keep them available for use. For example, devices such as printers and multi-function devices may be maintained by replenishing paper and toner when paper and toner levels are low. As another example, devices may be repaired by removing a paper jam or closing a device cover that was left open. Devices that are unable to handle requests may impede the efficient operation of the enterprise and reflect poorly on the information technology department.

Instead of physically checking on a device, the information technology staff may use a customized management application designed to remotely interact with the device over a network. Different devices respond to different, customized device management instructions. Due to the variety of devices used by enterprises, the information technology staff is unlikely to have a single management application that is capable of interacting with every device used by the enterprise. Additionally, even if the management application was capable of interacting with every device currently in the network, unsupported devices may be added to the network. Updating a customized management application to account for new devices is tedious and requires a high level of skill due to the complexity of customized management applications. Further, due to security concerns, updating the customized management application may require a highly privileged user. Even if the updated management application is from a trusted source, bugs in the updated management application may have unpredictable effects on the machine running the management application as well as devices managed by the management application.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

### SUMMARY

Techniques are provided for creating and using device interaction trees to determine states of devices. A device interaction tree includes a root node, intermediate nodes, and leaf nodes. Example device interaction trees include a device state determination tree, a device configuration tree, and a device action tree. The intermediate nodes of the device state determination tree specify queries and tests, and the leaf nodes specify device states. The state of the given device may be determined by traversing the device state determination tree from the root node, through one or more intermediate nodes, to a leaf node. During traversal, a query associated with a current node in the tree is sent to the given device to obtain a response. A test associated with the current node is used to evaluate the response against one or more values. The outcome of the test determines a next node on a path towards leaf nodes of the tree. The state of the device is specified by the leaf node resulting from traversal of the tree.

### BRIEF DESCRIPTION OF THE DRAWINGS

In the drawings:
FIG. 1A illustrates an example device monitor system for monitoring a plurality of devices in a network.
FIG. 1B illustrates an example device monitor system that detects when a device in a known class is added to a network.
FIG. 1C illustrates an example device monitor system that detects when a device in an unknown class is added to a network.
FIG. 2 is an example class diagram for a set of device interaction trees.
FIG. 3 illustrates example components in a set of trees for interacting with devices.
FIG. 4 illustrates an example tree of three levels.
FIG. 5 illustrates an example device classifier for determining a class of a device and selecting one of several device interaction trees.
FIG. 6 illustrates an example tree for obtaining a vendor ID of the device.
FIG. 7A illustrates an example tree for classifying a device into a single class.
FIG. 7B illustrates an example tree for classifying a device into one of multiple classes.
FIG. 8A illustrates an example structure of a query response dictionary.
FIG. 8B illustrates an example query response dictionary with eight queries.
FIG. 8C illustrates an example query response dictionary with eleven queries, four of which are ID queries.
FIG. 9A illustrates an example process for automatically updating a tree to account for a new device.
FIG. 9B illustrates an example process for manually updating a tree to account for a new device.
FIG. 10A illustrates an embodiment where updates to the tree are received from a central server.
FIG. 10B illustrates an embodiment where updates to the tree are based on user input.
FIG. 11 is a flow chart that illustrates an embodiment where a device management application uses and updates a tree.
FIG. 12 is a flow chart illustrating an embodiment where a device management application provisionally adds a node to the tree and allows the client to validate the node before the node becomes permanent.
FIG. 13 is a flow chart illustrating an embodiment where a device management application updates trees based on a query response dictionary received from a central server.
FIGS. 14a-c are flow charts illustrating traversal of an example device interaction tree.
FIG. 15 illustrates an example computer system for performing various embodiments described herein.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

### GENERAL OVERVIEW

Methods, devices, and non-transitory computer-readable storage media are disclosed for creating and using device interaction trees to determine states of devices. A device interaction tree includes a root node, intermediate nodes, and leaf nodes. Example device interaction trees include a device state determination tree, a device configuration tree, and a device action tree. The intermediate nodes of the device state determination tree specify queries and tests, and the leaf nodes specify device states. The state of the given device may be determined by traversing the device state determination tree from the root node, through one or more intermediate nodes, to a leaf node. During traversal, a query associated with a current node in the tree is sent to the given device to obtain a response. A test associated with the current node is used to evaluate the response against one or more values. The outcome of the test determines a next node on a path towards leaf nodes of the tree. The state of the device is specified by the leaf node resulting from traversal of the tree.

Various examples of device state determination trees are illustrated herein to provide an in-depth understanding of example device interaction trees. Many of these examples may be applied in the context of device configuration trees that are configured to change parameters on devices instead of or in addition to determining states of devices. For example, a device configuration tree may be used to change the name of a device. Alternately, many of these examples may be applied in the context of device action trees that are configured to cause devices to perform specific actions instead of or in addition to determining states of devices. For example, a device action tree may be used to cause a device to print a document according to specified settings.

### STATE DETERMINATION TREES

A single state determination tree may be used to determine states of a plurality of devices. Supported devices may include devices with different capabilities, devices with different configurations, devices from different manufacturers, and/or devices with the same states that respond to the same queries differently. The device interaction tree may be created or modified without modifying the software that is configured to traverse the device interaction tree. In one embodiment, creating, modifying, replacing, and/or testing the device interaction tree requires fewer security privileges and has less of a security risk to devices on the network than installing, compiling, or otherwise modifying specialized device management software.

The techniques described herein may be applied to any type of device state. Example device states include, without limitation, idle, sleeping, processing or printing, ready to print, warming up, replacing toner, adjusting, aborting job, cover open, no toner, no fuser, or paper jam. Device states may describe operating statuses of the devices. In one embodiment, operating statuses include types of actions or the lack of actions that are currently being performed by the device. In another embodiment, operating statuses include errors that are preventing the device from performing actions. In another embodiment, the device states include device configurations such as paper tray size, 3-hole puncher, 2-hole puncher, or stapler. In another embodiment, device states include supply states such as a level of toner (for example, 75%) an amount of paper remaining (for example, 50 pages) or an amount of battery remaining (for example, 60% or 3 hours). In various embodiments, states of different types may be represented in the same tree. For example, a single state determination tree may provide information about errors, operating statuses, configurations of devices, and/or supply states. In one embodiment, a request for a state of a device specifies a type of information that is requested. For example, one request may be for the operating status of a device, and another request may be to determine whether the device is configured with a three-hole puncher.

In one embodiment, a device management application receives a request for a state of a device. In one example, the request identifies the device by address. The device management application accesses the state determination tree to select queries to send to the address, and responses are received from the device at the address. The device management application determines a state of the device by traversing the state determination tree through one or more intermediate nodes to a leaf node based on responses from the device. The leaf node indicates a device state, and the device management application may cause the device state to be displayed on a user interface in response to the request for the device state. During traversal of the tree, the device management application merely uses the queries and applies the tests specified by the state determination tree. In one embodiment, the queries and tests do not include executable code themselves. Therefore, once the device management application is configured to traverse a device interaction tree such as a state determination tree, the device interaction tree may be updated without modifying the code of the device management application.

In one embodiment, the device management application monitors the devices on a network, and the state determination tree is updated in response to detecting that the state determination tree cannot provide a particular state of a particular device in the network. In one embodiment, the update is requested from a server that provides updated device interaction trees. The update may replace an existing device interaction tree, create a new device interaction tree and/or to add, remove, or modify nodes for an existing device interaction tree without modifying the code of the device management application.

In one embodiment, the device management application creates or modifies the state determination tree based on received state information that is associated with query and response information. In one embodiment, the information is received from a server that notifies the device management applications as new associations are discovered. The associated state information, query information, and response information may be used to create a new state determination tree and/or to add, remove, or modify nodes for an existing state determination tree without modifying the code of the device management application.

In another embodiment, some or all of the information used to create or modify the tree may be provided by a user, via a user interface. In one example, the user indicates that a particular state was observed for a particular device on the network. In response, the device management application sends a particular query to the particular device to induce a particular response. The indication of the particular state, the particular query, and the particular response may be used to create a new state determination tree and/or to add, remove, or modify nodes for an existing state determination tree without modifying the code of the device management application.

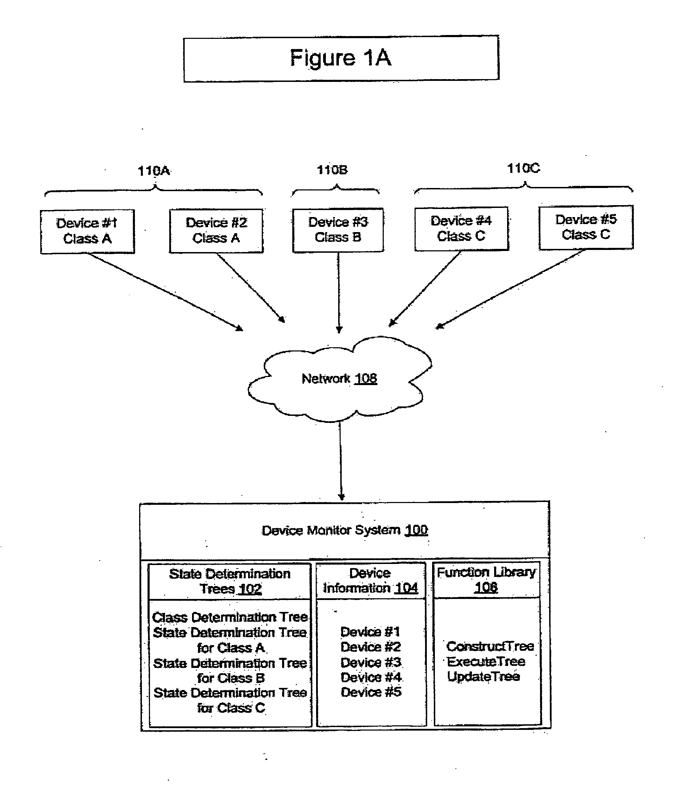

FIG. 1A shows an example device monitor system 100 that communicates with devices 110A, 110B, 110C over a network 108. For example, device monitor system 100 may include a device management application (not depicted) that uses one or more state determination trees to determine states of devices 110A, 110B, 110C in network 108. As shown, device monitor system 100 includes a function library 106 of executable code and state determination trees 102 that specify queries and tests. Function library 106 includes functions that are generic with respect to devices 110A, 110B*,* 110C and optionally also generic with respect to classes of devices. In other words, the functions work with any state determination tree and any set of device information. In one embodiment, a device management application invokes functions from function library 106 to construct, execute, or update state determination trees 102. The ConstructQTree function from function library 106 constructs a state determination tree. An ExecuteQTree function from function library 106 selects queries from state determination trees 102 for sending to a device, receives results from the device, applies tests from state determination trees 102 to the results, and determines a state of the device.

As shown, device monitor system also includes device information 104 upon which device interaction trees 102 may be constructed. Device information 104 includes information that is specific to each of devices 110A, 110B, 110C. Device interaction trees 102 may be modified by the UpdateQTree function as the device monitor system 100 receives new information about devices 110A, 110B, 110C.

### QUERIES AND RESPONSES

Device states may be determined based on responses to a series of queries to the device. For example, a first response to a first query may provide enough information to determine a class of devices to which a device belongs, and a second response to a second query may provide enough information to determine a state of the device. In another example, a third response to a third query and possibly a fourth response to a fourth query are required before the state can be determined.

The techniques described herein may be applied to any type of query for retrieving information from devices. Example types of queries include Simple Network Management Protocol (SNMP) queries, Printer Job Language queries, PostScript queries, and Hypertext Transfer Protocol queries. Various implementations described herein may use all, none, one, or a combination of the example types of queries. In one embodiment, queries and tests in a state determination tree cannot change the state or configuration of any device, or modify software running on any device in the network. In this manner, an update to the state determination tree may be tested without a significant security risk even if the source of the tree is unknown or if the reputation of the source is unknown.

Table 1 shows, for a variety of devices manufactured by a variety of manufacturers, example device responses to SNMP queries including hrDeviceDescr, hrPrinterStatus, hrDeviceStatus, hrPrinterDetectedErrorState, prtAlertCode, prtAlertGroup, prtAlertLocation, prtAlertSeverityLevel, and prtAlertTrainingLevel. All of the printers were in the idle or sleeping state, three were reporting a low toner condition (Samsung 770, OKI MC360 and Ricoh Aficio C420). Table 1 is included in Appendix A.

As shown, the device at Internet Protocol (IP) address 172.30.4.55 responded to the hrDeviceDescr query with "HP LaserJet P4014", the hrPrinterStatus query with "idle", the hrDeviceStatus query with "running", the hrPrinterDetectedErrorState query with "00", the prtAlertCode query with "subunitPowerSaver", the prtAlertGroup query with "generalPrinter", the prtAlertLocation with 35078, the prtAlertSeverityLevel query with "other", and the prtAlertTrainingLevel query with "untrained". This information, along with other information about this device and other devices, may be used to construct a state determination tree for reliably determining the state of the device. In one embodiment, use of the state determination tree causes some, but not all, of these queries to be sent to the device before determining that the device is idle.

Although the device at 172.30.4.55 responded to the hrPrinterStatus query with "idle," other idle devices did not respond to the same query with "idle". For example, the device at 172.30.4.61 responded to the hrPrinterStatus query with "other". Thus, without any information beyond the address of the device, the hrPrinterStatus query alone may be insufficient to determine the actual state of the device.

In fact, different models of devices, same models with different configurations, and same models with different installed firmware may respond to same queries differently. In one embodiment, a state determination tree specifies, for each device in the network, the queries to issue against the device in order to determine the state of the device. The device responds to the queries, and the state determination tree is traversed, based on the responses, to a leaf node that identifies the state of the device.

Referring again to the example in Table 1, the responses to the hrPrinterDetectedErrorState query are non-zero for the three printers with low toner (also note how many different ways the other printers represent zero!). The Host Resources MIB (RFC 2790) states that error conditions are encoded as bits in this value which is of type OCTET STRING, with bit #2 indicating low toner and bit #0 being the most significant bit of the first byte. Both Ricoh and Oki have interpreted this to mean the third bit from the left (or fifth bit from the right), corresponding to 32 (2 to the fifth power) or 0x20 in hexadecimal, which is returned as a raw value (the space character). But all the other printers, including the other Ricoh Aficio, are returning the value of the OCTET STRING as represented by ASCII numerals separated by the colon character (this is the way OCTET STRINGs are shown in some documentation), in other words, returning 49 (ASCII'0') instead of null to indicate zero. Also, the engineers at Samsung appear to have another important difference in their interpretation of the standard; they seem to have counted bits from the right instead of left, i.e. bit #0 is the *least* significant bit which makes bit #2 correspond to 4 (2 to the second power), so low toner is reported as '04'.

Further complicating the situation is the fact that multiple printer states are possible; different combinations of SNMP responses may or may not indicate the same printer state, depending on the printer models involved. One approach is to build a database of SNMP responses for all printer models; once a targeted device has been identified on the network and its model name has been determined, expected SNMP responses for the targeted device can be determined by searching for the model name in the database. However, this approach requires the building and continual updating of a very large database that represents all available printer models. The task of maintaining a reliable and consistent data set for all known printers from all known vendors, often without their cooperation, can be quite a burden for any development team.

Table 2 shows example device responses for a single device in a variety of states. Table 2 is included in Appendix A. As shown, the device responds to queries differently when the device is in different states. Accordingly, one could determine the state of the device based on responses to some or all of the queries.

Even in the case of the single device referenced in Table 2, there may be some variation in how hrPrinterDetectedErrorState is reported. When the cover is open, a raw byte is returned, 0x0B, which is ASCII 11 and is equal to 8 + 2 + 1. According to the MIB specification, this indicates coverOpen (8), offline (2) and service requested (1). However, in response to another condition such as a paper jam (after a few seconds when the printer settles down and consistently returns the same value), the string'07' is returned, which contains the ASCII bytes 48 and 55. If interpreted as ASCII numerals, then '07' indicates the number 7, which corresponds to jammed (4), offline (2) and service requested (1). Thus, the printer returns hrPrinterDetectedErrorState sometimes as a raw byte and sometimes as a string of ASCII numeral characters.

Due to the complexity of obtaining device states for devices in a network, updates to custom device management software can be prohibitively time-consuming and expensive, and frequent updates to software carry security risks and a higher risk of unanticipated software bugs. When compiled software is patched, a new binary distribution is made to clients. These clients must check the new binary distribution for virus infection or other security issues before installing the software.

In one embodiment, instead of updating custom device management software, a site-specific state determination tree is constructed to determine states of devices in a network. In one embodiment, generic device management software is configured to use any device interaction tree, and the device management software does not require updating due to a change in the tree.

In one embodiment, the device interaction tree includes branches for all printer types that are present in a network. The tree structure may be easily replaced and updated without modifying device management software. Thus, the tree structure may be more efficient to maintain and may grow along with the set of printers to be monitored on the network. The tree can handle idiosyncratic device behavior more easily than a general table. For example, a branch can be added to the tree for a different interpretation of hrPrinterDetectedErrorState. In one embodiment, the tree stores queries to retrieve multiple SNMP objects for multiple printer types to determine which of multiple states the printer is in.

Nodes of the state determination tree specify queries to be executed against a device. In one embodiment, the tree is constructed to minimize an average number of queries that are sent to a device before having enough information to determine a state of the device. In one example, tree optimization techniques are used to minimize the height of the tree, or to minimize the average number of nodes between the root node and each leaf node. The queries trigger responses from the device, and the state determination tree is traversed towards a leaf node based on the responses. The leaf node identifies a state of the device.

### TESTS AND ASSIGNMENTS

In addition to specifying queries to be submitted against devices, the state determination tree also specifies tests that evaluate responses from the devices against one or more values. In one embodiment, a device management application accesses a node in the state determination tree to determine a query to send to a device. The query is sent to the device, and a response is received from the device. The response may be processed and tested against one or more values in order to determine a next node in the traversal of the tree towards a leaf node that specifies the state of the device. The node specifies the test to apply to a processed response. For example, the specified test may be a test for whether the response includes a particular string.

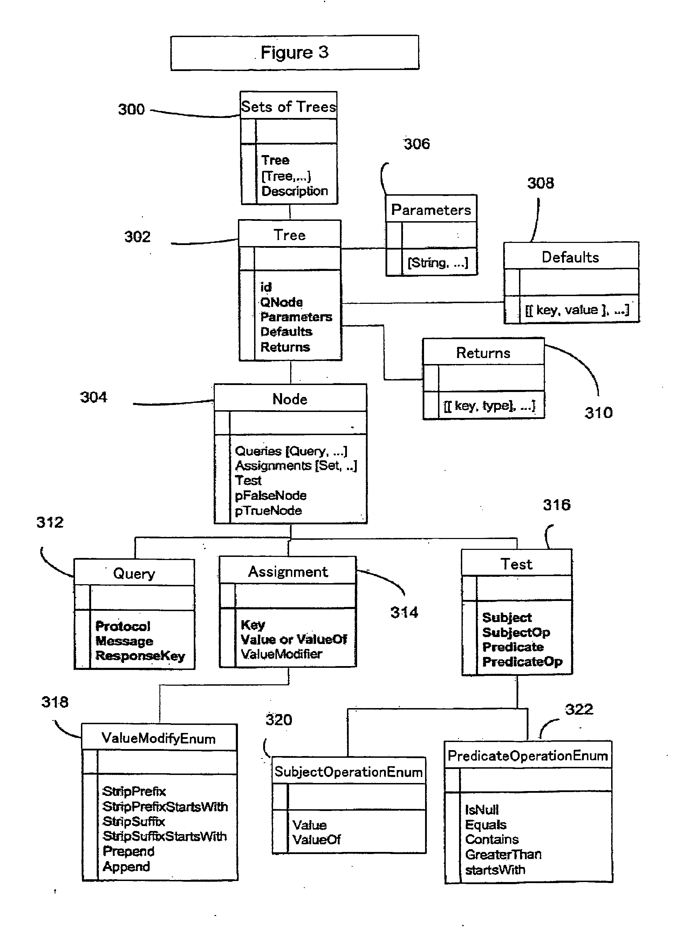

Prior to testing, the response may be processed in an assignment stage. The techniques described herein are not limited to any particular type of assignment. In one embodiment, no assignment is required. Example assignments, such as StripPrefix; StripPrefixStartsWith, StripSuffix, StripSuffixStartsWith, Prepend, and Append are provided in FIG. 3. Other types of assignments may be used in addition to or instead of the example assignments. Assignments may operate on the response or on other stored data to produce a processed response.

Processed responses are tested against one or more values. The techniques described herein are not limited to any particular type of test. A test may specify the item being tested, such as a parameter name returned or a value of the parameter returned. A test may also specify an operation or comparison to be performed to test the processed response. Example operations include IsNull, Equals, Contains, and GreaterThan are provided in FIG. 3. The IsNuil operation is unique in that the operation itself specifies both a value, Null, and the operation, equals. In a particular example, the processed response is tested using the operation "Equals" and the value of "Other." Thus, when the response is "Other," the result of the test is "true." Otherwise, the result of the test is "false." Other types of test may be used in addition to or instead of the example tests.

In one embodiment, assignments are applied as a result of the testing stage. For example, a state variable may be assigned to "idle" as a result of a test that concludes the state is idle. Assignments may also be used to process and store information for use by later nodes in the state determination tree.

In one embodiment, an intermediate node in the state determination tree has two child nodes. The intermediate node specifies a query to send to the device, an assignment to apply to the result of the query, and a true/false test to apply to the processed result. If the result of the test is true, then the device management application traverses the state determination tree down the true branch to one of the two child nodes. If the result of the test is false, then the device management application traverses the state determination tree down the false branch to the other of the two child nodes. In other embodiments, a node may have other numbers of children, and the test may be other than a mere true/false test.

In another embodiment, the intermediate node has three child nodes, and the test is performed against two values in a range of values. If the processed response is less than or equal to the first value, then the state determination tree is traversed to a first of the three child nodes. If the processed response is between the two values, then the state determination tree is traversed to a second of the three child nodes. If the processed response is greater than or equal to the second value, then the state determination tree is traversed to a third of the three child nodes. In yet another embodiment, an intermediate node with three child nodes can be modeled as two binary intermediate nodes, where one of the two intermediate nodes is a child of the other.

In yet another embodiment, the test is performed against two or more alternate values. For example, the test could determine whether the response is "idle," "running," or "other." As a result of the test, alternate branches are traversed in the tree. In one embodiment, some nodes in the state determination tree specify tests or sub-tests and do not specify queries. Once a query has been sent to a device, the response to the query may be tested in multiple different ways at multiple different levels of the tree.

### DEVICE CLASSES

In various embodiments, devices may be categorized into classes based on manufacturer, year, capability, or any other factor that causes the devices to respond to queries similarly. Each class may have a separate state determination tree for determining states of devices in the class. In one embodiment, a class determination tree determines the class to which a device belongs. Once the class of a device is determined by the class determination tree, a state determination tree for the class may be used to determine the state of the device.

Table 43.18.1 illustrates classes of devices that are defined to include devices that respond to same queries in the same way when they are in the same state. Table 43.18.1 is provided in Appendix A.

As shown, devices of classes A, B, C, D, F, and G respond to the same SNMP queries in the same way when the toner is low (Low: Toner). Also as shown, devices of class E respond to the same SNMP queries in the same way when black toner is low, cyan toner is low, magenta toner is low, and yellow toner is low. Information about how individual devices or how classes of devices respond to sample queries may be stored in a table as shown, or in some other mechanism. In one embodiment, a device interaction tree is constructed based on information stored in a table such as Table 2.

In one embodiment, a device in any of classes A, B, C, D, F, and G may be determined to have a state of "Low: Toner" when the device responds to an hrDeviceStatus query with warning(3), and an hrPrinterDetectedErrorState query with 20h. In another embodiment, an additional prtAlertCode query, with a response of markerTonerAlmostEmpty(1104), is used to determine the state of the device. For other devices with other device states, a different number of queries may be performed to determine the device state.

In the example of FIG. 1A, device monitor system 100 interacts with five devices belonging to three classes A, B, and C. A state determination tree for each class includes queries and tests that are used to classify devices in the class. State determination trees 102 may be divided into separate trees or combined together as a single tree. In one embodiment, the class determination tree and state determination trees for classes A, B, and C together form a state determination tree for any device in network 108.

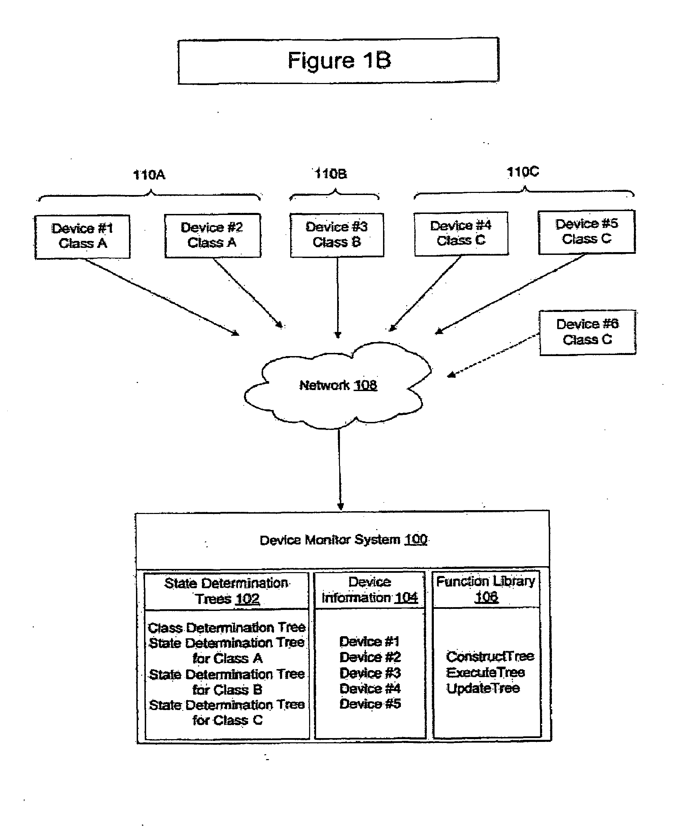

In the example of FIG. 1B, a new device of a known class C is added to the network. The state determination tree for the known class C already has the capability to classify this device. Accordingly, state determination trees 102 are not updated in this example. The function "ExecuteTree" can be used to obtain information about the new device with an existing state determination tree for the known class C.

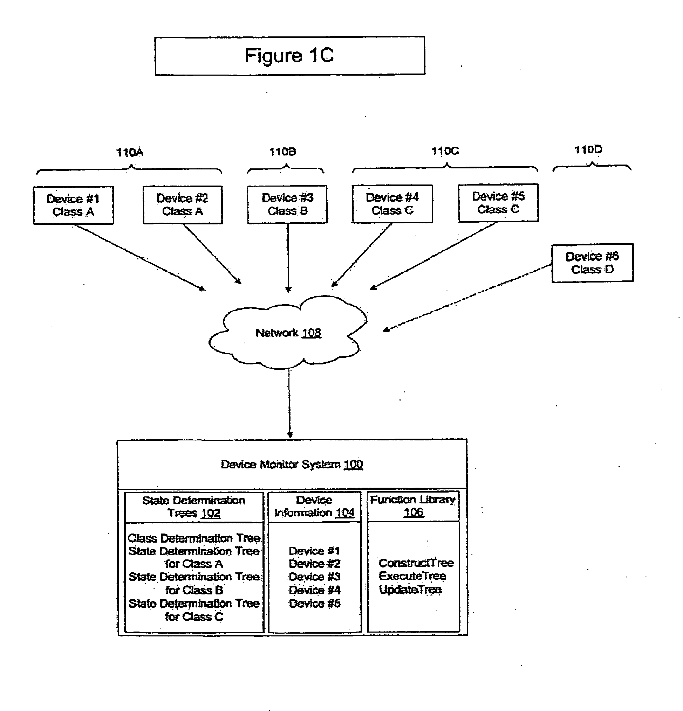

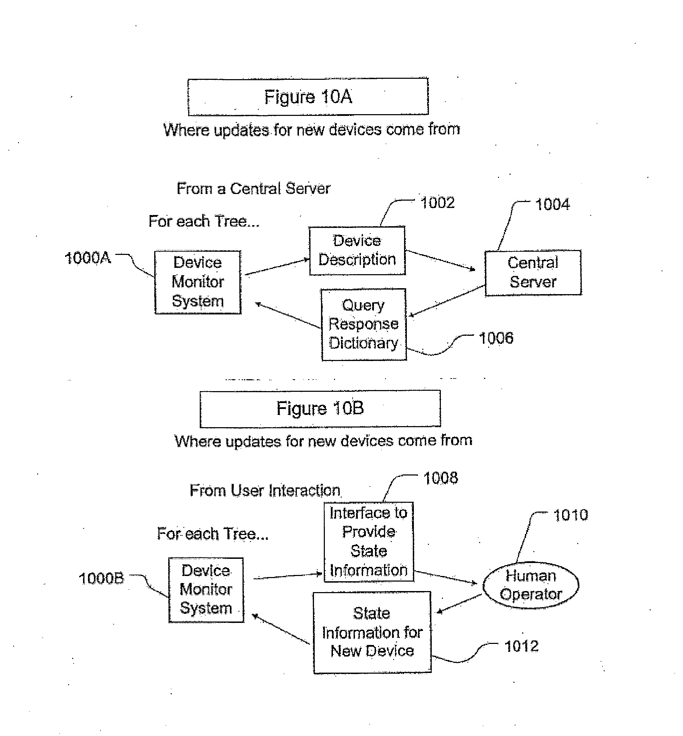

In the example of FIG. 1C, a new device of an unknown class D is added to the network. Device monitor system 100 detects that the new device is not supported by existing state determination trees 102. In response, device monitor system 100 updates state determination trees 102 using the function "UpdateTree." For example, device monitor system 100 may download a tree or other information for the unknown class from a server, as shown in Fig. 10A. If the device monitor system receives other information for the unknown class D, then the other information may be used to construct a tree for class D using the ConstructTree function in function library 106.

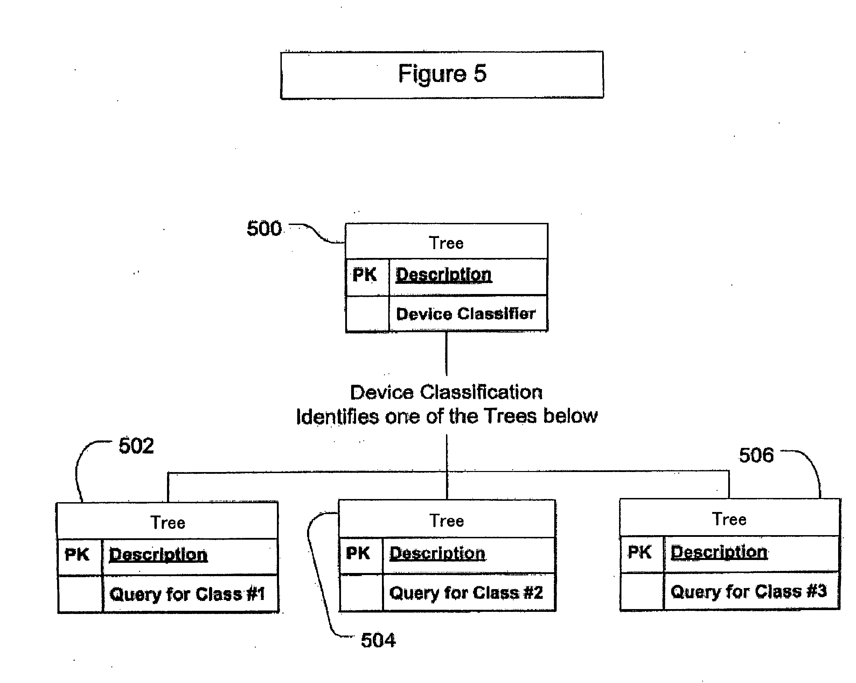

FIG. 5 shows multiple example trees usable by a device management application to determine the state of a device. The first tree 500 classifies a device into one of multiple device classes. Leaf nodes of the first tree 500 specify an identifier of a device class. The identifier is used to select one of the second trees 502-506. Each of the second trees 502-506 specifies a set of queries and tests to send to devices that belong to a group of one or more device classes. Each of the second trees 502-506 includes leaf nodes that specify device states for devices in a group of classes covered by the second tree. In an embodiment not shown in FIG. 5, the first tree and second trees are combined into a single tree.

In one embodiment, a tree that determines the identity of a vendor of the device is part of a larger tree that determines other state information for the device. For example, the identity of the vendor may be part of a determination of a class to which the device belongs.

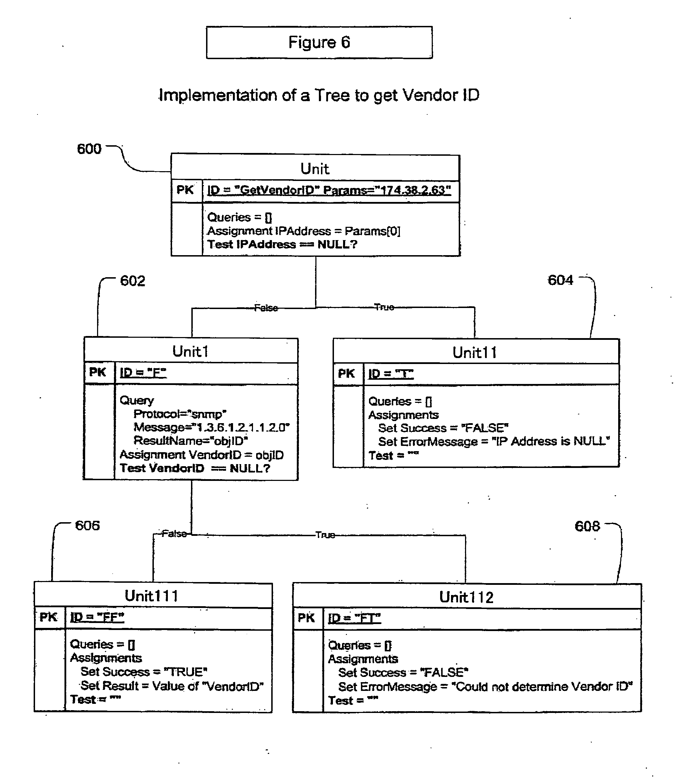

FIG. 6 illustrates an implementation of a tree to determine a vendor of a device. A device management application receives a request for a vendorID of a device. Node 600 tests whether or not the address of the device is NULL. If so, then the vendorID is not determined, and traversal of the tree ends at node 604. If not, then node 602 tests whether a vendorID parameter is NULL. If so, then the vendorID parameter is not determined, and traversal of the tree ends at node 608. If not, then node 606 determines the value of the vendorID parameter. In various embodiments, multiple parameters may need to be checked in order to determine the identity of the vendor. For example, some printers do not store the identity of the vendor as "vendorID", and other parameters may need to be retrieved from these devices.

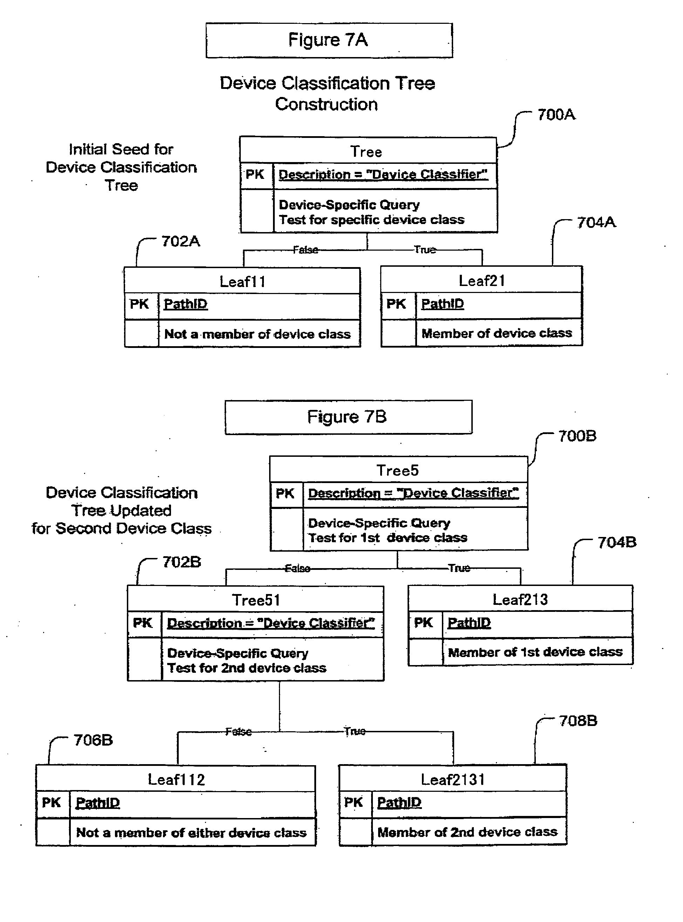

FIG. 7A shows a single-step device classification tree. Node 700A tests for a specific device class. For example, node 700A may include one or more queries and one or more tests. If the device is in the class, then traversal of the tree continues to node 704A. If not, traversal continues to 702A. FIG. 7B shows a device classification tree that is updated to account for a second device class. As shown, node 702B includes a test for the second device class. Traversal continues to node 706B when the device is not a member of either class, and traversal continues to node 708B when the device is a member of the second device class.

### CREATING, MODIFYING, AND REPLACING THE DEVICE INTERACTION TREE

In one embodiment, the device interaction tree for a class of devices is created by a manufacturer that produces the class of devices. The device interaction tree may be distributed to clients. For example, different versions of the state tree may be made available on a Web server. The client may replace a previous version of the tree with a new version, or the client may store both versions for use with different types of devices.

In another embodiment, a device management application generates a state determination tree based on stored associations between device states, queries, and responses. For each selected state of each selected device to be monitored, the device management application determines one or more sets of unique parameters that identify the device state. Sets of parameters for device states of multiple devices may be combined, and the most frequently used sets may form the basis for the upper levels of the state determination tree. In this manner, information that is most commonly queried to determine state may be queried at earlier stages in the process of traversing the state determination tree. Information that is queried only for one or a few particular devices may be queried at later stages in the process of traversing the state determination tree. In a particular embodiment, a device management application automatically constructs a minimal or otherwise optimized state determination tree using a collection of Query Response Dictionaries that include associated query and response information for a set of printers on a particular network.

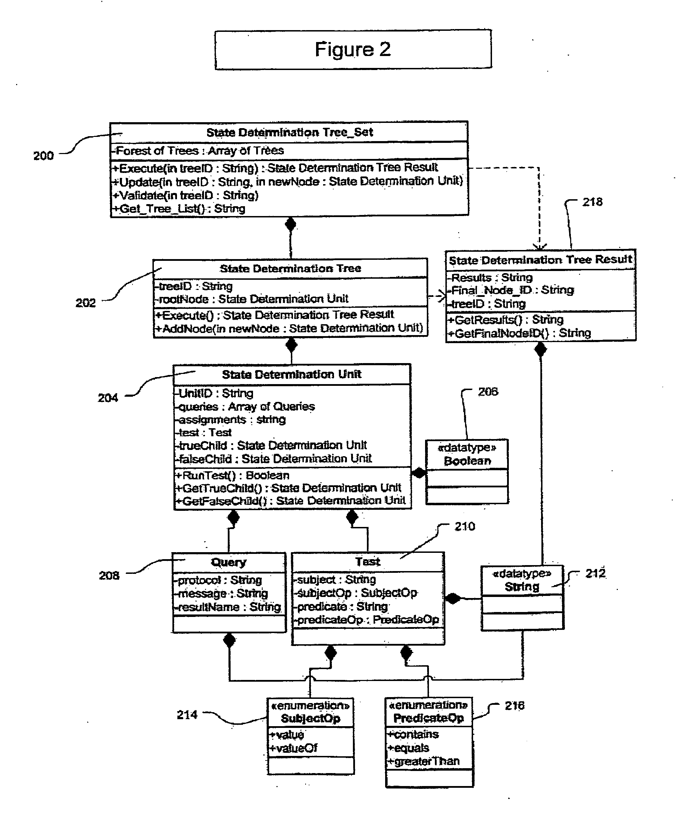

FIG. 2 is an example class diagram for a set of state determination trees. As shown, a state determination tree set 200 includes an array of state determination trees 202. Each state determination tree 202 has one or more state determination units 204 including one or more queries 208, assignments, and tests 210. In the example, each test results in a Boolean type 206 result for navigating to either a true child unit or a false child unit. As shown, the test includes a subject and a subject operator 214 for determining whether to test the value of the subject itself or the value of a variable with a name that matches the subject. Also as shown, the test includes a predicate and a predicate operator 216 that specify how to test the subject. In the example, test 210 could determine whether the subject contains the predicate, equals the predicate, or is greater than the predicate. The example queries 208 are responded to with strings, and the example tests 210 operate on strings. According to other implementations, the query responses may specify values in any format, and the tests may operate on values of any format. The state determination tree result 218 identifies a node that specifies a textual description of the status of the device.

FIG. 3 is a diagram of a data structure for determining device status. As shown, a set of trees 300 includes one or more individual trees 302. Each tree 302 includes nodes 304 or tree units, and each node has one or more queries 312, assignments 314, and tests 316. In one.embodiment, a collection of tree units that include at least one query and at least one test is grouped together as a single node. In another embodiment, every non-leaf node includes at least one query and at least one test.

A query is sent using one or more specified protocols to a device being monitored. An assignment includes one or more value modifiers 318 for performing operations such as StripPrefix, StripPrefixStartsWith, StripSuffix, StripSuffixStartsWith, Prepend, and/or Append to values such as those specified in a response of the query. The response processed by the one or more assignments 314 is subjected to a test 316. In the illustrated example, test 316 specifies a subject operation 320 such as whether the subject itself is the value being tested, or whether the subject is a name of a parameter that specifies a value being tested. For example, an assignment may be applied to a value of a key-value pair when the response specifies a value. Assignments may also cause key-value pairs to be stored by the device management application for later retrieval by other nodes. In another example, an assignment may be applied to a stored value based on a key such as "CyanPageCount" that was previously specified during traversal of the state determination tree. In this case, the device management application traversing the state determination tree looks up a stored value for a parameter named "CyanPageCount." In one embodiment, assignments are passed between nodes of the state determination tree. In another embodiment, assignments are globally defined.

Test 316 also includes one or more predicate values and one or more predicate operations 322 to apply to the subject. In one embodiment, a predicate operation is a comparison operation for comparing the subject to a predicate. For example, the test may determine whether the value of the processed response to the query equals "idle," or whether the value is greater than 02h. Other example predicate operations include IsNull, Contains, and startsWith. The responses may also be processed using other predicate operations not illustrated in the examples.

Based on the result of test 316, a device management application traverses tree 302 using a pointer to a child true node or a child false node of node 304. In one embodiment, the child node is a leaf node that specifies a state of the device. In another embodiment, the child node specifies one or more other queries and one or more other tests that are made prior to a determination of the device state. Traversal of the state determination tree 302 results in returns 310 that specify the state of the device.

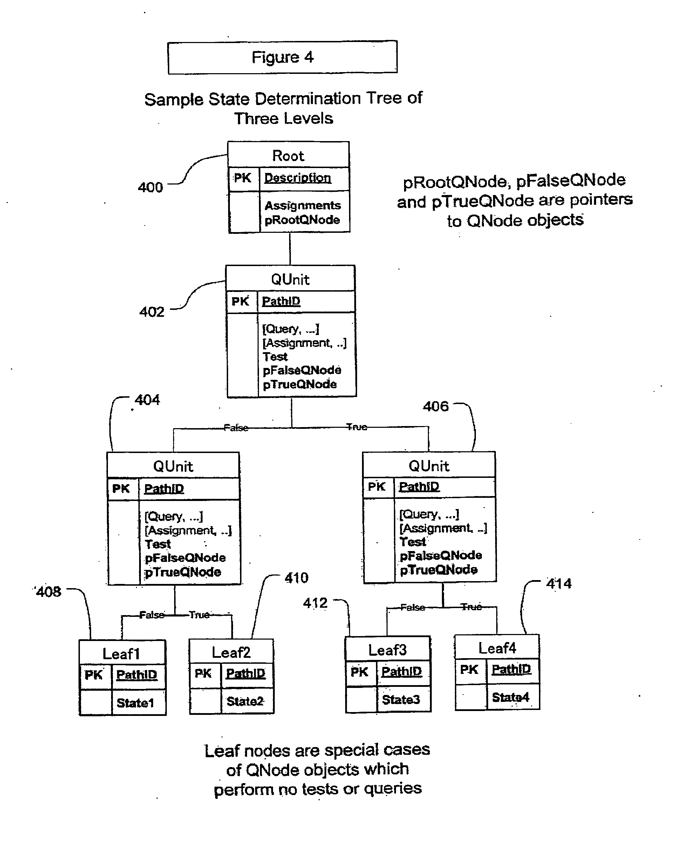

FIG. 4 shows the structure of an example state determination tree of three levels. In the example, the root 400 and unit 402 define a first level of the tree. Unit 402 includes zero or more queries, zero or more assignments, and one or more tests. In the example, the test is a true/false test. If the test result is false, tree traversal continues from unit 402 to unit 404. If the test result is true, tree traversal continues from unit 402 to unit 406. Units 404 and 406 each specify zero or more queries, zero or more assignments, and one or more tests. Traversal of the state determination tree results in navigation to one of leaf nodes 408-414. The resulting leaf node specifies the state of the device.

Appendix B shows an example of a more complex state determination tree specified by DIT.XML. Nodes (<QNode>) in the state determination tree specify queries (<Queries>), assignments (<Assignments>), and tests (<Test>). Upon traversal to a query node, a device management application executes one or more queries associated with the query node. Upon traversal to an assignment node, the device management application applies any assignments associated with the assignment node. Upon traversal to a test node, the device management application applies any tests associated with the test node. The state determination tree is traversed from a root node, through intermediate nodes that specify queries and tests, to leaf nodes that specify device states.

In one embodiment, a device management application receives information about states associated with queries and responses from a central server. For example, the information may be stored in a table that is communicated from the server to the device management application.

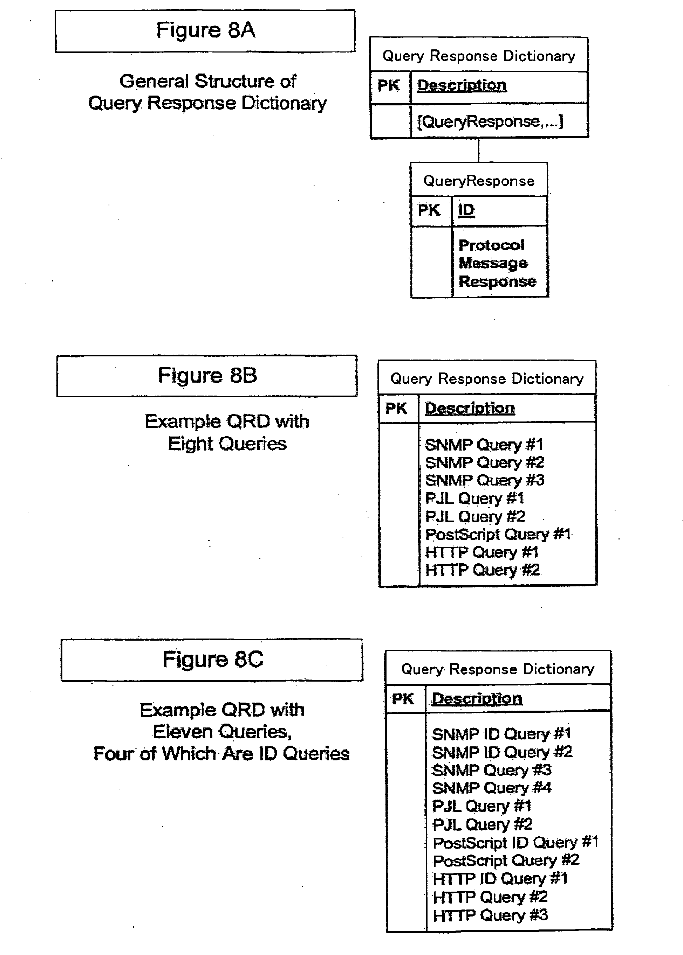

FIG. 8A shows the general structure of a query response dictionary for use in construction and updating of state determination trees. The query response dictionary stores information about states of a device associated with queries to the device and responses from the device. The responses are actual responses the device would make if the device is in the specified state and is queried with the specified query. The query response dictionary may be used to emulate the device during tree construction or modification such that the device need not be accessible during construction or modification. In one embodiment, the query response dictionary does not require information about the particular model of the device. As long as the states are associated with queries and responses, the associated information may be used to construct the state determination tree.

FIG. 8B shows an example query response dictionary with three queries for the Simple Network Management Protocol ("SNMP"), two for Printer Job Language ("PJL"), one for PostScript and two for Hypertext Transfer Protocol ("HTTP"). In one example, HTTP queries are issued against a web server hosted by the device to induce responses.

FIG. 8C shows an example query response dictionary with eleven queries, four of which are "ID queries," or queries that can be used for classification of a device into a device class. Classification of a device may allow selection of a device interaction tree specialized for the selected class of devices.

In another embodiment, the device management application receives information from a user about a state that was observed on a device. For example, the user may submit, via a user interface, identifying information about the device along with the state observed for the device. In response, the device management application queries the device with one or more queries and receives one or more responses. The device management application stores the query-response pairs in association with the state information.

The techniques described herein for automatically creating a state determination tree are not limited to particular techniques for combining known information about associated states, queries, and responses to determine the nodes of the tree. In a simple example for a three device system with two possible states, a first device is in state A when parameter X is 1 and parameter Y is 10; a second device is in state A when parameter X is 1 and parameter Y is 20; and a third device is in state A when parameter X is 2 and parameter Y is 10. Assume all devices are in state B when parameter X is 2 and parameter Y is 20. One example state determination tree could first query the device for X and test whether or not X is 1 and then query the device for Y and test determine whether or not Y is 10. The result of these two queries and tests could be used to determine whether the device is in state A or B regardless of which device is being tested.

Further, sets of queries and parameters may be generalized such that differences in capitalization, prefixes, suffixes, value formats, and alternate representations of similar information may be represented in same nodes of the tree. For example, a single node may determine whether a processed value of a parameter is "idle", whether or not the actual received parameter was "idle," "Idle," or some other string that maps to "idle".

According to the techniques described herein, the state determination tree does not need to be perfectly optimized or optimized at all in order to be useful. For example, one tree may, on average, require more queries and/or more tests to determine the same states of the same devices as another tree, even though both trees incorporate the techniques described herein. In one embodiment, the device management application detects another version of a tree on a server that manages the same states of the same devices using a smaller tree or with fewer average queries and/or tests. In response, the device management application may download the other version of the tree and replace the previous version of the tree. The other version may be provisionally designated as the active tree until it is determined that the other tree is also accurate for determining states of devices.

In another embodiment, the user of the device management application may find another version of the tree. The user may download the other version of the tree and replace the previous version of the tree without having privileges to compile and install software or update the registry on the machine running the device management application.

In one embodiment, the device management application updates the state determination tree in response to detecting that the state determination tree cannot provide a state of a device in the network. For example, the device management application may detect that an unsupported device has been added to the network or that a requested type of state information is not supported for a device already represented in the state determination tree. The updated state determination tree accounts for the previously unsupported device without modifying code of the device management application.

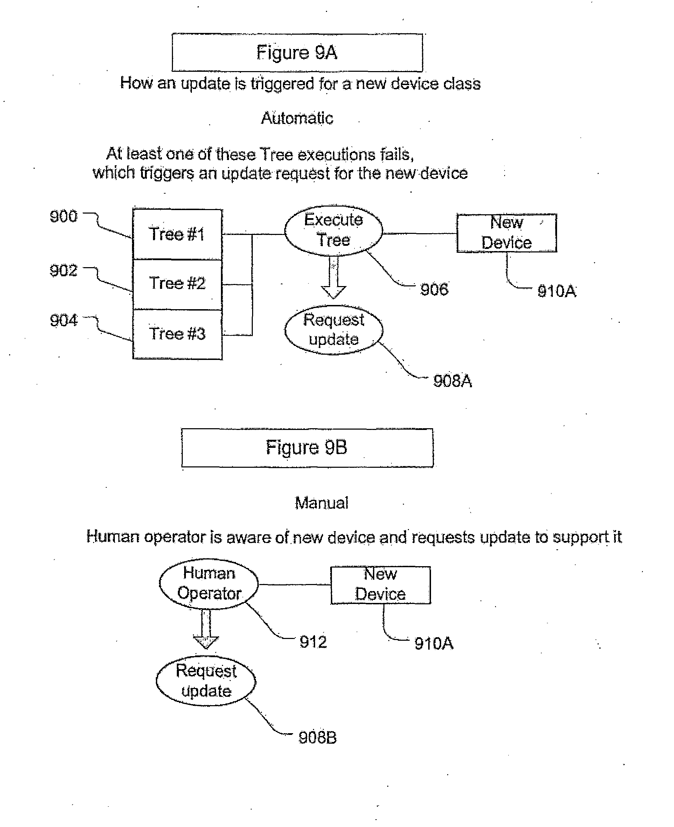

FIGS. 9A and 9B show alternate example techniques, one automatic and one manual, for triggering an update to a state determination tree. As shown in the example automatic update technique of FIG. 9A, execution 906 of at least one of trees 900-904 fails to provide the status of a new device 91 0A of an unknown class. In response to detecting the failure, a device management application requests an update 908A to the state determination trees. In FIG. 9B, a human operator 912 detects the presence of the new device 910A of the unknown class. Based on detecting the presence of the new device 910A, the human operator requests an update to the state determination trees.

FIGS. 10A and 10B show alternate example techniques for obtaining updates to the state determination trees. In FIG. 10A, a device monitor system 1 000A sends a device description 1002 to a central server 1004 to obtain an update that accounts for a new device. As shown, central server 1004 responds to the request by providing information about states associated with queries and responses such as query response dictionary 1006. In an embodiment not shown, central server provides a state determination tree directly to the device monitor system 1000A. The newly provided information from the central server allows device monitor system 1000A to distinguish the new device from devices in previously supported classes.

In the example of FIG. 10B, a human operator 1010 is shown an interface to provide state information 1008. Human operator 1010 interacts with the interface to provide state information 1012 to device monitor system 1000B. Device monitor system submits queries to the device and stores the states in association with the queries sent and responses received from the device. In another embodiment, the user also inputs associated query and response information that is known to the user.

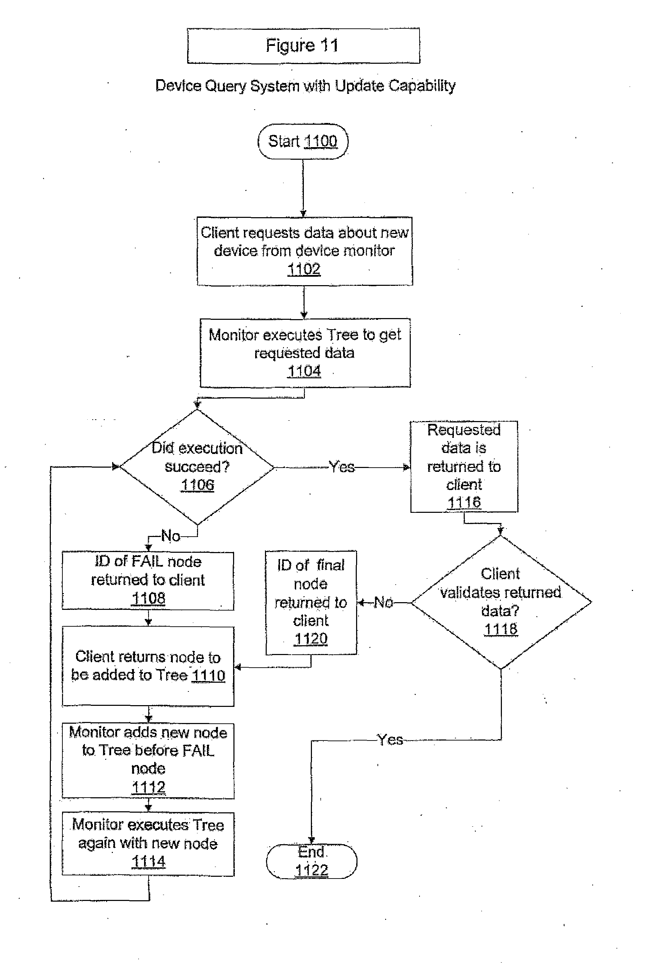

FIG. 11 is a flow chart showing example steps involved in processing a state determination tree. In the event of failure due to an unsupported device, an identity of the node prior to failure can be used to update the state determination tree with new state determination data that accounts for the previously unsupported device. As shown in FIG. 11, a client requests data about a new device from a device monitor in step 1102. In step 1104, the device monitor invokes a tree traversal function to process a state determination tree and obtain the requested data. In decision step 1106, a determination is made as to whether execution succeeded. If execution did not succeed, the identity of the fail node is returned to the client in step 1108. In response, the client returns, in step 1110, a node to be added to the tree. The device monitor adds the new state determination node to the tree before the fail node in step 1112 and executes the tree again in step 1114 with the new node in place.

If execution was successful, as determined in step 1106, then the requested data is returned to the client in step 1116. The client validates the returned data in step 1118. If the data is inaccurate, then the identity of the fail node is returned to the client and processing proceeds to step 1110. Otherwise, the data is successfully retrieved from the tree and validated by the client, and the process ends in step 1122.

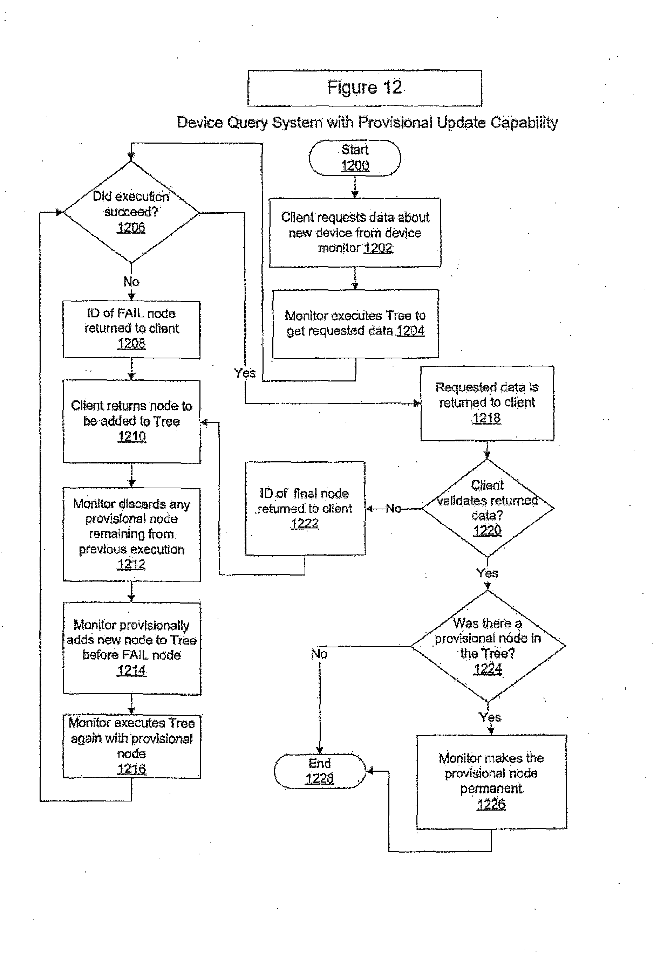

FIG. 12 shows an example device query process with a provisional update capability. In step 1202, a client requests data about a new device from a device monitor 1202. The device monitor executes a Tree to get the requested data in step 1204. A determination is made in step 1206 as to whether execution was successful. If execution was not successful, then, as reflected in steps 1208-1210, the identity of the fail node is returned to the client, and the client returns a node to be added to the tree. The device monitor discards any provisional node remaining from a previous execution in step 1212 and provisionally adds the new node to the tree before the fail node in step 1214. In step 1216 the tree is executed again with the provisional node now in place.

If execution is successful in step 1206, then requested data is returned to the client in step 1218. The client validates the returned data in step 1220. If the data is validated and there was a provisional node in the tree, as determined in step 1224, then, in step 1226, the device monitor makes the provisional node permanent.

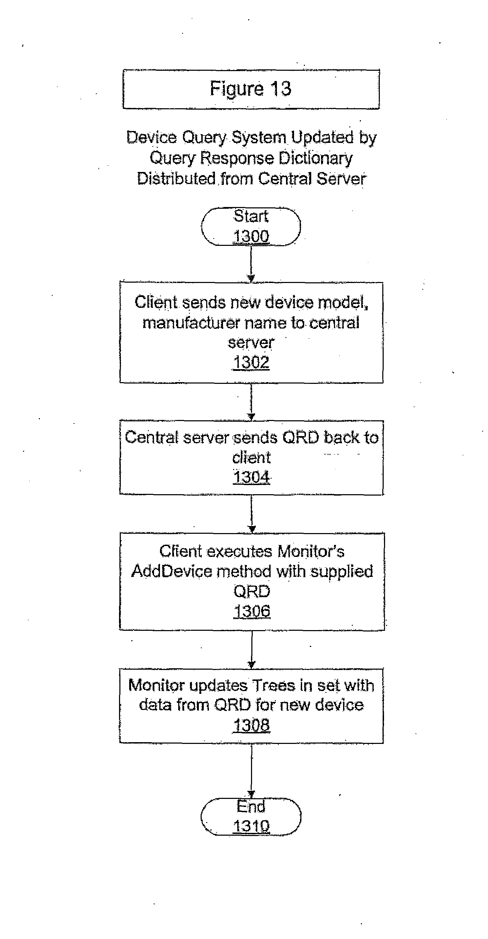

FIG. 13 shows an example alternate update process based on a query response dictionary distributed from a server. In step 1302, the client sends identifying information, such as a model of the new device and manufacturer name, to a central server. In step 1304, the central server sends a query response dictionary ("QRD") back to the client. The client executes the device monitor's AddDevice method in step 1306 to use the supplied QRD to add a device to the tree. In step 1308, the device monitor updates the state determination trees with data from the QRD for the new device.

### USING THE DEVICE INTERACTION TREE

In one embodiment, a request for a state of a device is received on an interface to one or more computing devices. The request may identify one or more attributes of the device. In one embodiment, the request identifies the device by address. In another embodiment, the request identifies the device by a name and workgroup to which the device belongs. Device interaction logic on the one or more computing devices is configured to use the device interaction tree to determine a query and a test associated with a starting node of the tree. The query is sent to the device, and a response is received from the device. In one embodiment, prior to a testing stage, the response is processed by the device interaction logic according to one or more assignments associated with the starting node. In another embodiment, the response is tested as received without processing. The response is tested using the test associated with the starting node of the tree. The test specifies one or more values and one or more operations for evaluating the response. In one embodiment, one or more assignments may be performed to store or prepare values for later nodes as a result of the test. Based on a result of the test, the device monitoring logic tree is traversed towards a leaf node. In one example, the leaf node represents a state of the device. In various embodiments, the starting node may be represented by a collection of nodes with a query and a series of tests to determine which of multiple branches to traverse in the tree.

If the next node in the tree is a leaf node, then the state specified by the leaf node is the state of the device. In one embodiment, the next node is a second node in the traversal. If the second node is not a leaf node, then a second query and a second test are determined from the second node in the tree. The device is queried with the next query to induce a second response. The second response may be processed according to any assignments associated with the second node in the tree. The response is evaluated against the second test to determine a next or third node in the traversal of the tree. In one embodiment, the third node is processed in the same manner as the starting node and the second node. Other nodes may fall on the path of traversal, resulting in traversal to a leaf node that specifies the state of the device.

The state determination logic provides the state of the device in response to the request. For example, the state determination logic displays, on a user interface to a user requesting the state of the device, a textual and/or pictorial description or representation of the state of the device. For example, the state determination logic may display "idle" along with an icon associated with the idle state.

In one embodiment, device interaction logic for traversing the tree is generic with respect to the contents of the tree. In other words, the device interaction logic does not need to be specially configured for particular devices on a particular network. For example, state determination logic does not need to be specially configured to determine the states of devices on a particular network. In one embodiment, the device interaction logic includes stored instructions performed by one or more computing devices to traverse the tree. In another embodiment, the device interaction logic may be configured using one or more specialized hardware components that cause one or more computing devices to traverse the tree.

Appendix B shows an example state determination tree specified by DIT.XML. Nodes (<QNode>) in the tree specify queries (<Queries>), assignments (<Assignments>), and tests (<Test>). Upon traversal to a node, a device management application executes one or more queries associated with the node, applies any assignments associated with the node, and tests responses to the queries with a test associated with the node.

In one example according to DIT.XML, a device management application receives a request for a device state from a user and traverses a state determination tree to a particular QNode that specifies a query by "<Query protocol="snmp" message="prtAlertCode" responseKey="AlertCode" />" and tests the result with the following test "<Test subject="AlertCode" subjectOp="valueOf" predicate="subunitMissing" predicateOp="equals" />". In other words, the device management application sends an SNMP query to the device with the message "prtAlertCode." The device management application saves a response from the device as "AlertCode." The device management application then uses the test to evaluate whether the value of AlertCode equals "subunitMissing."

If a result of the test is true, the device management application continues traversal of the device interaction tree to another QNode branch. At this point in the traversal, the device management application has determined that the PrinterStatus is "idle," the DeviceStatus is "warning," and the AlertCode is "subunitMissing." The device management application queries the device again with an SNMP query with a message of "prtAlertGroup." The response is saved as "AlertGroup." The result is tested according to the following test: "<Test subject="AlertGroup" subjectOp="valueOf' predicate="input" predicateOp="equals" />." In other words, the device management application determines whether the value of the result equals "input." If so, then the device management application determines the state of the device based on the assignments: "<Set key="StatusName" value="error" />" and "<Set key="ErrorName" value="noinputtray" />." Accordingly, the device management application may respond to the request for the device status with "Error: No Input Tray."

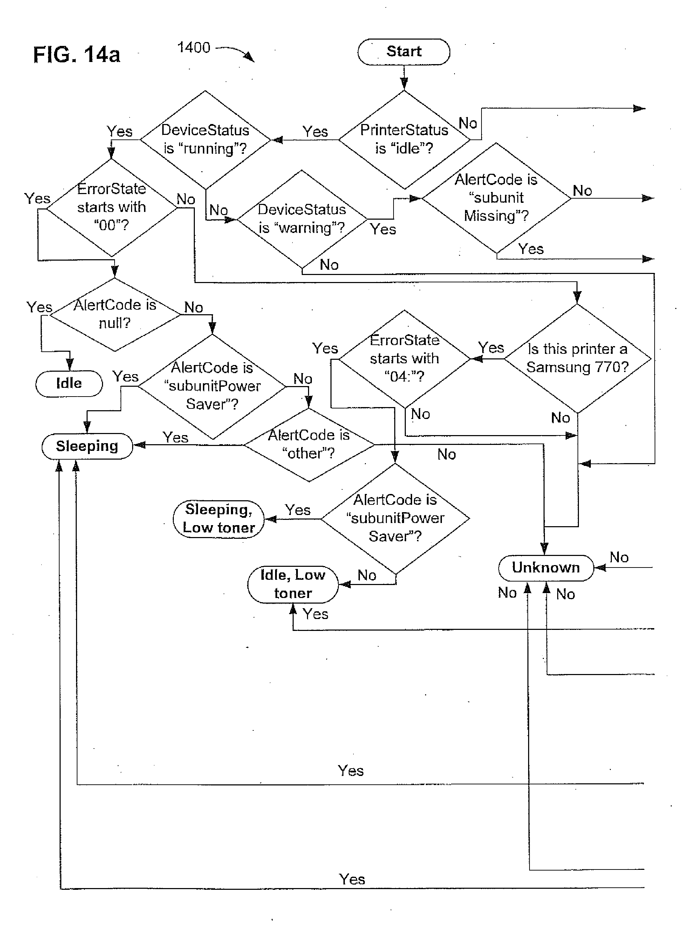

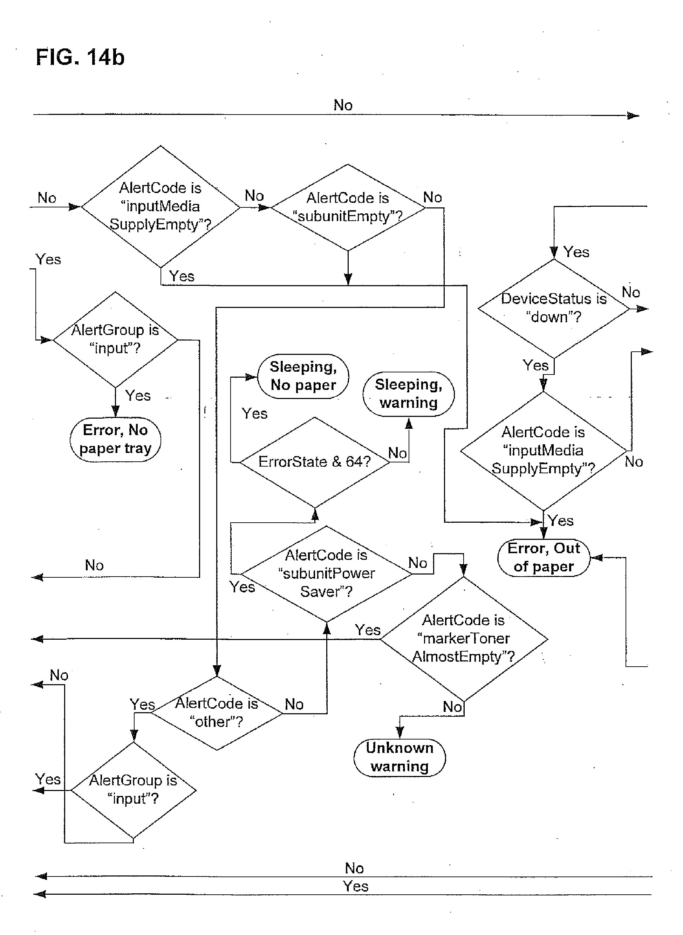

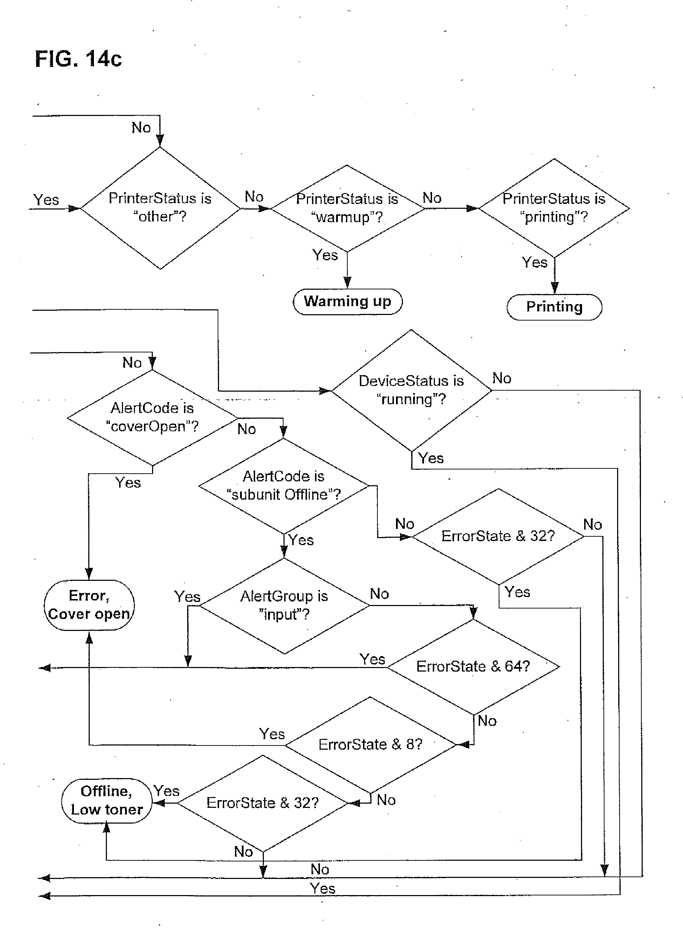

FIG. 14 is a flow chart illustrating an example process of traversing an example state determination tree. The process is executed by a device management application using one or more stored state determination trees to obtain a state of a device on a network. The device management application may be generally configured to follow the rules specified by the queries, assignments, and tests in the state determination tree. Assignment statements not shown are included in a device interaction tree to assign values to parameters based on responses received from devices. The assigned values are used in the comparison steps as shown. The device management application does not need to be specially configured for a given network or for a given device interaction tree. The device interaction trees driving the process may be generated, updated, and replaced by users that do not have security privileges to install software or modify the registry of a device. In one embodiment, because device interaction trees such as state determination trees do not include self-executing software, the device interaction trees do not compromise the security of the system in which they are saved.

### DEVICE CONFIGURATION TREE

In one embodiment, the device interaction tree is a device configuration tree. Device interaction logic such as a device management application is configured to traverse the device configuration tree to configure a device. In one embodiment, a user submits a request to configure a parameter on a device. The device interaction logic receives the request and selects a device configuration tree for configuring the parameter on any device in a set of devices. The device interaction logic traverses the device configuration tree from a root node to intermediate nodes that specify queries and tests. The device interaction logic applies the tests to results of the queries to reach a leaf node that specifies a configuration command to submit to the device. The device configuration tree may specify one or more additional commands for determining whether the configuration command was successfully submitted to the device.

For example, a user may request to change a name of a device. The request may identify the device by IP address, and the request may also specify a new name for the device. Based on the request, the device interaction logic selects a device configuration tree for changing names of devices. The device interaction logic traverses the device configuration tree, submitting one or more queries, and applying one or more tests to one or more responses of the queries. Upon traversal of the device configuration tree, the device interaction logic reaches a leaf node that specifies a command for changing the name of the device. The device interaction logic sends the command to the device. Optionally, the device configuration tree specifies one or more other queries and one or more other tests to determine if the name of the device was successfully changed by the command. In response to sending the command or confirming that the command successfully changed a parameter on the device, the device interaction logic displays to the user an indication that the name of the device was changed.

Various other configuration changes may be made to devices using device configuration trees. For example, device configuration trees may specify commands for changing timeout values for devices, or changing a setting that dictates whether or not a test page is printed upon startup of the device. Techniques for creating and using a device configuration tree are not limited to any particular type of configuration change, and various configuration trees may be used to determine which configuration command or commands to send to a device. In one embodiment, the device configuration trees do not include self-executable code. Also, the device interaction logic may be generically configured to traverse the device configuration trees without being specially configured to change the parameters of any given device. In one embodiment, the configuration tree specifies queries, tests, and configuration commands for configuring different types of devices, devices with different capabilities, and/or devices from different manufacturers that require different configuration commands to accomplish the same configuration changes.

### DEVICE ACTION TREE

In one embodiment, the device interaction tree is a device action tree. Device interaction logic such as a device management application is configured to traverse the device action tree to cause the device to perform an action. In one embodiment, a user submits a request to cause a device to perform an action. The device interaction logic receives the request and selects a device action tree for causing the action on any device in a set of devices. The device interaction logic traverses the device action tree from a root node to intermediate nodes that specify queries and tests. The device interaction logic applies the tests to results of the queries to reach a leaf node that specifies an action command to submit to the device. The device configuration tree may specify one or more additional commands for determining whether the action command was successfully performed by the device.

For example, a user may request to print a document according to a specified format. The request may identify the device by IP address, and the request may also specify a document and a desired format. Based on the request, the device interaction logic selects a device action tree for printing documents on devices. The device interaction logic traverses the device action tree, submitting one or more queries, and applying one or more tests to one or more responses of the queries. Upon traversal of the device action tree, the device interaction logic reaches a leaf node that specifies a command for printing the document according to the specified format. The device interaction logic sends the command to the device. Optionally, the device configuration tree specifies one or more other queries and one or more other tests to determine if the device successfully printed the document in the specified format. In response to sending the action command or confirming that the action command was successfully performed, the device interaction logic displays to the user an indication that the device printed the document in the specified format.

Various other action commands may be sent to devices using device action trees. For example, device action trees may specify commands for causing devices to send a fax, an email, or a text message, or for causing a device to make a copy, print a test page, or perform a cleaning operation. Techniques for creating and using a device action tree are not limited to any particular type of action, and various action trees may be used to determine which action command or commands to send to a device. In one embodiment, the device action trees do not include self-executable code. Also, the device interaction logic may be generically configured to traverse the device action trees without being specially configured to cause an action on any given device. In one embodiment, the action tree specifies queries, tests, and action commands for causing actions to be performed by different types of devices, devices with different capabilities, and/or devices from different manufacturers that require different action commands to perform the same actions.

### IMPLEMENATION MECHANISMS

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

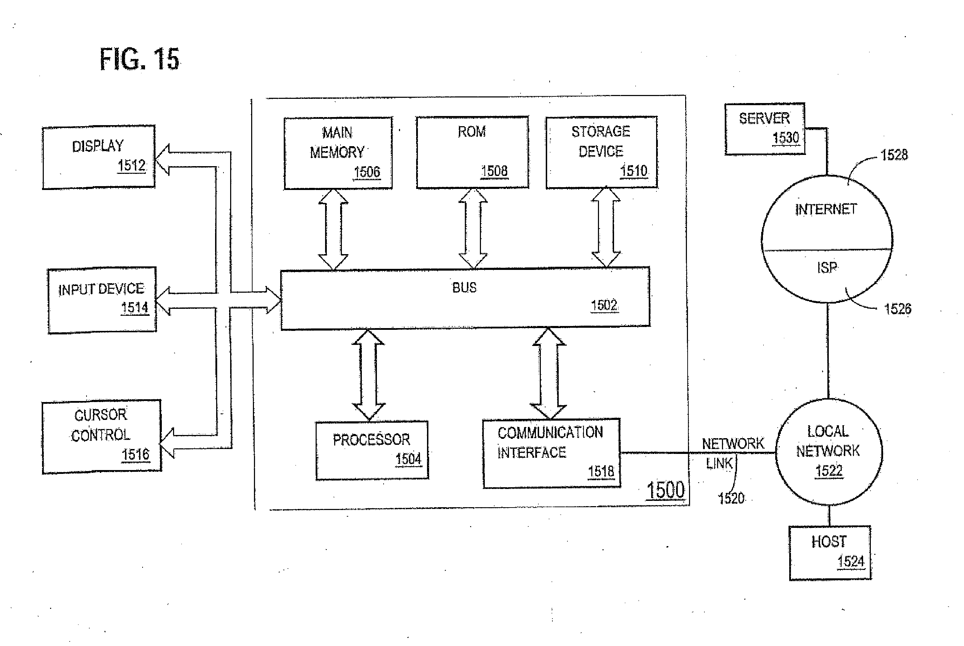

For example, FIG. 15 is a block diagram that illustrates a computer system 1500 upon which an embodiment of the invention may be implemented. Computer system 1500 includes a bus 1502 or other communication mechanism for communicating information, and a hardware processor 1504 coupled with bus 1502 for processing information. Hardware processor 1504 may be, for example, a general purpose microprocessor.

Computer system 1500 also includes a main memory 1506, such as a random access memory (RAM) or other dynamic storage device, coupled to bus 1502 for storing information and instructions to be executed by processor 1504. Main memory 1506 also may be used for storing temporary variables or other intermediate information during execution of instructions to be executed by processor 1504. Such instructions, when stored in non-transitory storage media accessible to processor 1504, render computer system 1500 into a special-purpose machine that is customized to perform the operations specified in the instructions.

Computer system 1500 further includes a read only memory (ROM) 1508 or other static storage device coupled to bus 1502 for storing static information and instructions for processor 1504. A storage device 1510, such as a magnetic disk or optical disk, is provided and coupled to bus 1502 for storing information and instructions.

Computer system 1500 may be coupled via bus 1502 to a display 1512, such as a cathode ray tube (CRT), for displaying information to a computer user. An input device 1514, including alphanumeric and other keys, is coupled to bus 1502 for communicating information and command selections to processor 1504. Another type of user input device is cursor control 1516, such as a mouse, a trackball, or cursor direction keys for communicating direction information and command selections to processor 1504 and for controlling cursor movement on display 1512. This input device typically has two degrees of freedom in two axes, a first axis (e.g., x) and a second axis (e.g., y), that allows the device to specify positions in a plane.

Computer system 1500 may implement the techniques described herein using customized hard-wired logic, one or more ASICs or FPGAs, firmware and/or program logic which in combination with the computer system causes or programs computer system 1500 to be a special-purpose machine. According to one embodiment, the techniques herein are performed by computer system 1500 in response to processor 1504 executing one or more sequences of one or more instructions contained in main memory 1506. Such instructions may be read into main memory 1506 from another storage medium, such as storage device 1510. Execution of the sequences of instructions contained in main memory 1506 causes processor 1504 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 1510. Volatile media includes dynamic memory, such as main memory 1506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 1502. Transmission media can also take the form of acoustic or light waves, such as those generated during radio-wave and infra-red data communications.

Various forms of media may be involved in carrying one or more sequences of one or more instructions to processor 1504 for execution. For example, the instructions may initially be carried on a magnetic disk or solid state drive of a remote computer. The remote computer can load the instructions into its dynamic memory and send the instructions over a telephone line using a modem. A modem local to computer system 1500 can receive the data on the telephone line and use an infra-red transmitter to convert the data to an infra-red signal. An infra-red detector can receive the data carried in the infra-red signal and appropriate circuitry can place the data on bus 1502. Bus 1502 carries the data to main memory 1506, from which processor 1504 retrieves and executes the instructions. The instructions received by main memory 1506 may optionally be stored on storage device 1510 either before or after execution by processor 1504.

Computer system 1500 also includes a communication interface 1518 coupled to bus 1502. Communication interface 1518 provides a two-way data communication coupling to a network link 1520 that is connected to a local network 1522. For example, communication interface 1518 may be an integrated services digital network (ISDN) card, cable modem, satellite modem, or a modem to provide a data communication connection to a corresponding type of telephone line. As another example, communication interface 1518 may be a local area network (LAN) card to provide a data communication connection to a compatible LAN. Wireless links may also be implemented. In any such implementation, communication interface 1518 8 sends and receives electrical, electromagnetic or optical signals that carry digital data streams representing various types of information.

Network link 1520 typically provides data communication through one or more networks to other data devices. For example, network link 1520 may provide a connection through local network 1522 to a host computer 1524 or to data equipment operated by an Internet Service Provider (ISP) 1526. ISP 1526 in turn provides data communication services through the world wide packet data communication network now commonly referred to as the "Internet" 1528. Local network 1522 and Internet 1528 both use electrical, electromagnetic or optical signals that carry digital data streams. The signals through the various networks and the signals on network link 1520 and through communication interface 1518, which carry the digital data to and from computer system 1500, are example forms of transmission media.

Computer system 1500 can send messages and receive data, including program code, through the network(s), network link 1520 and communication interface 1518. In the Internet example, a server 1530 might transmit a requested code for an application program through Internet 1528, ISP 1526, local network 1522 and communication interface 1518.

The received code may be executed by processor 1504 as it is received, and/or stored in storage device 1510, or other non-volatile storage for later execution.

In the foregoing specification, embodiments of the invention have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction.

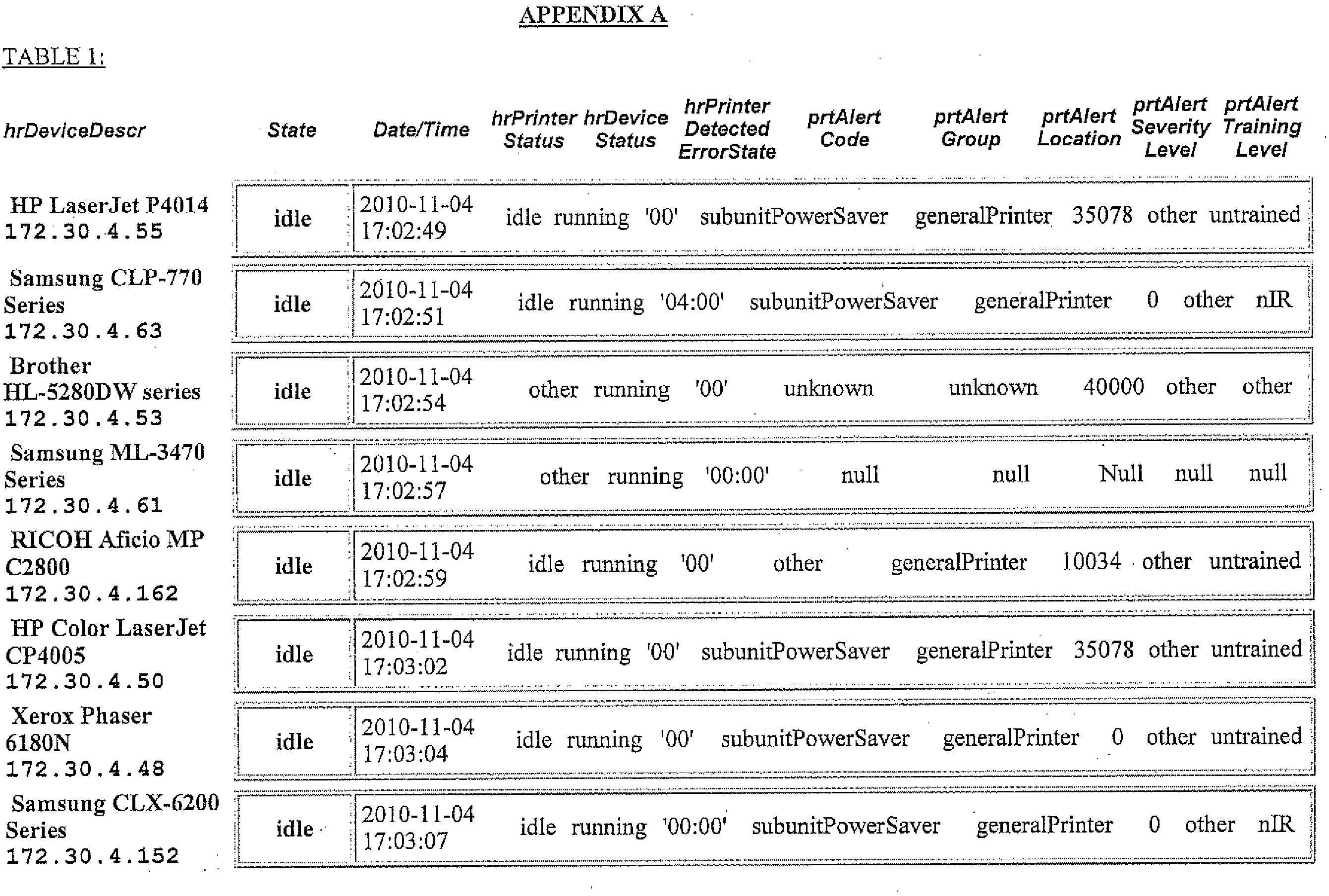

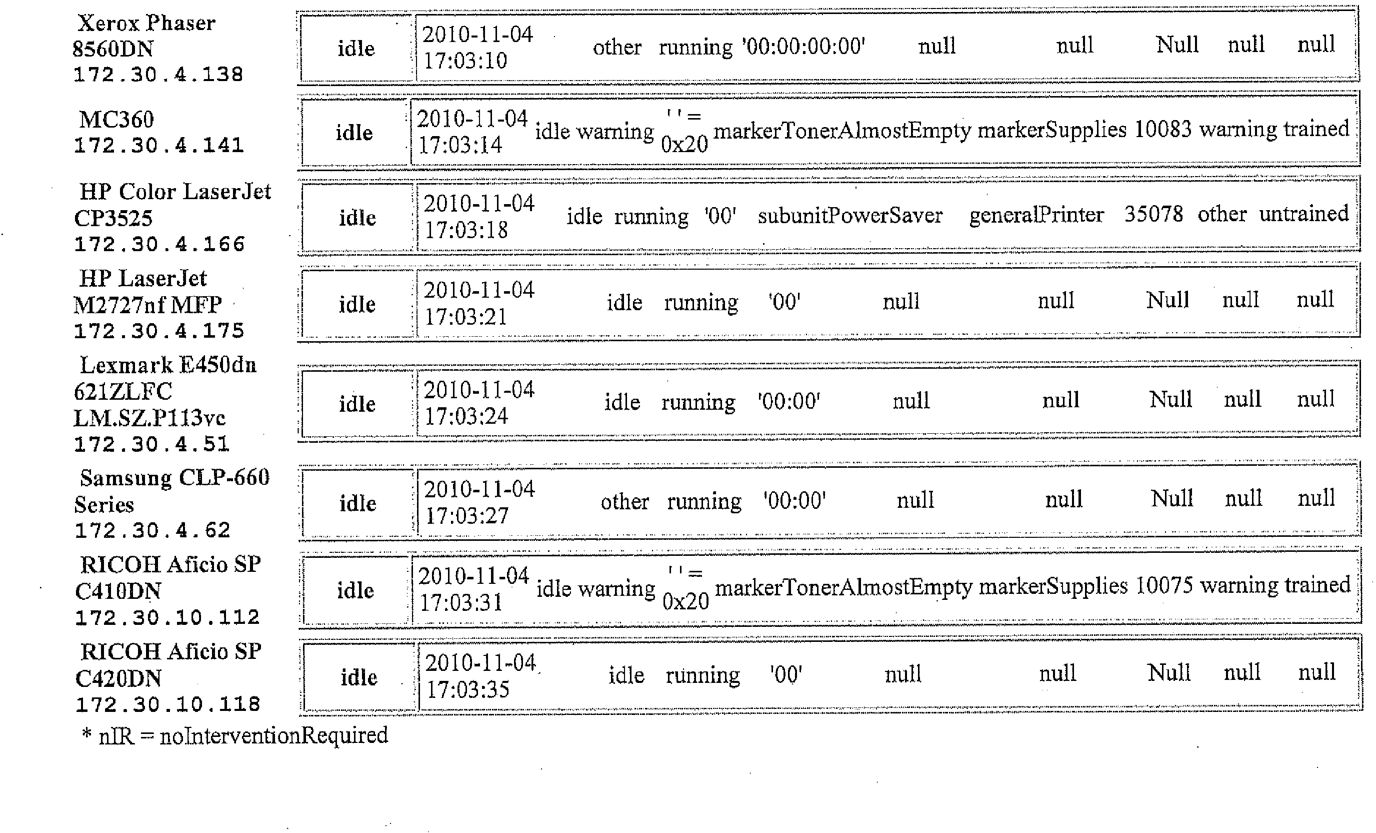

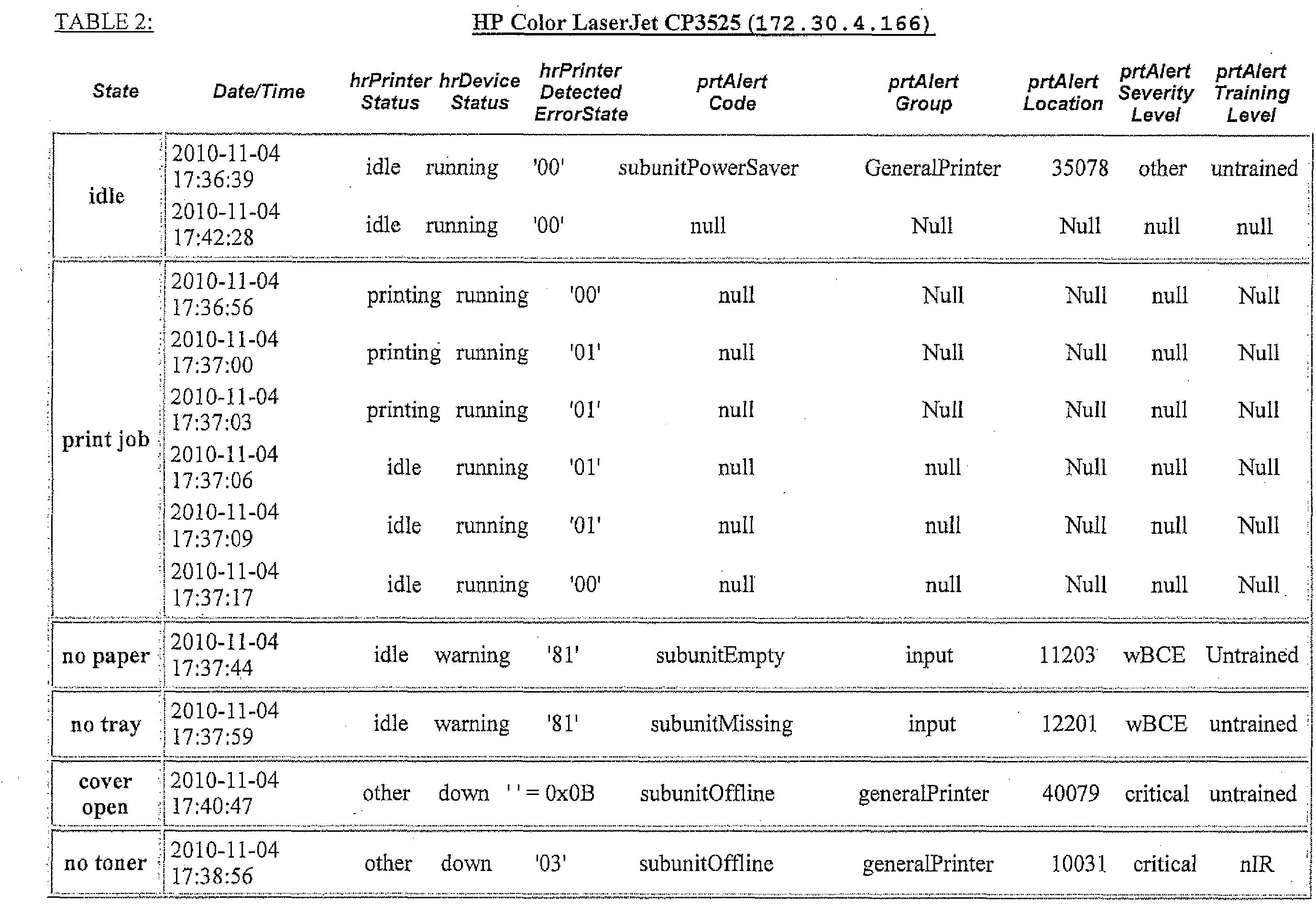

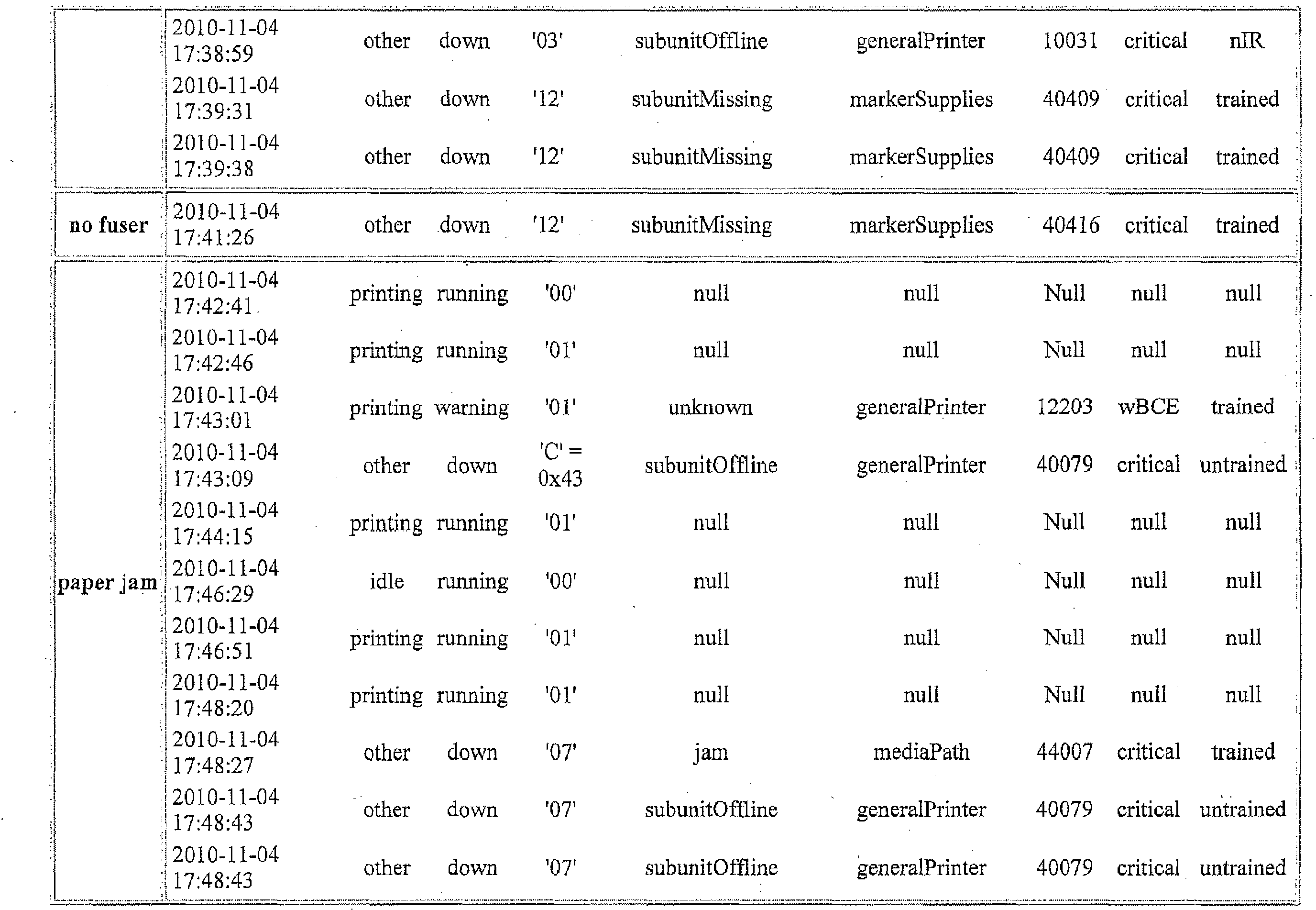

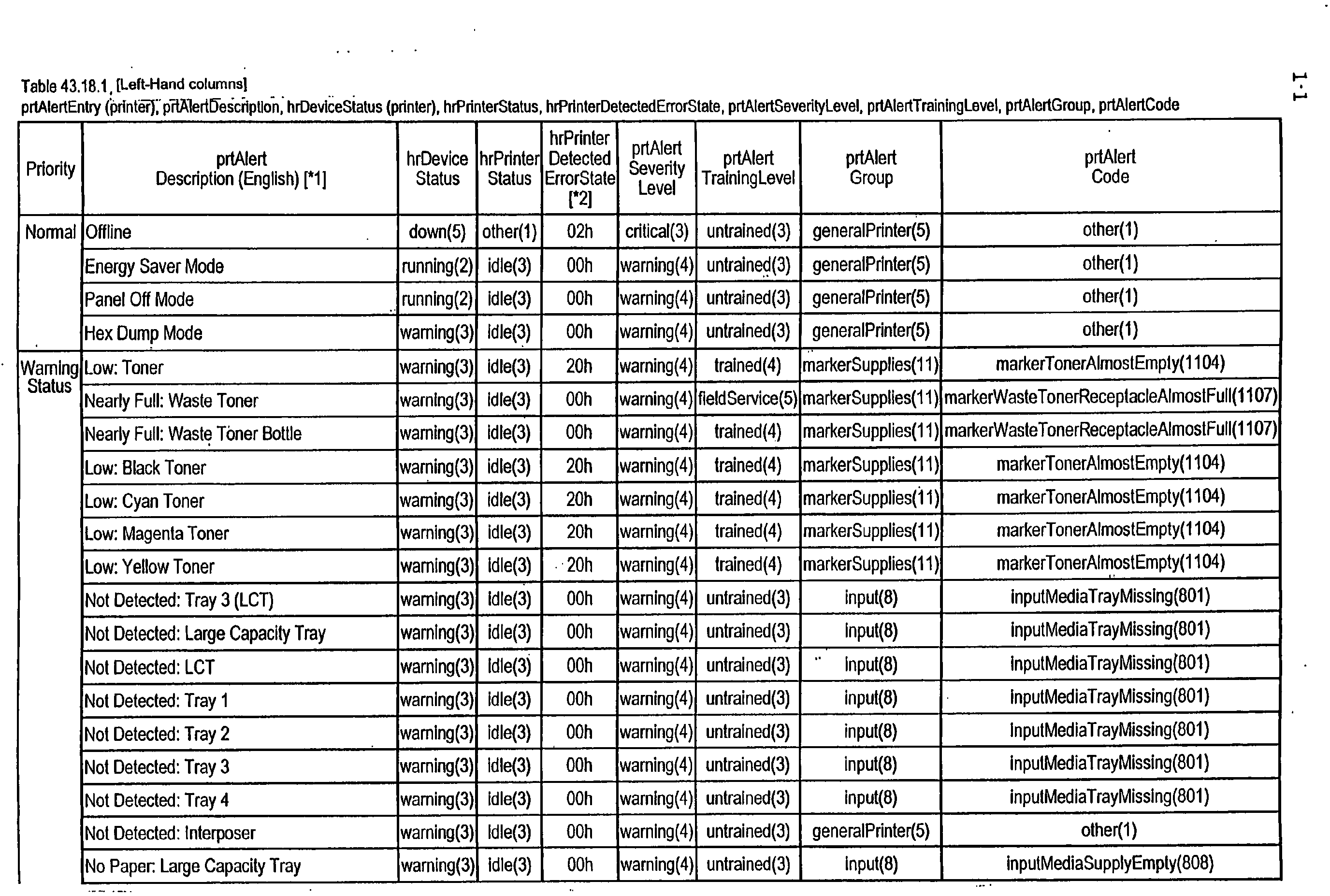

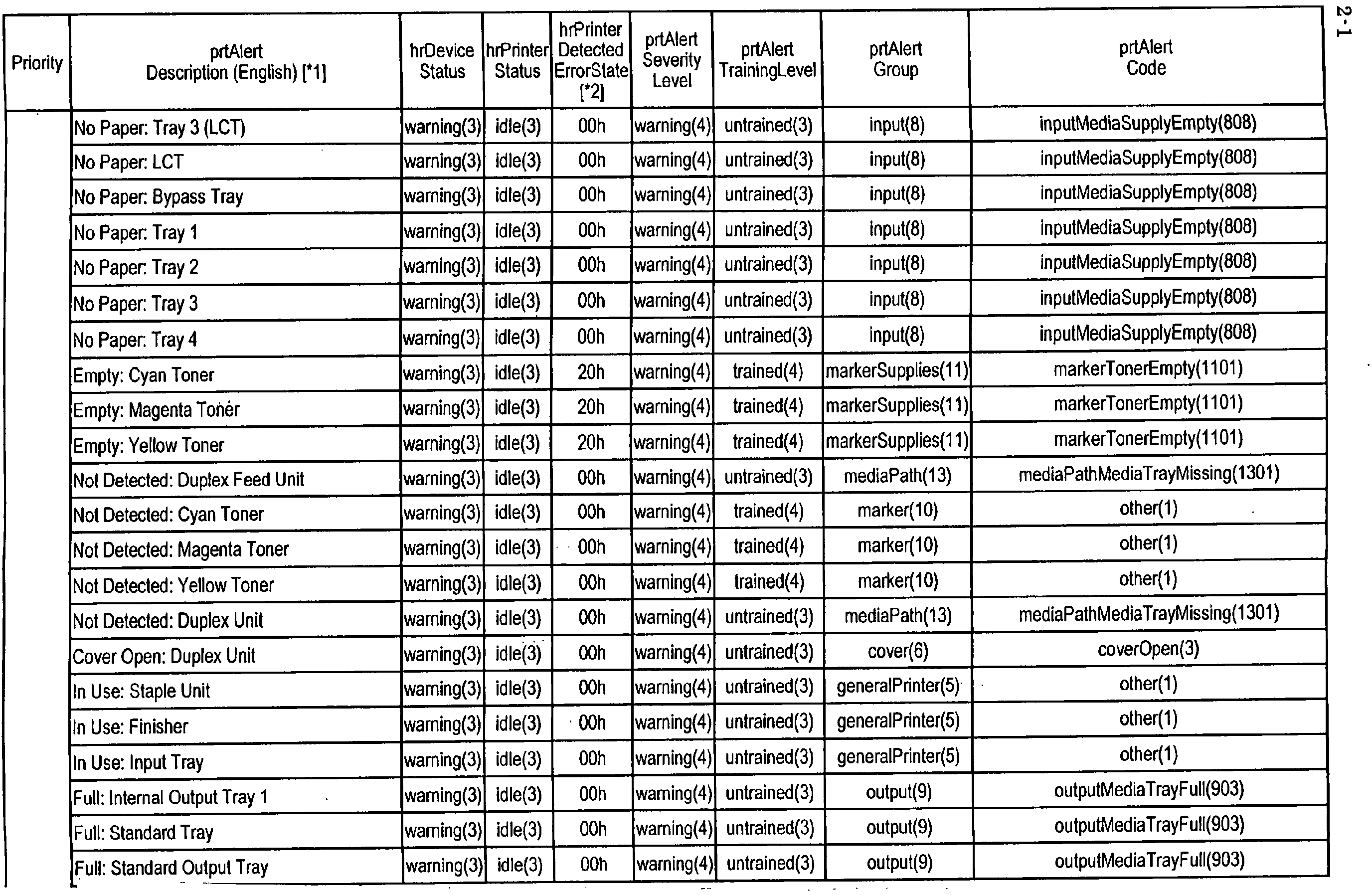

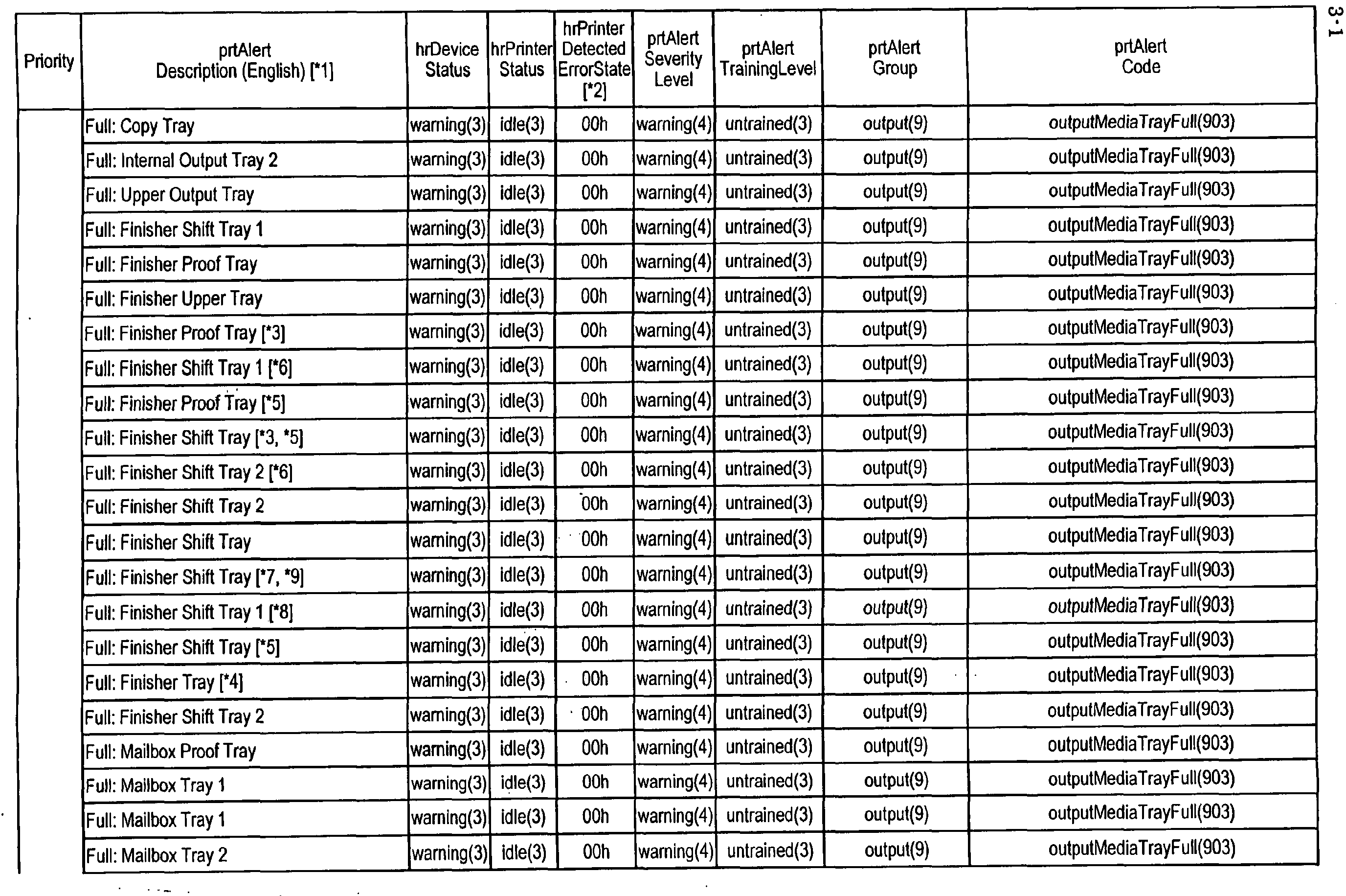

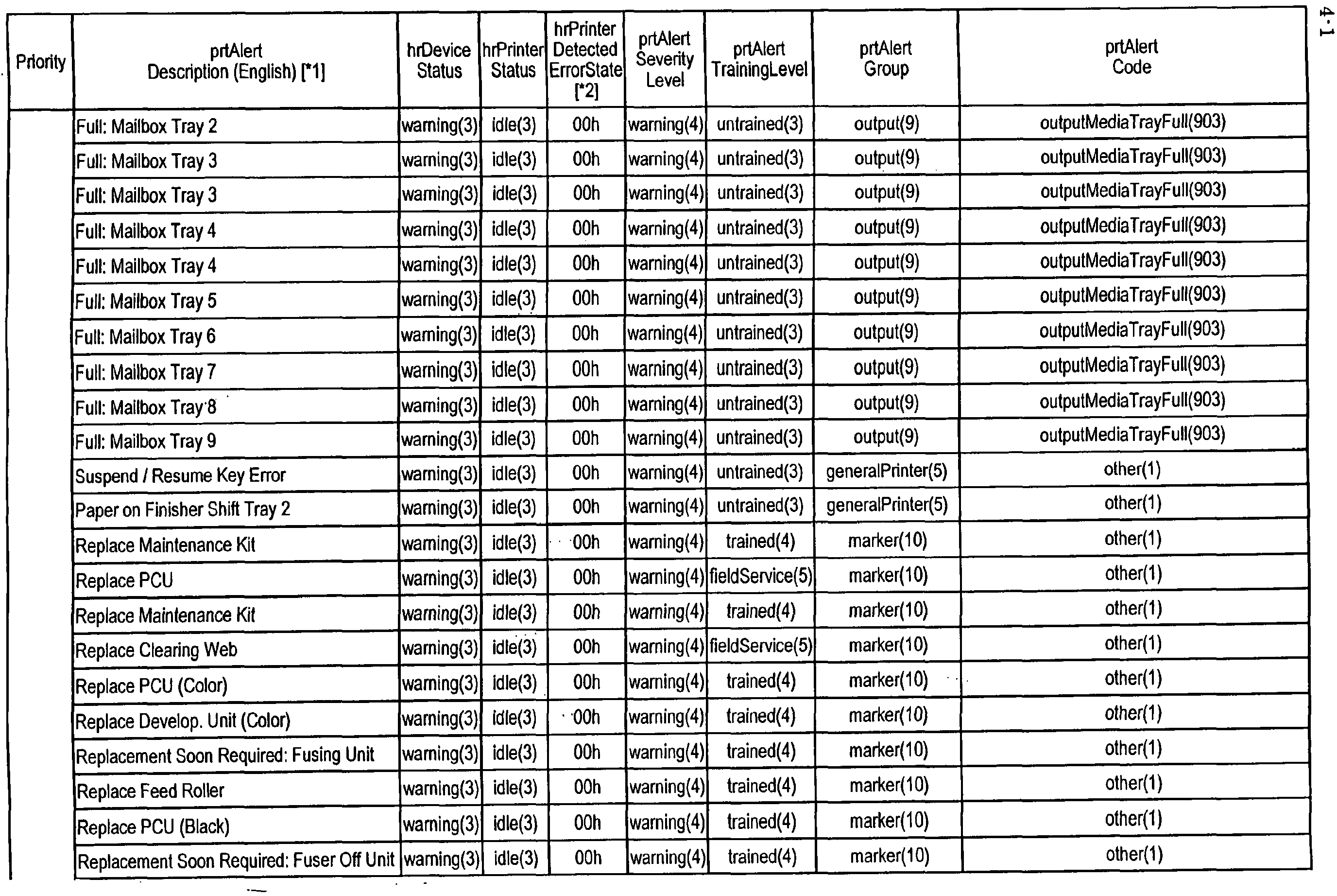

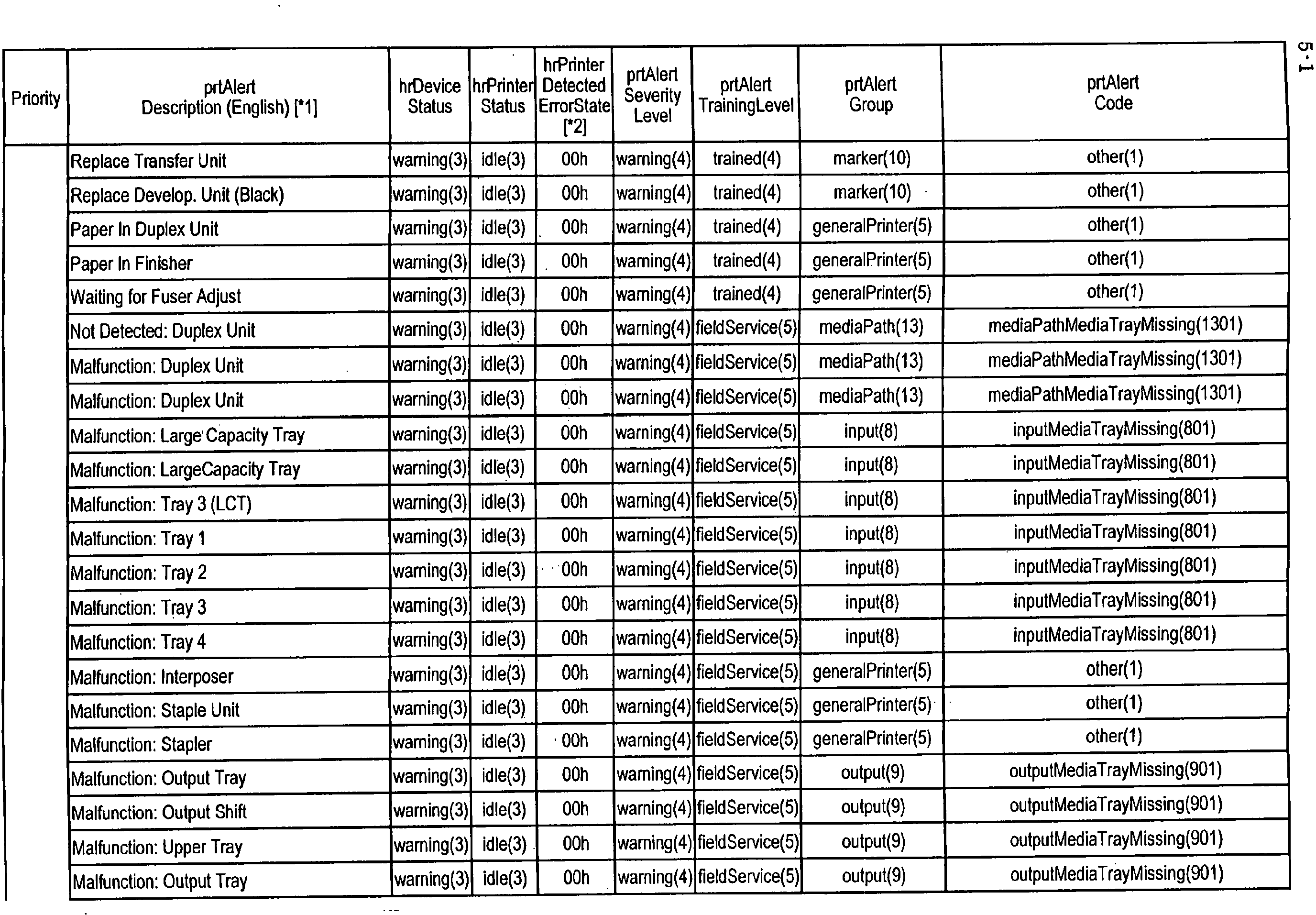

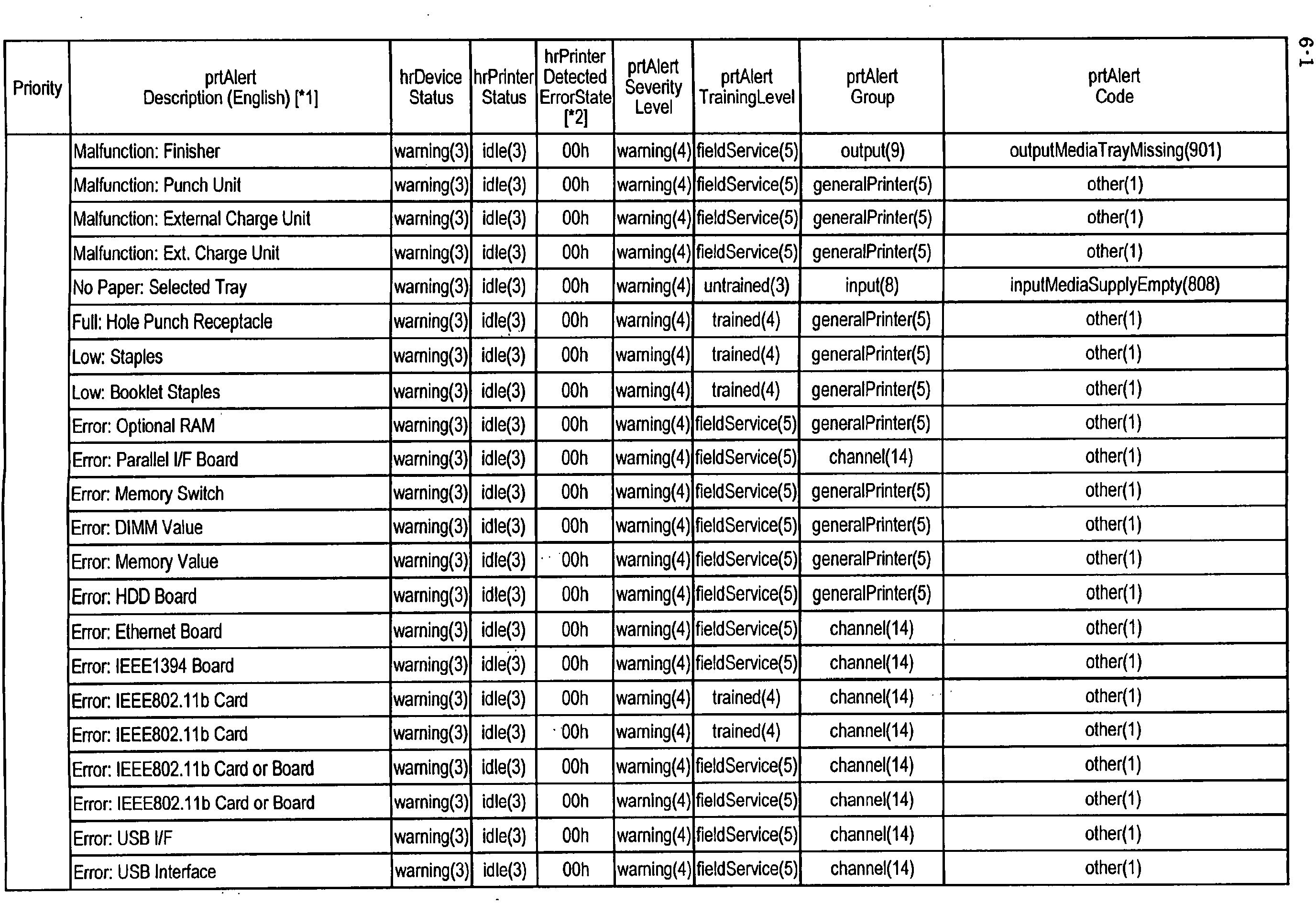

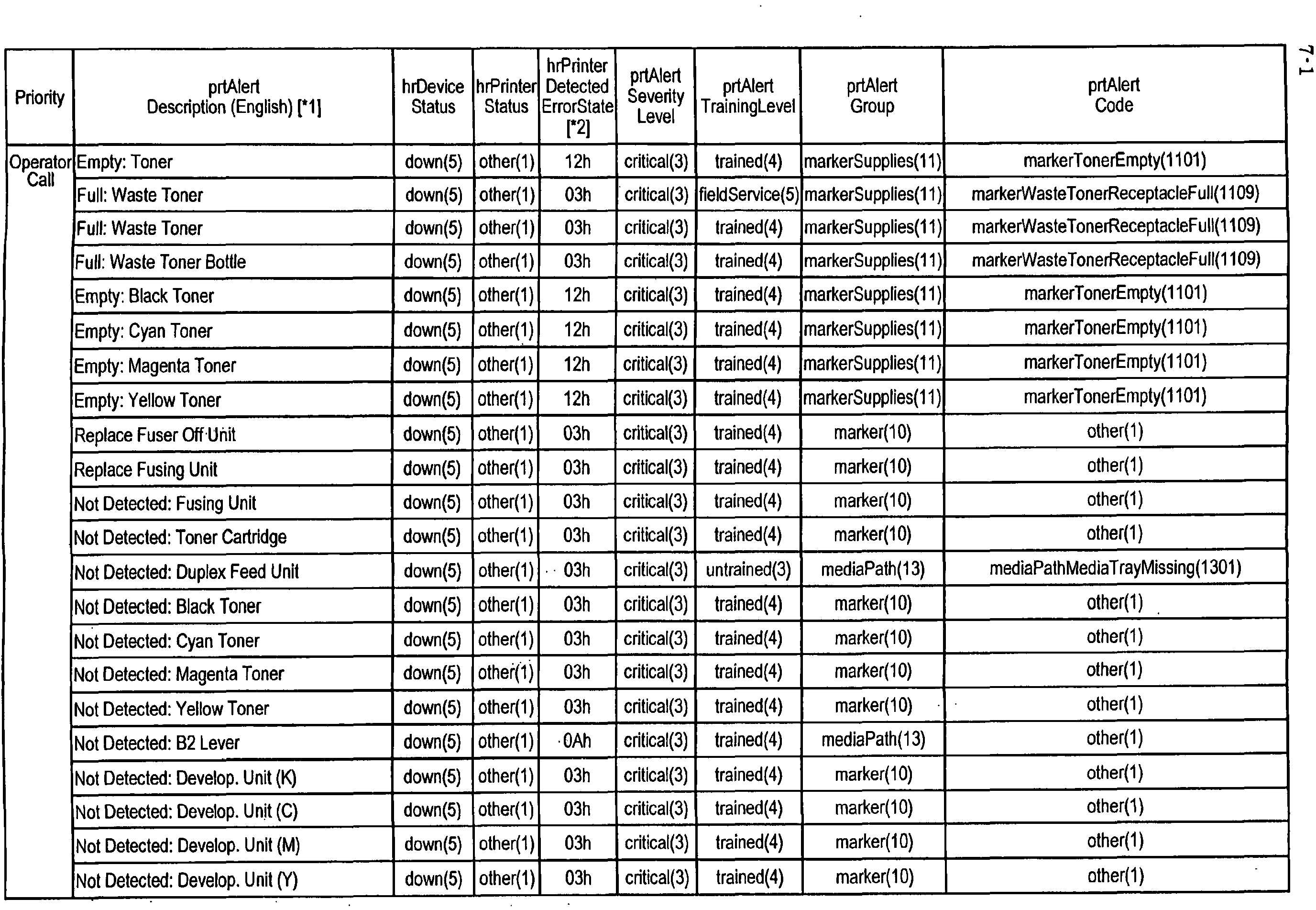

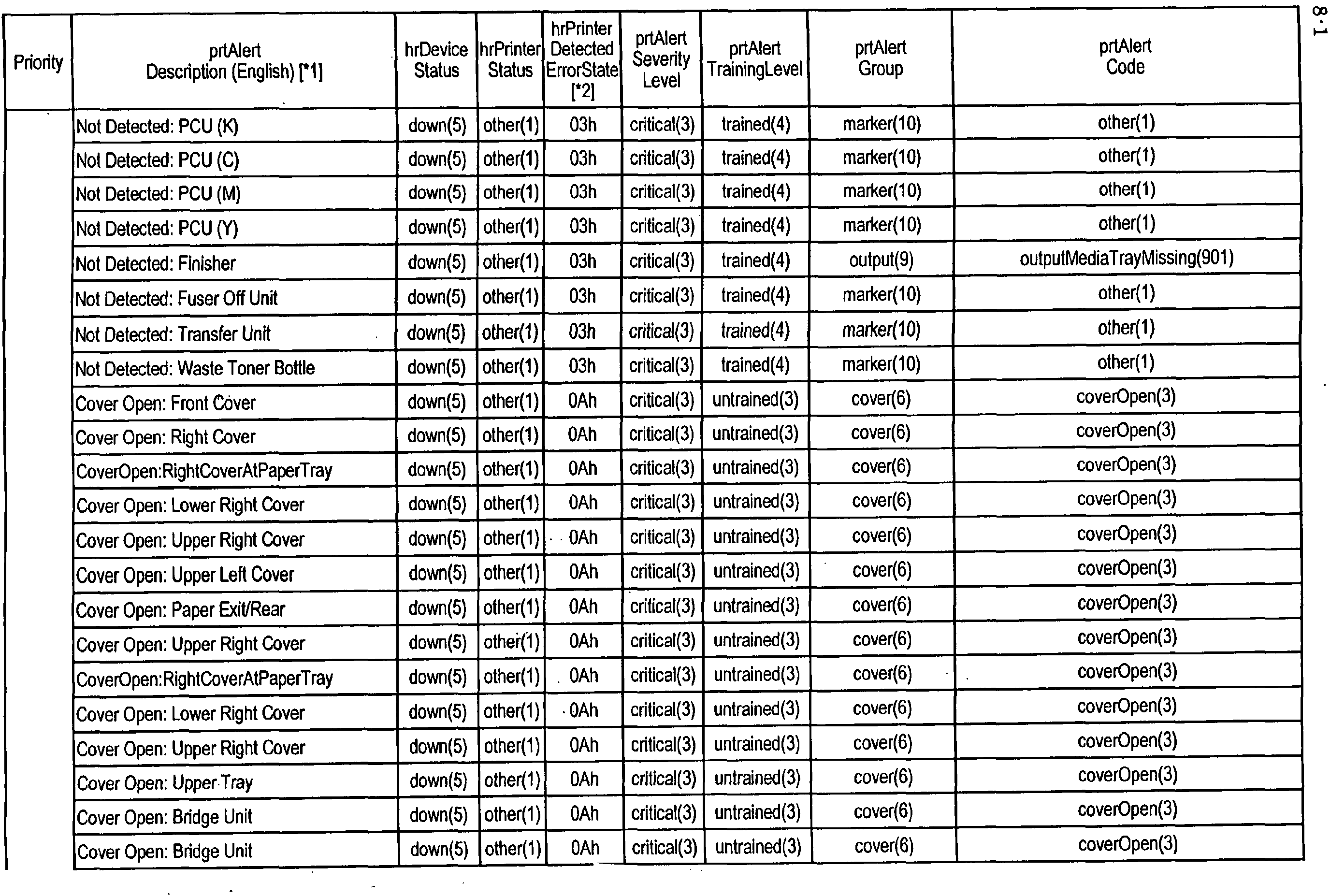

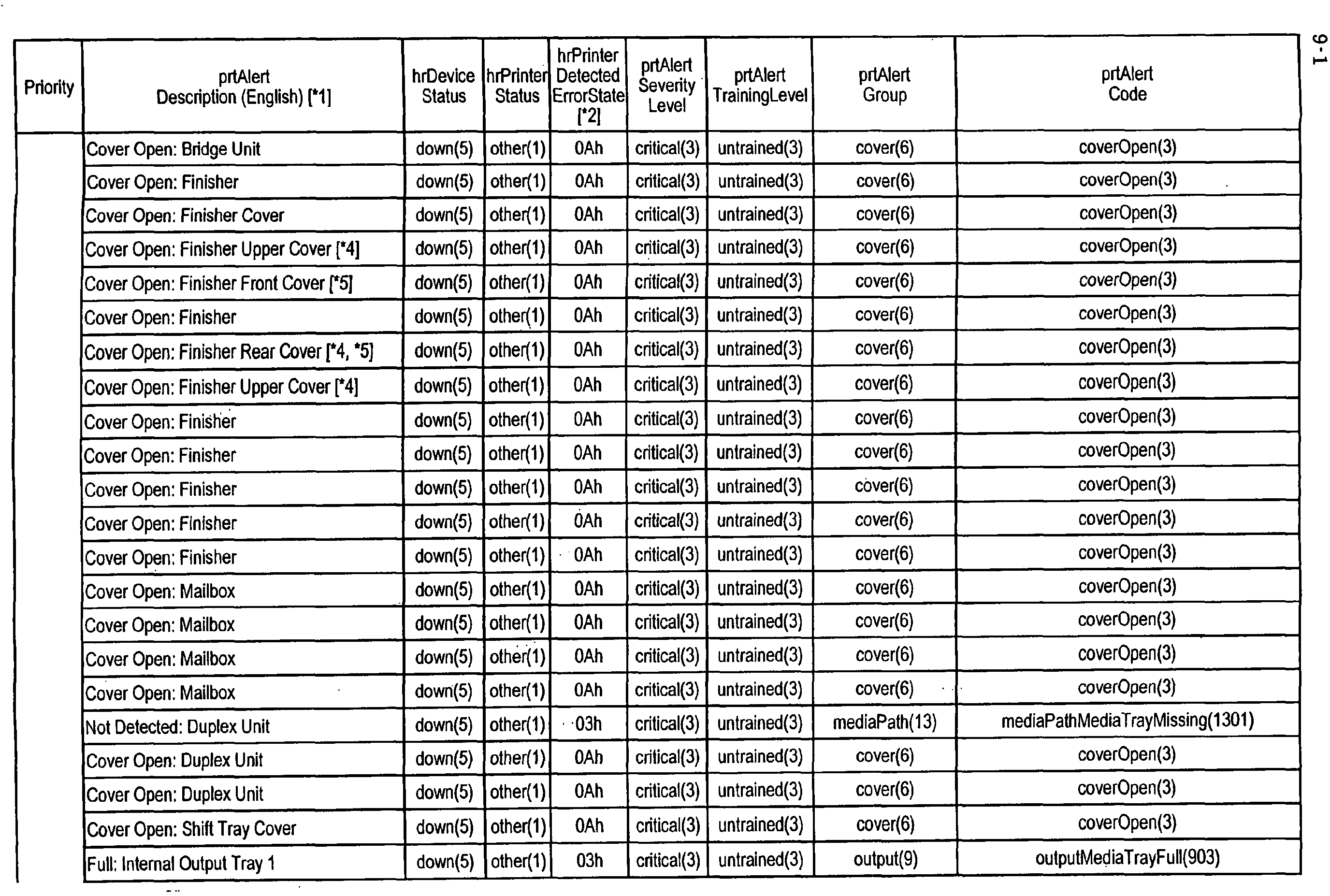

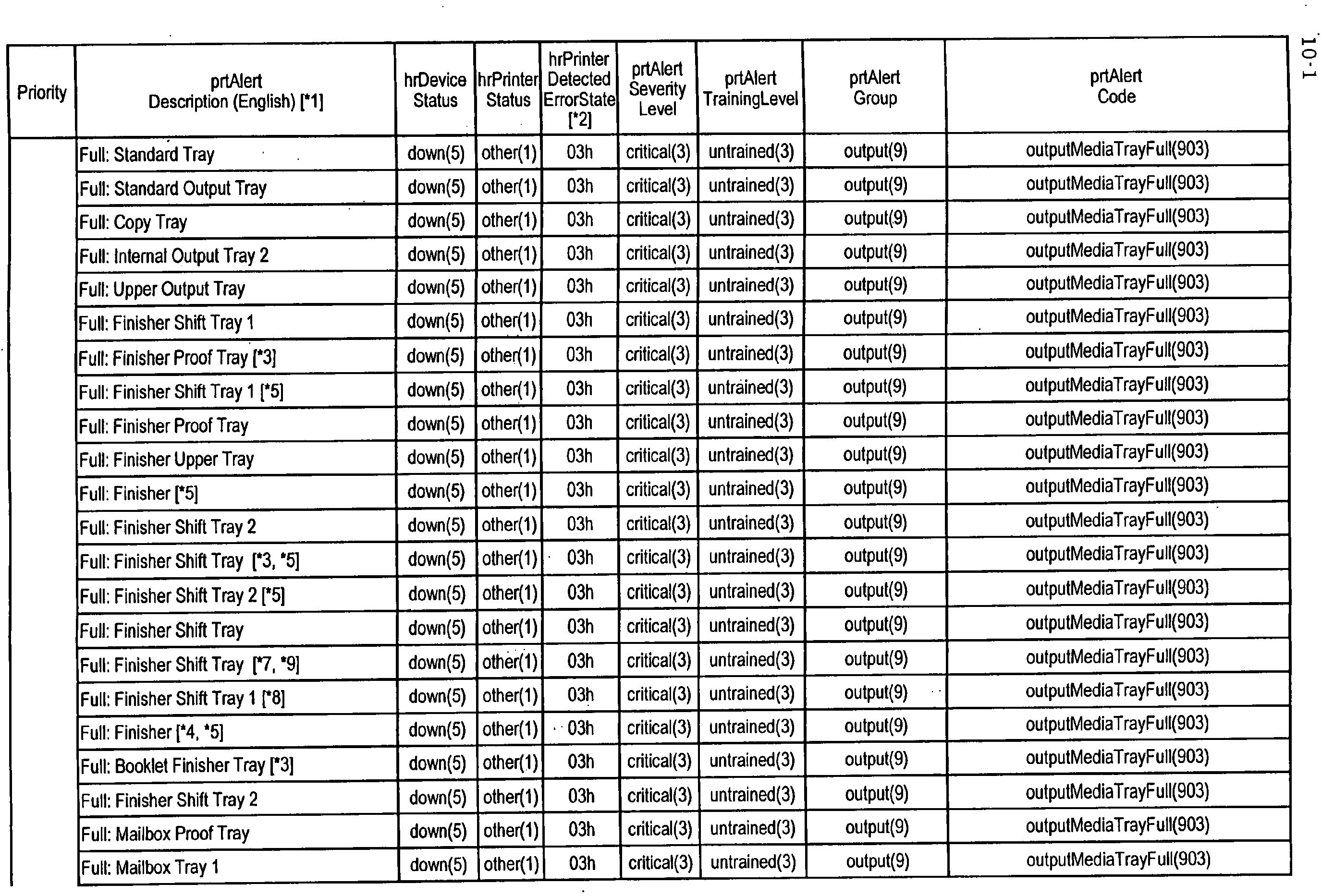

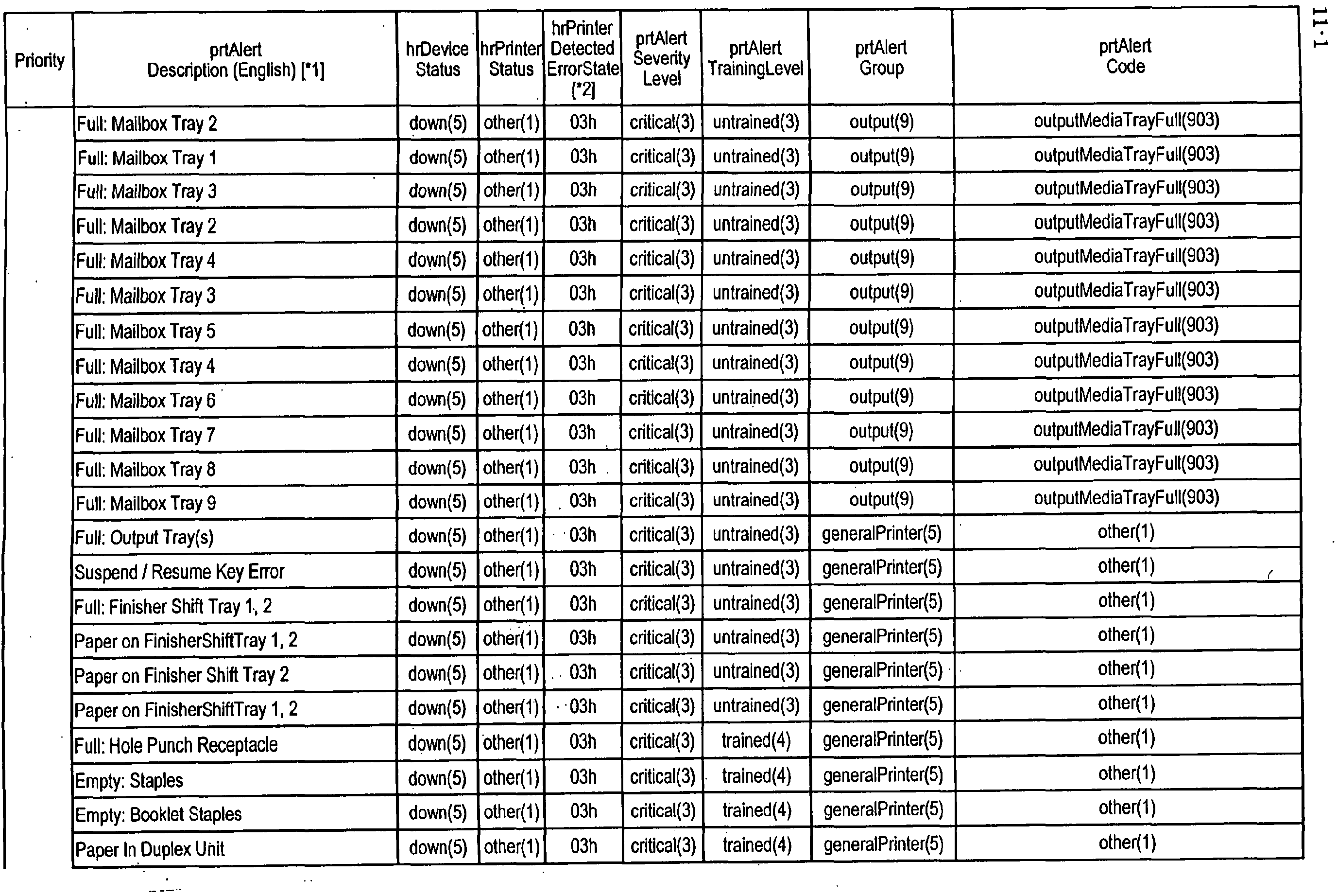

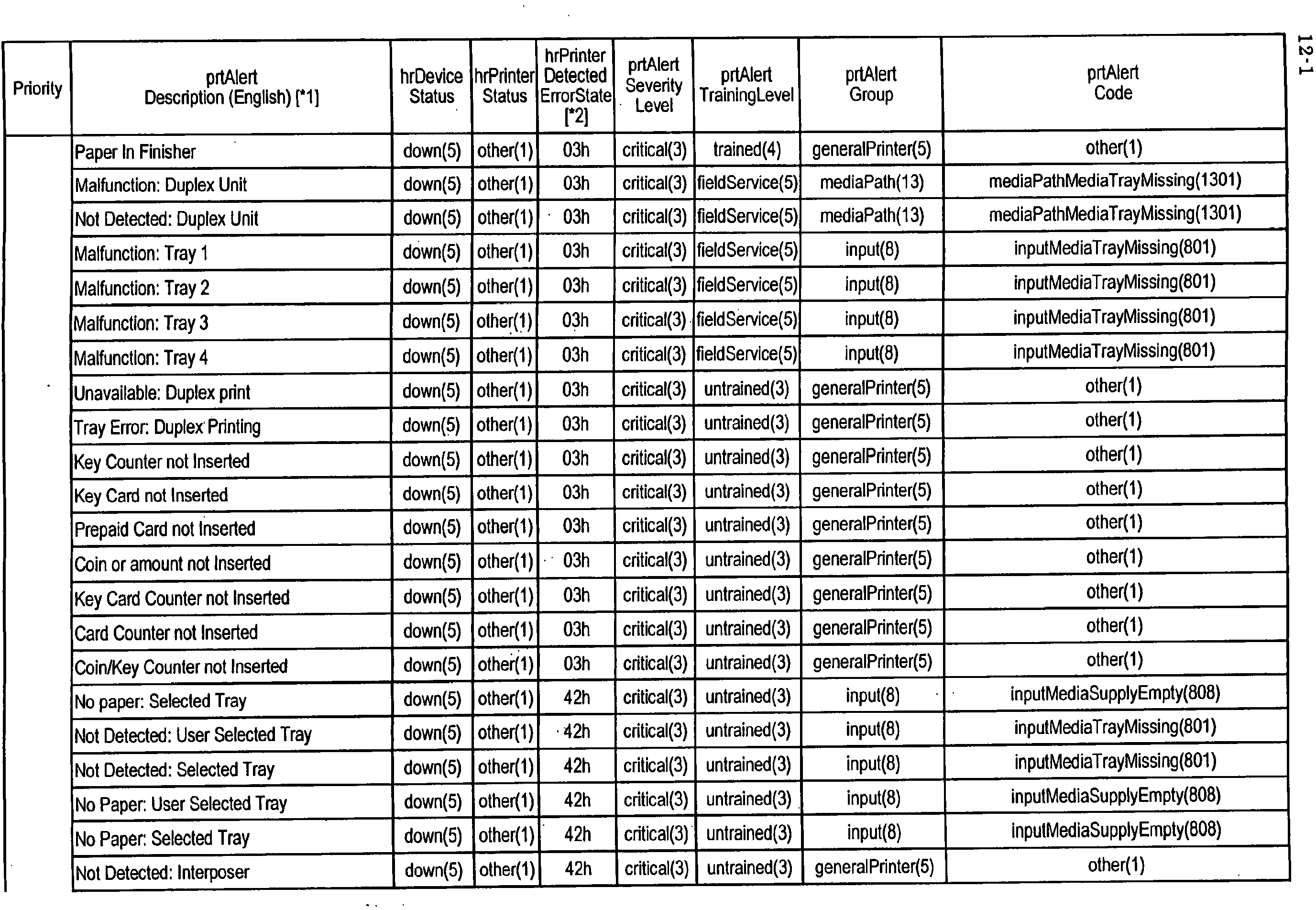

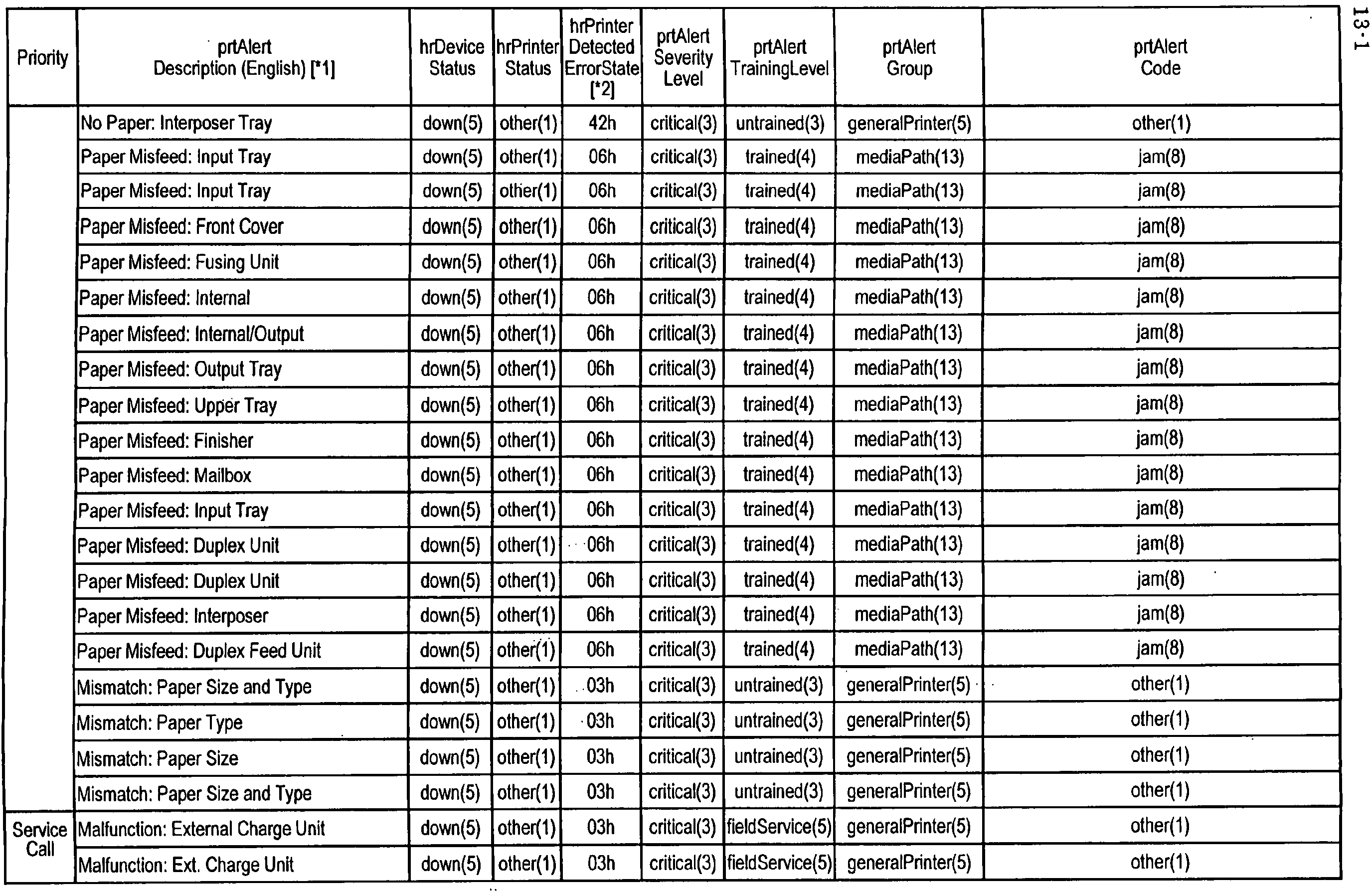

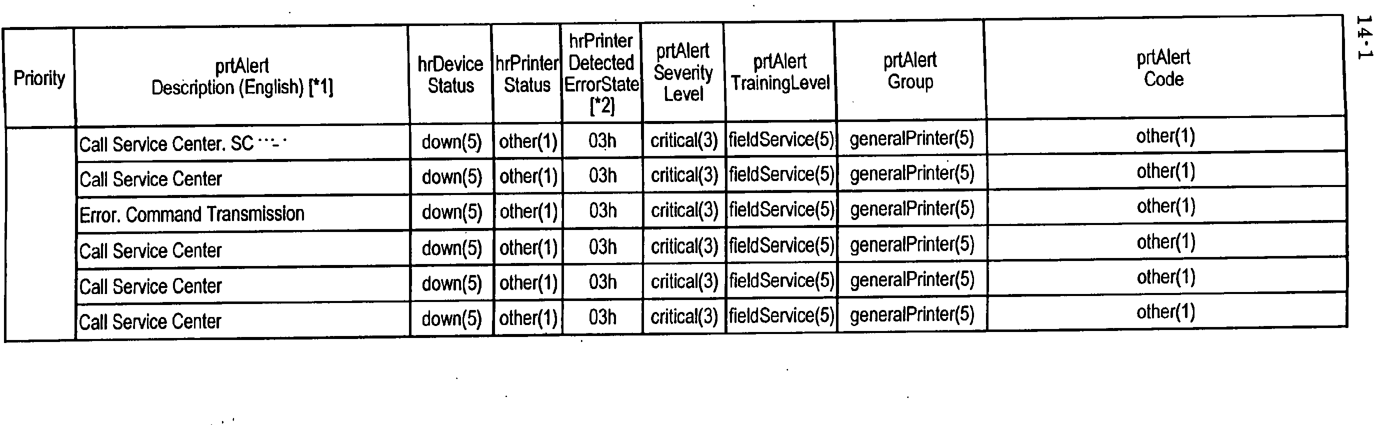

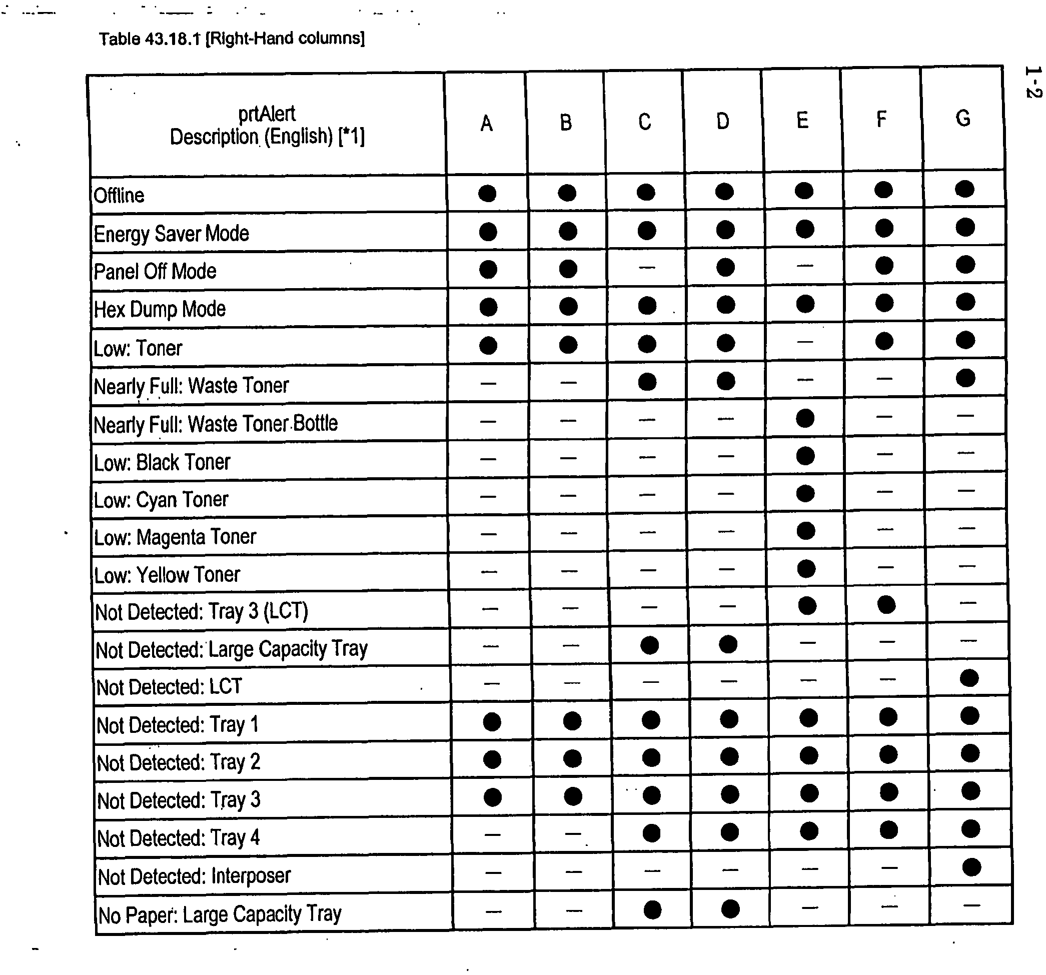

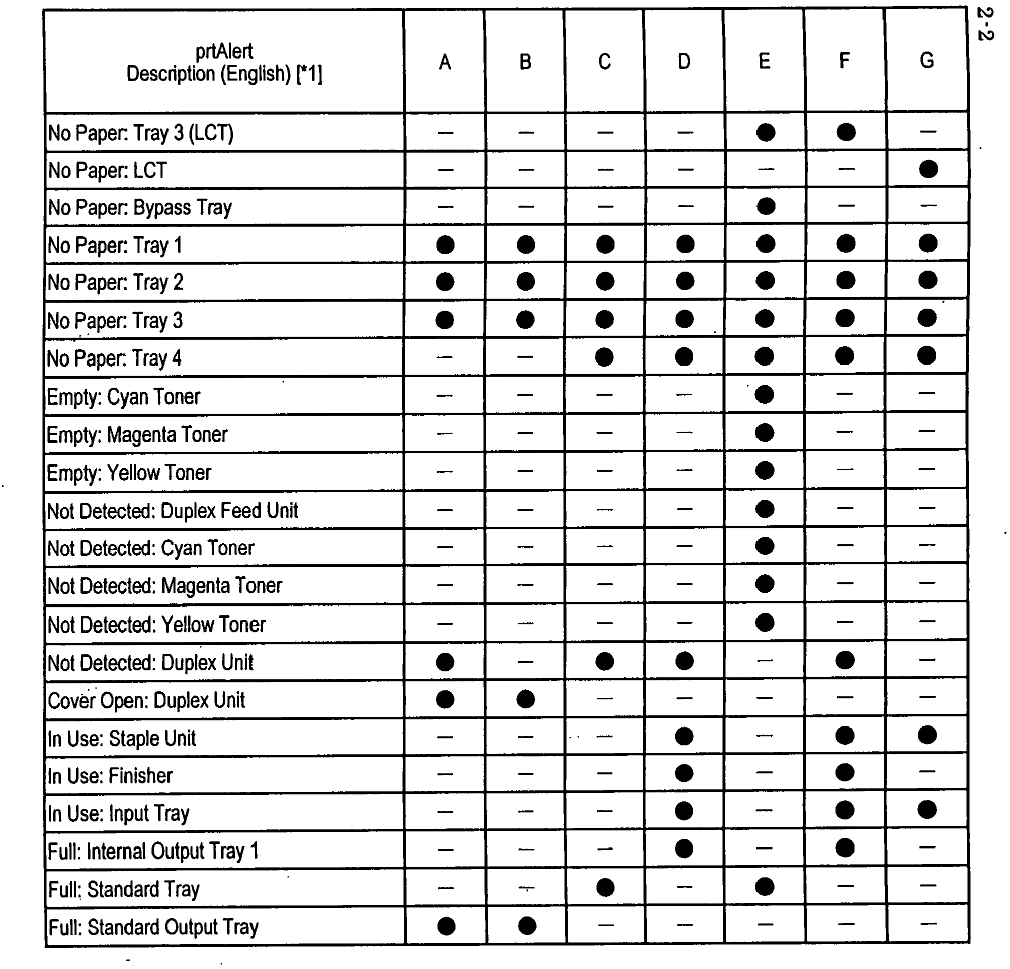

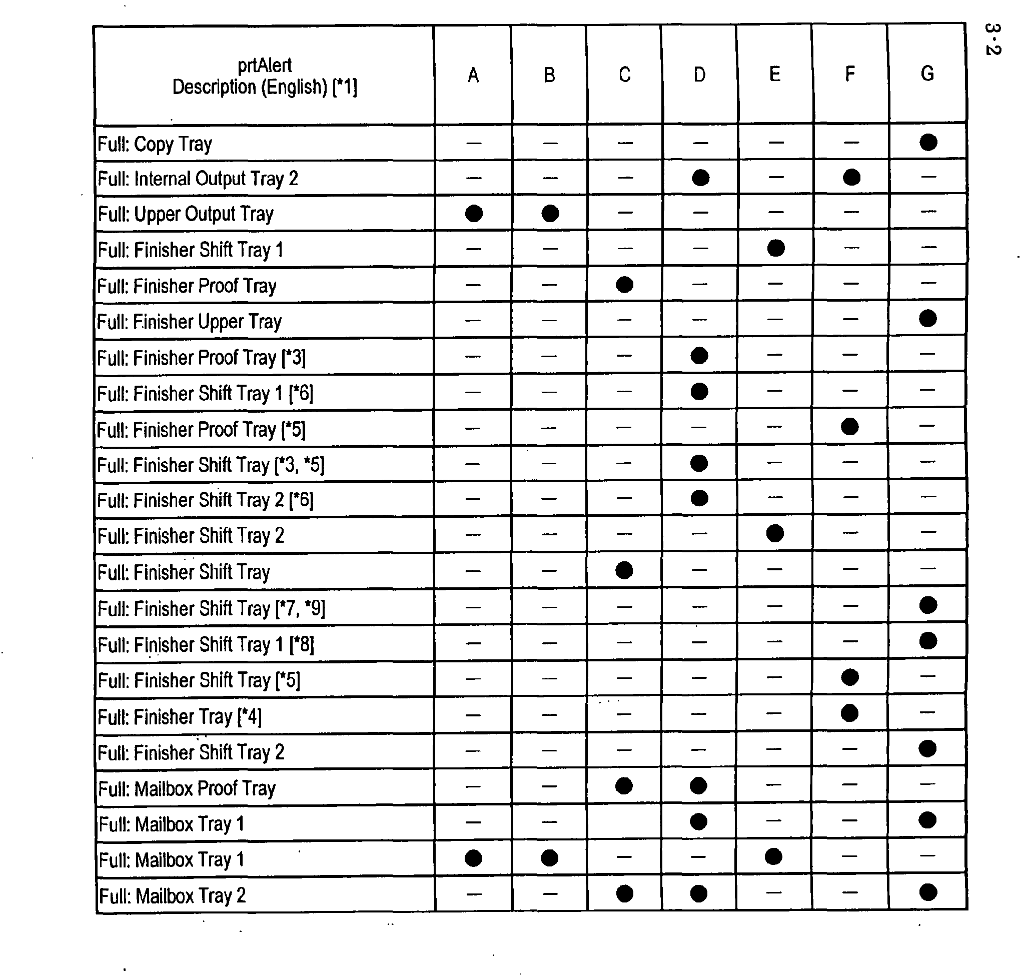

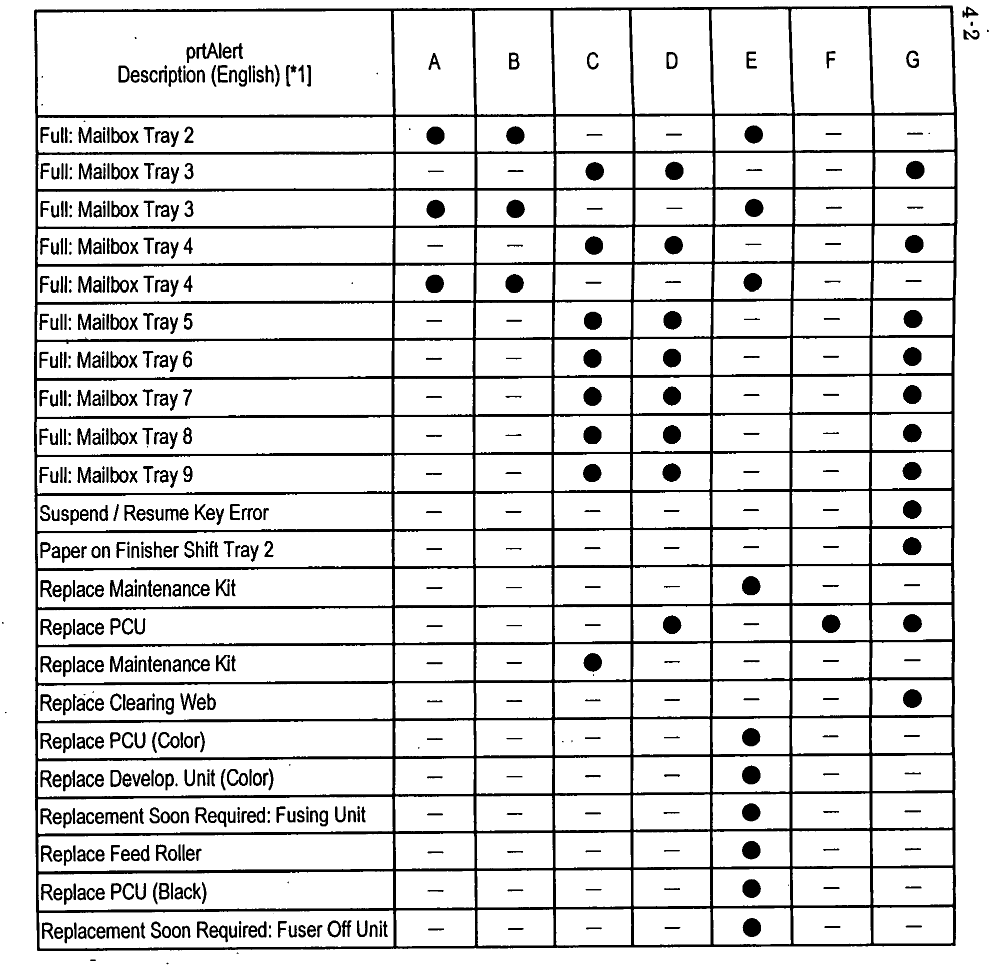

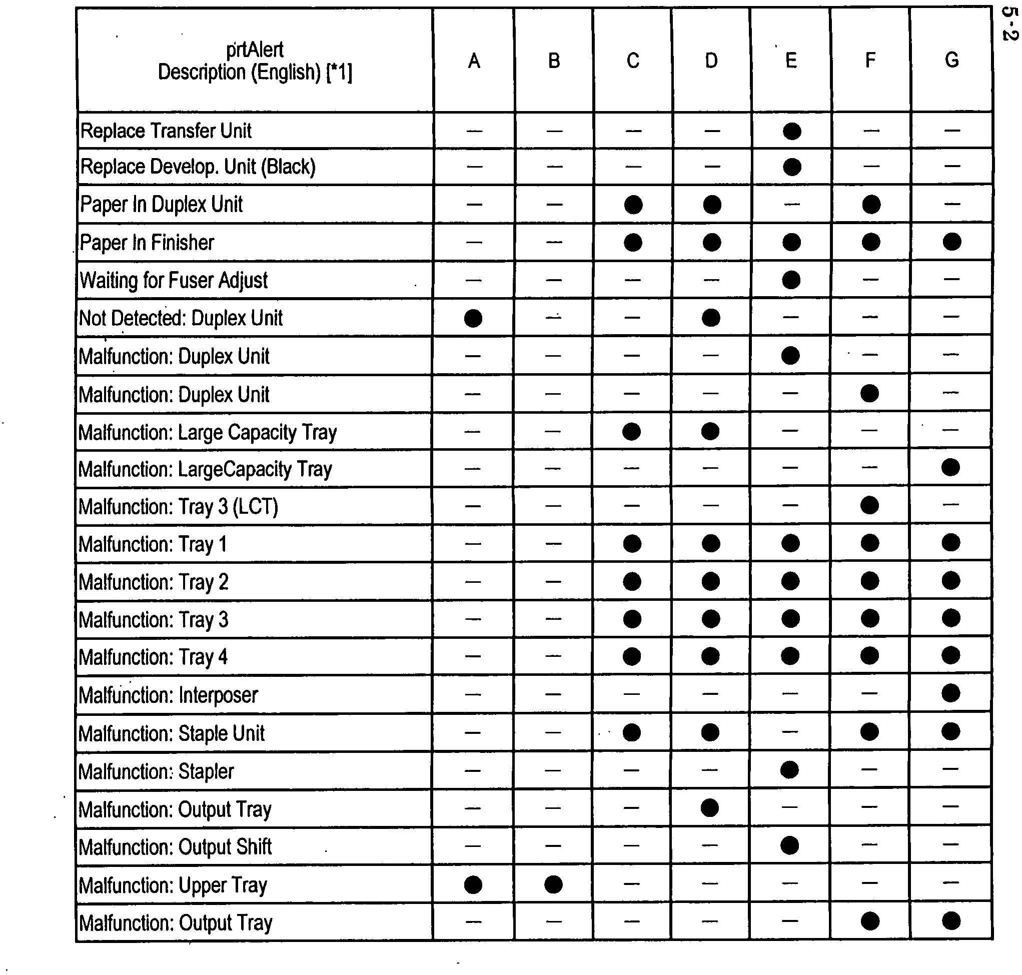

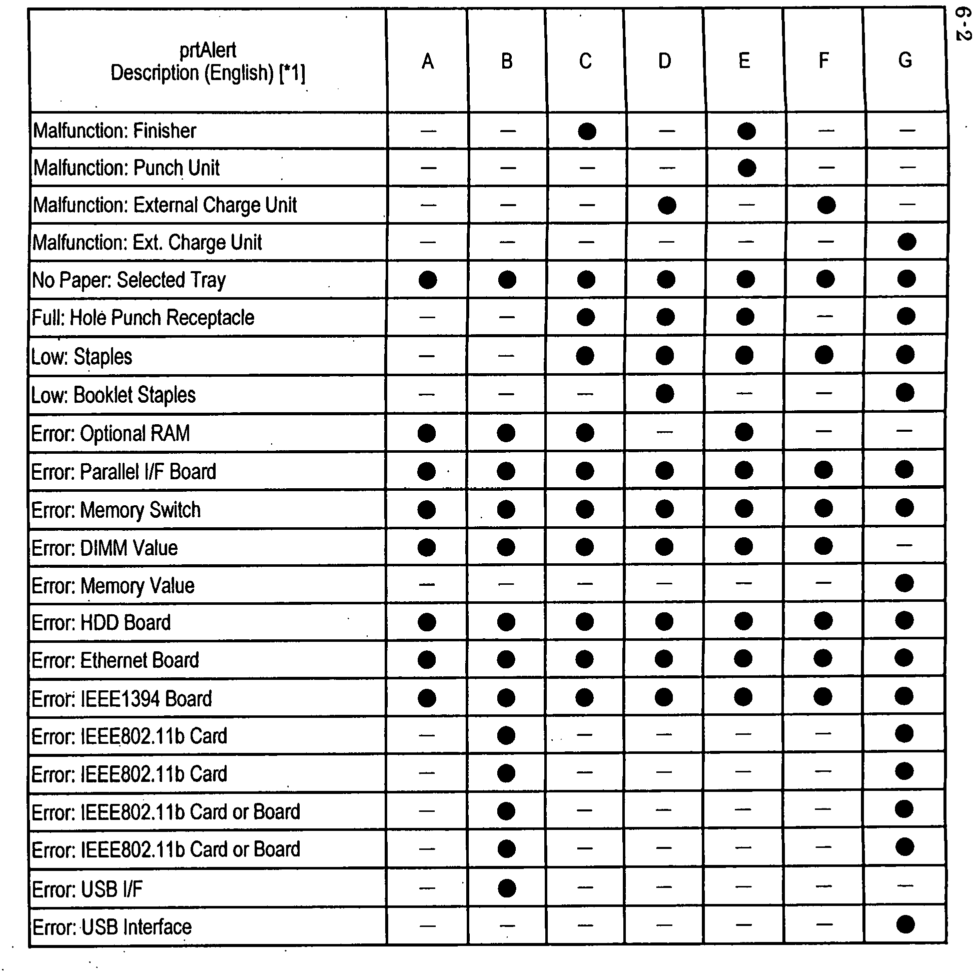

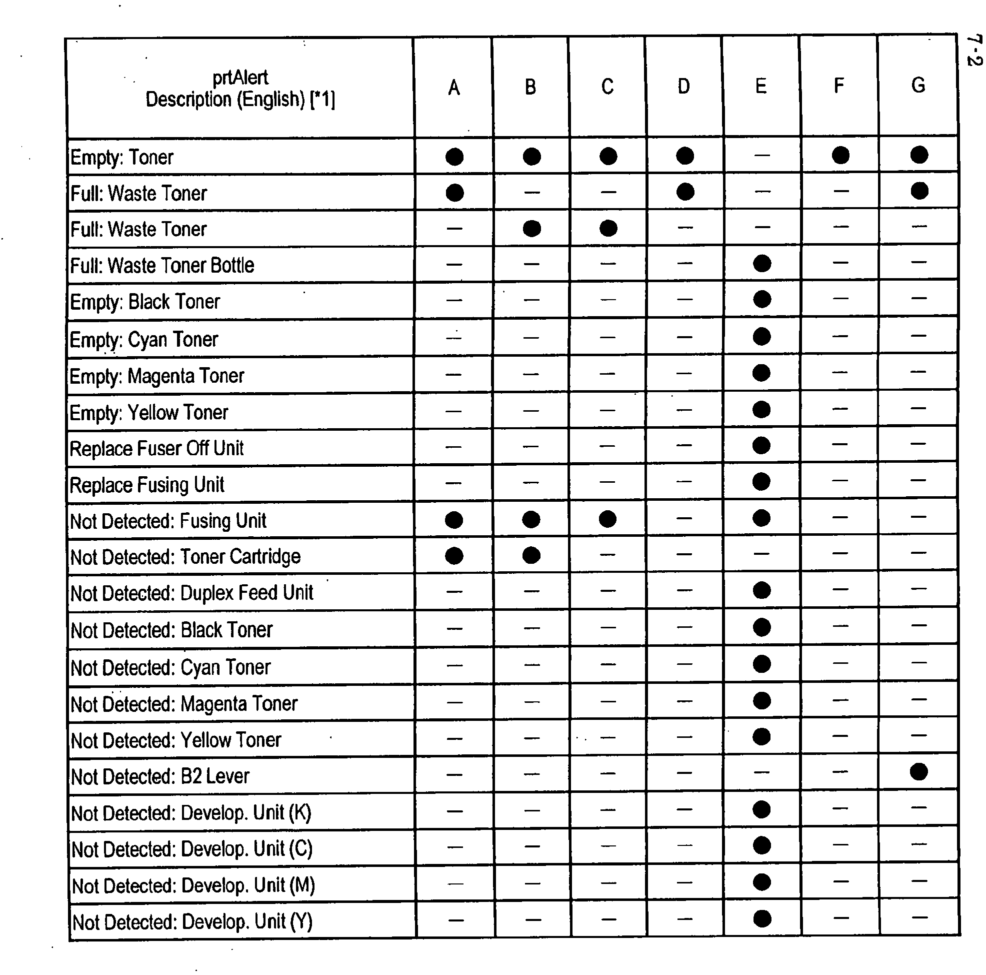

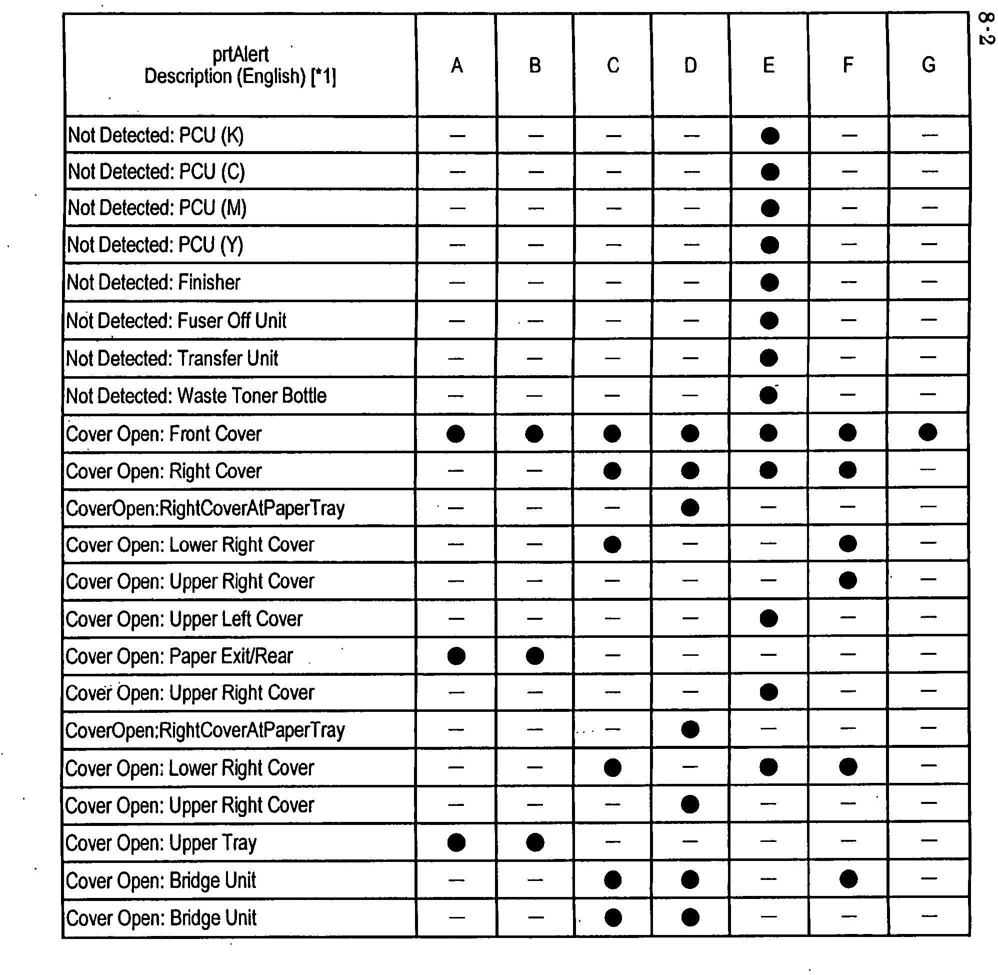

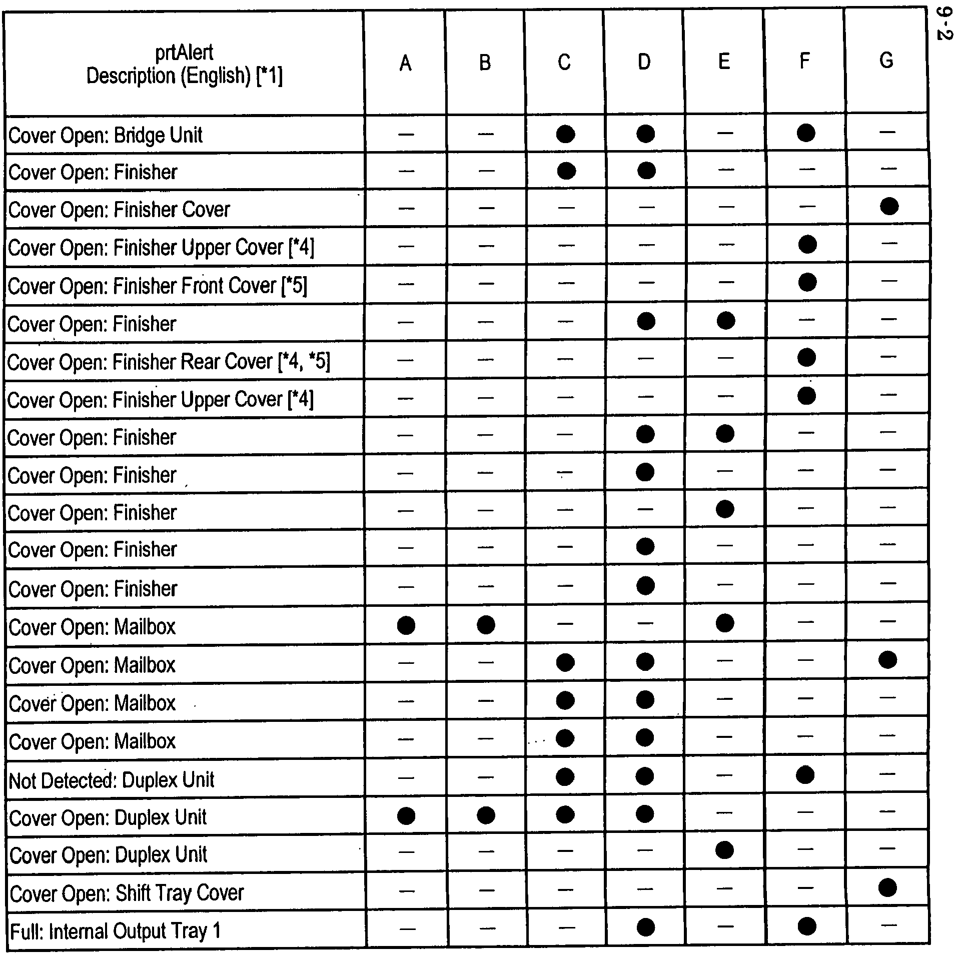

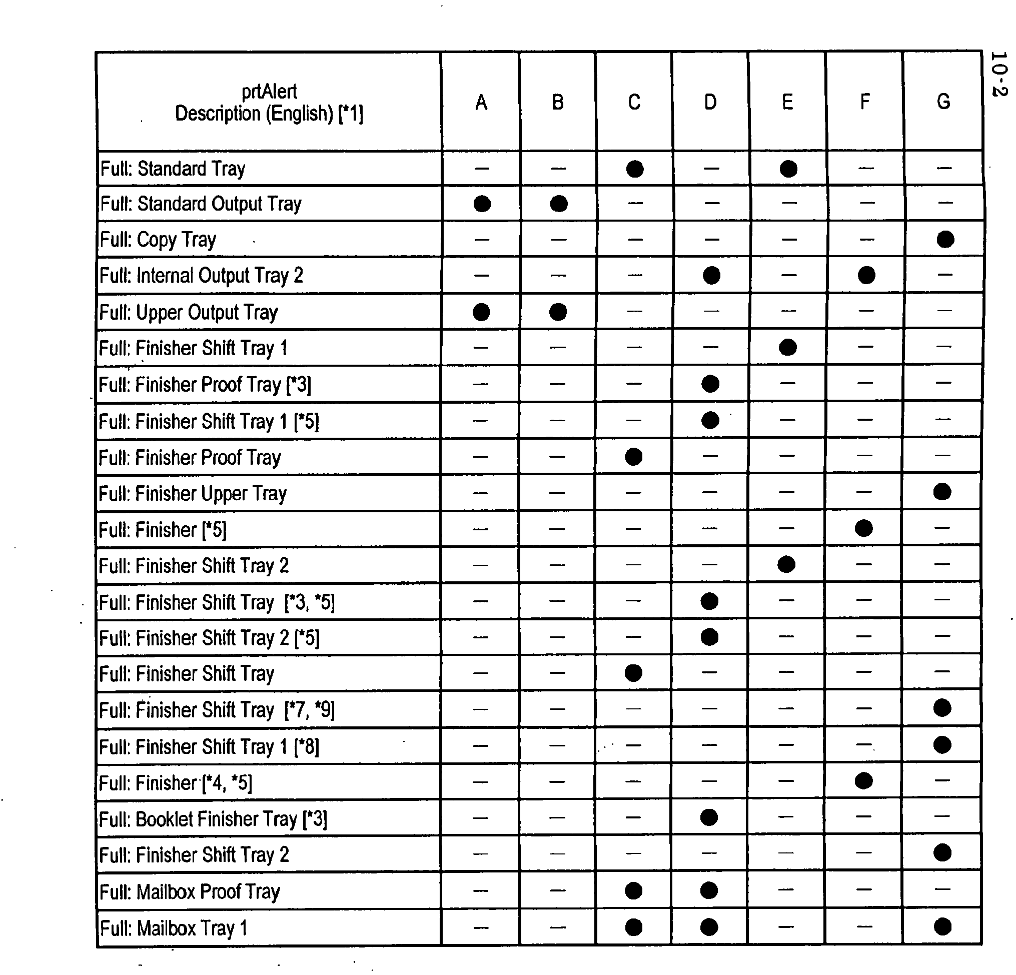

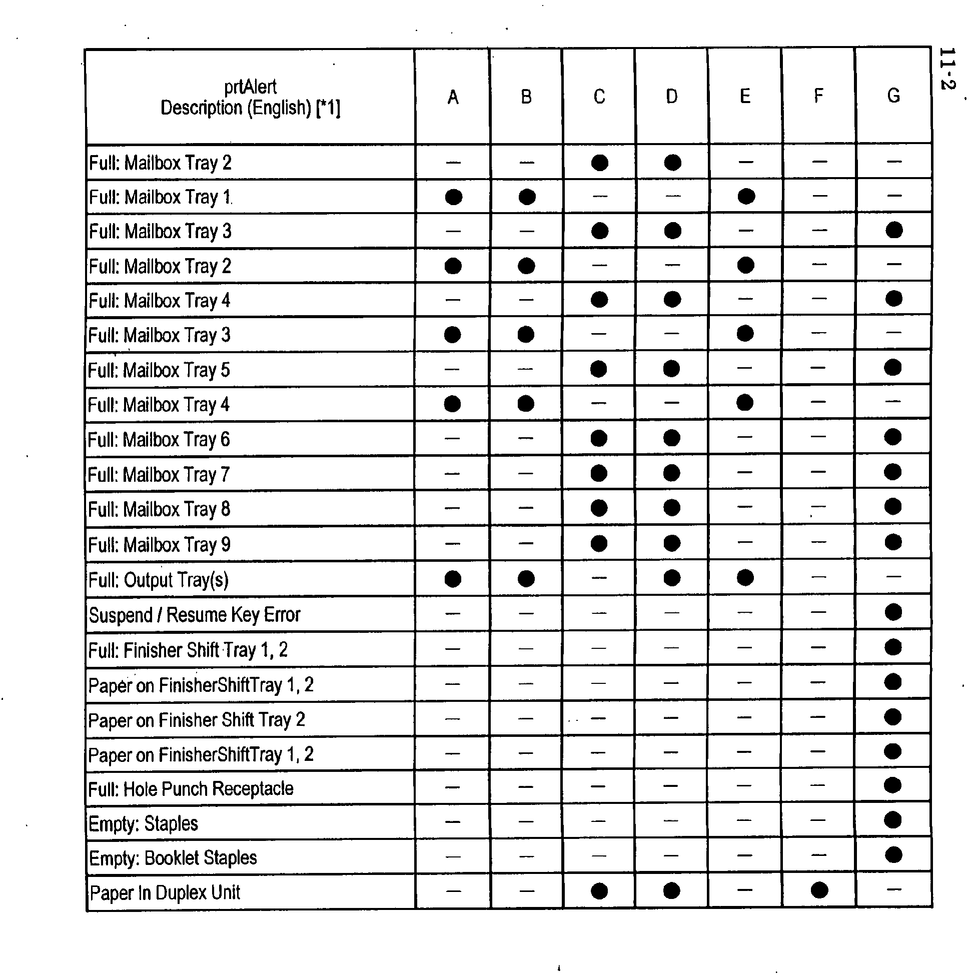

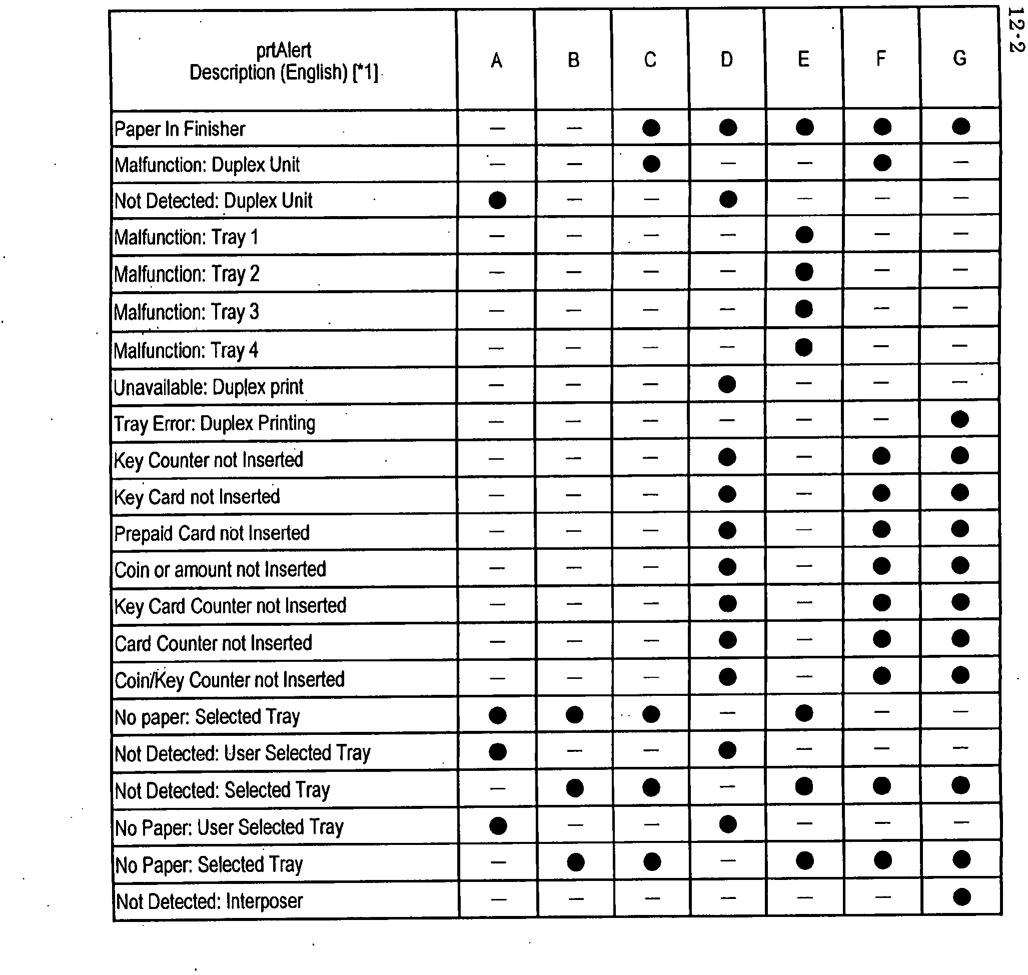

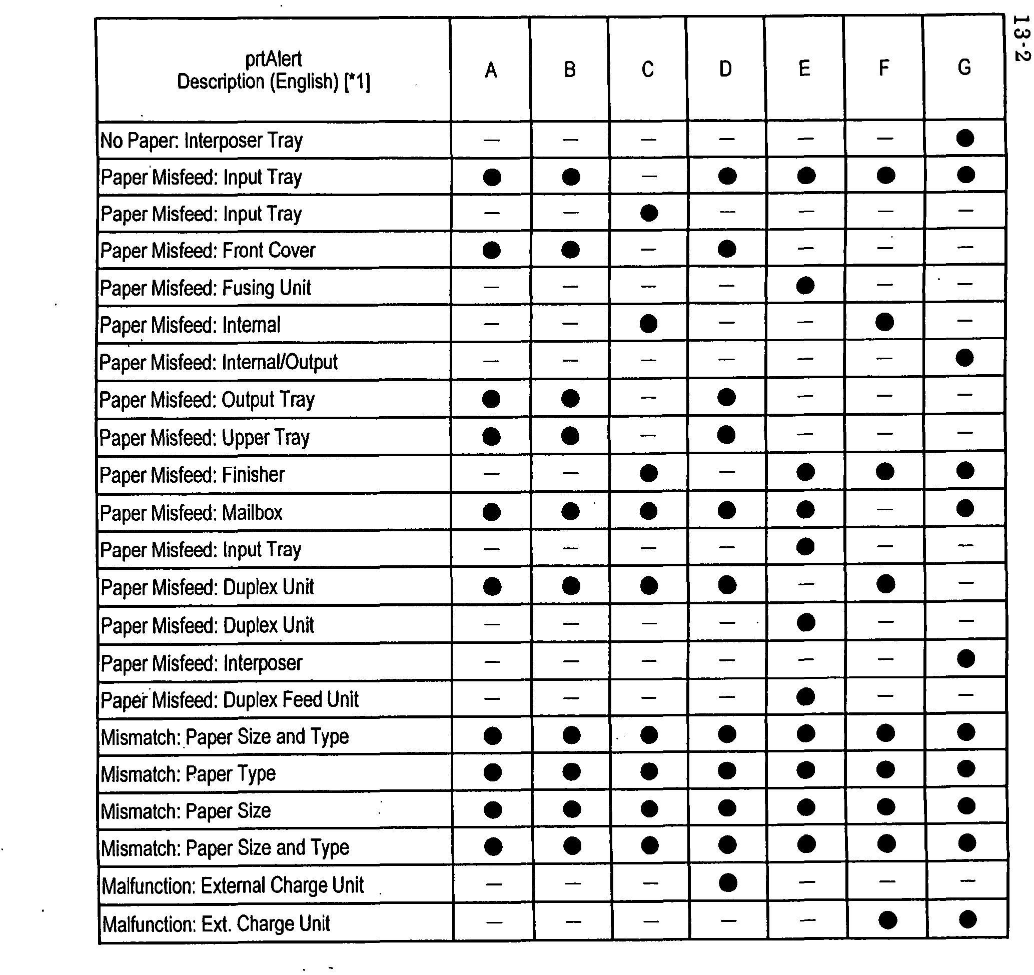

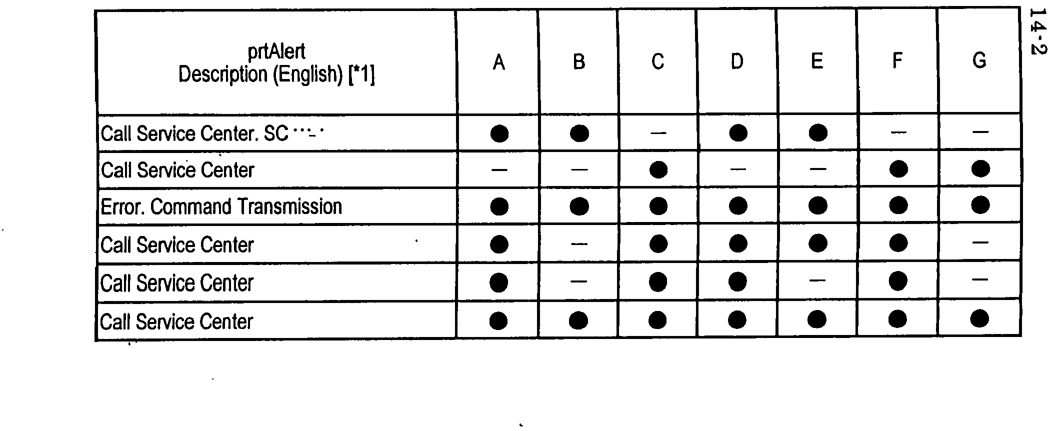

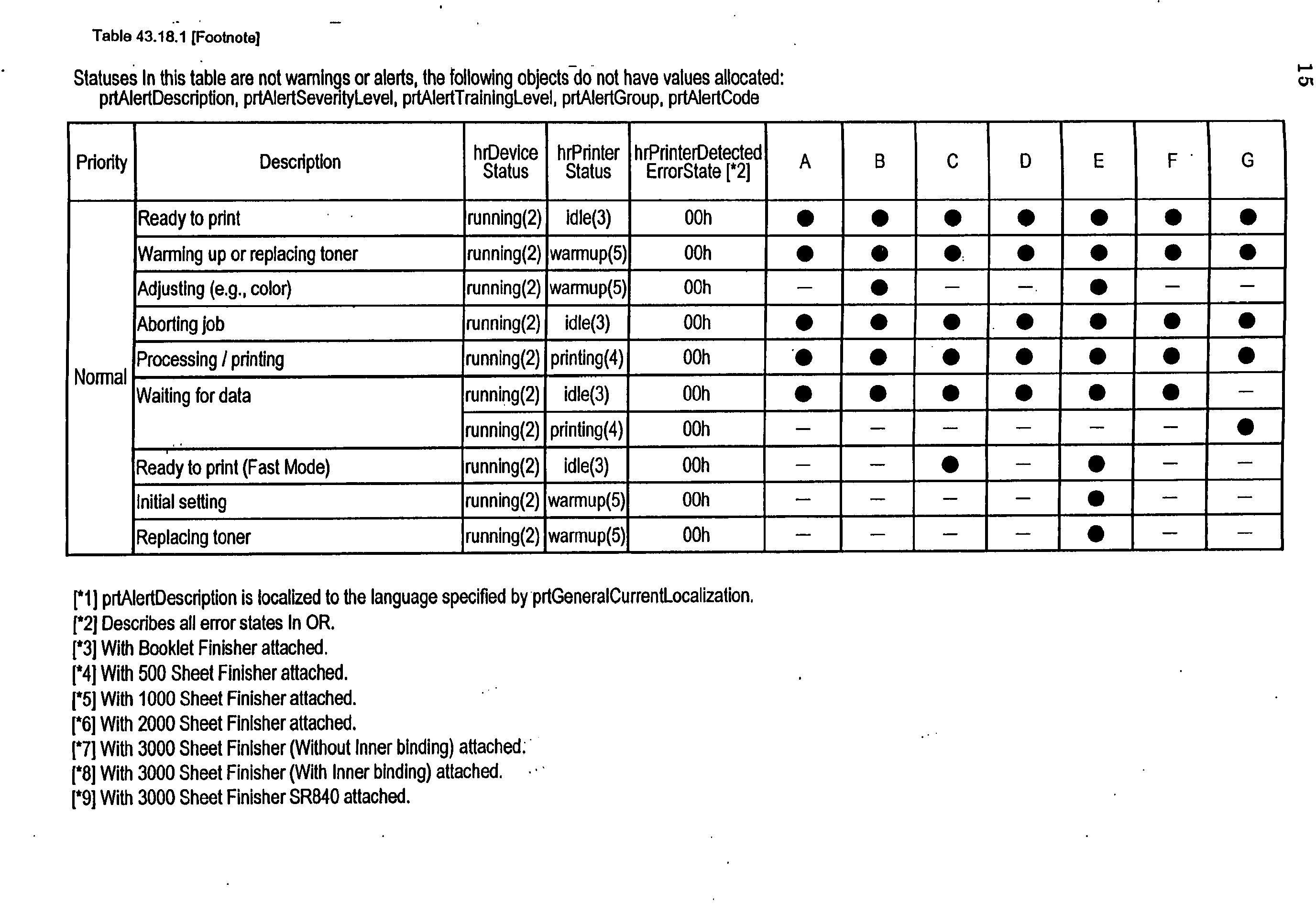

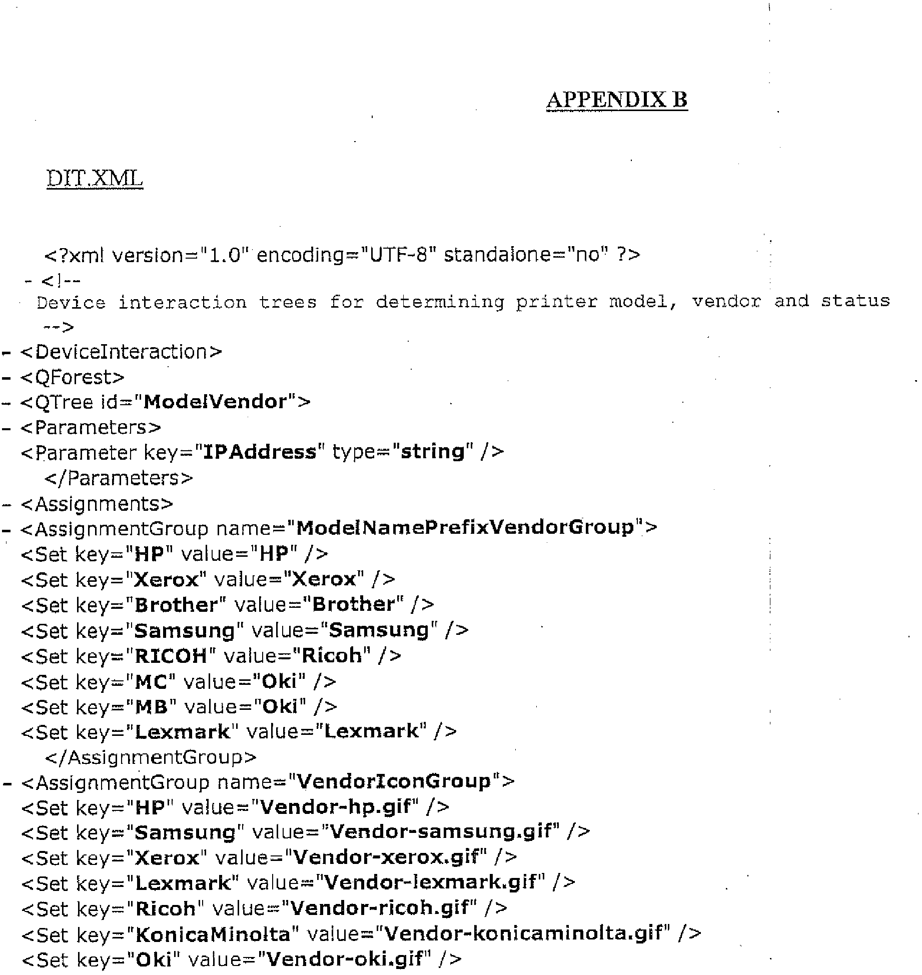

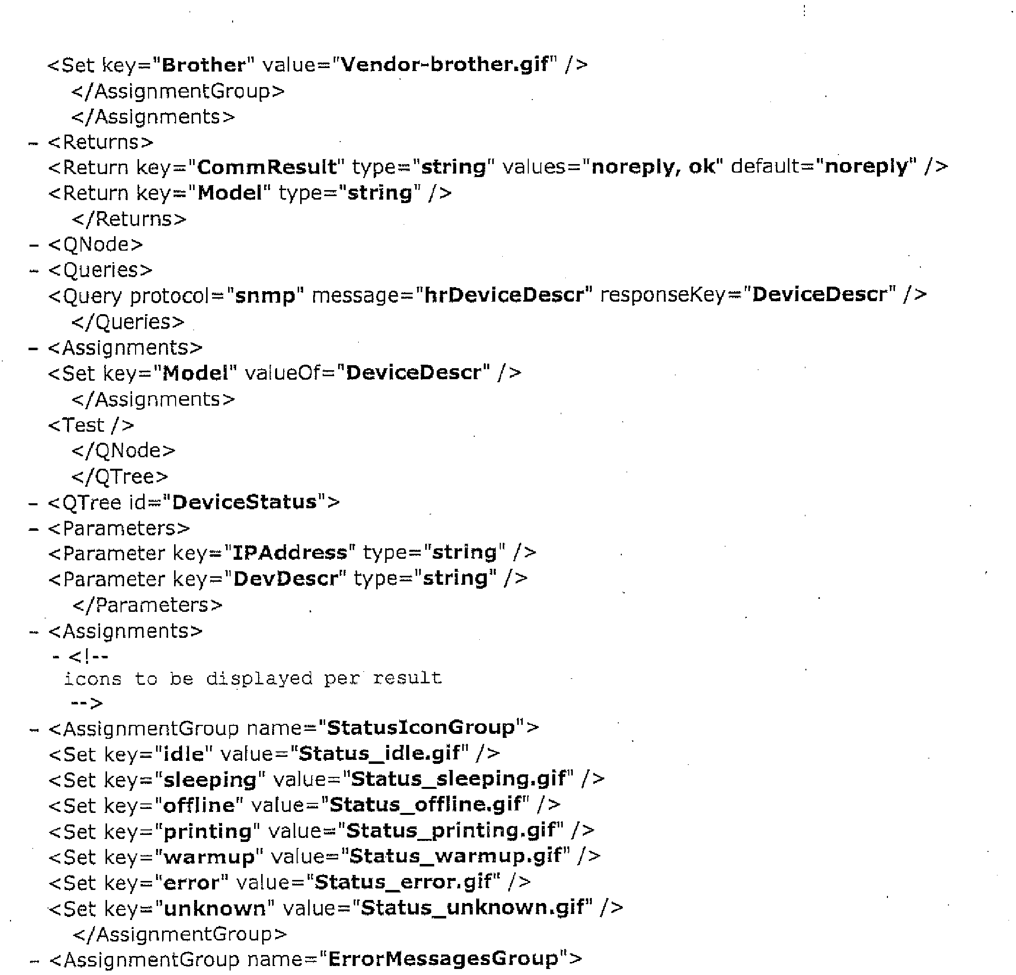

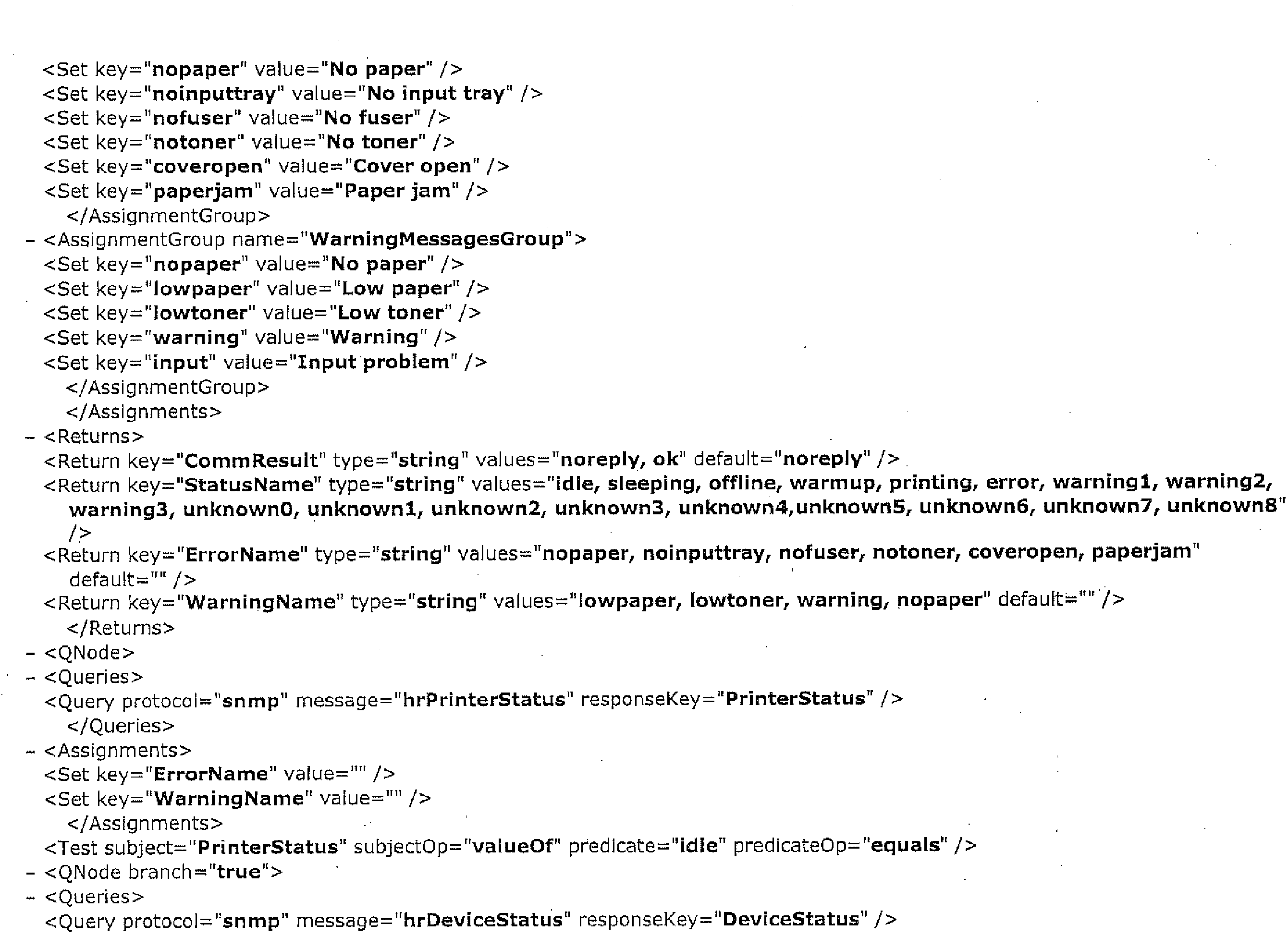

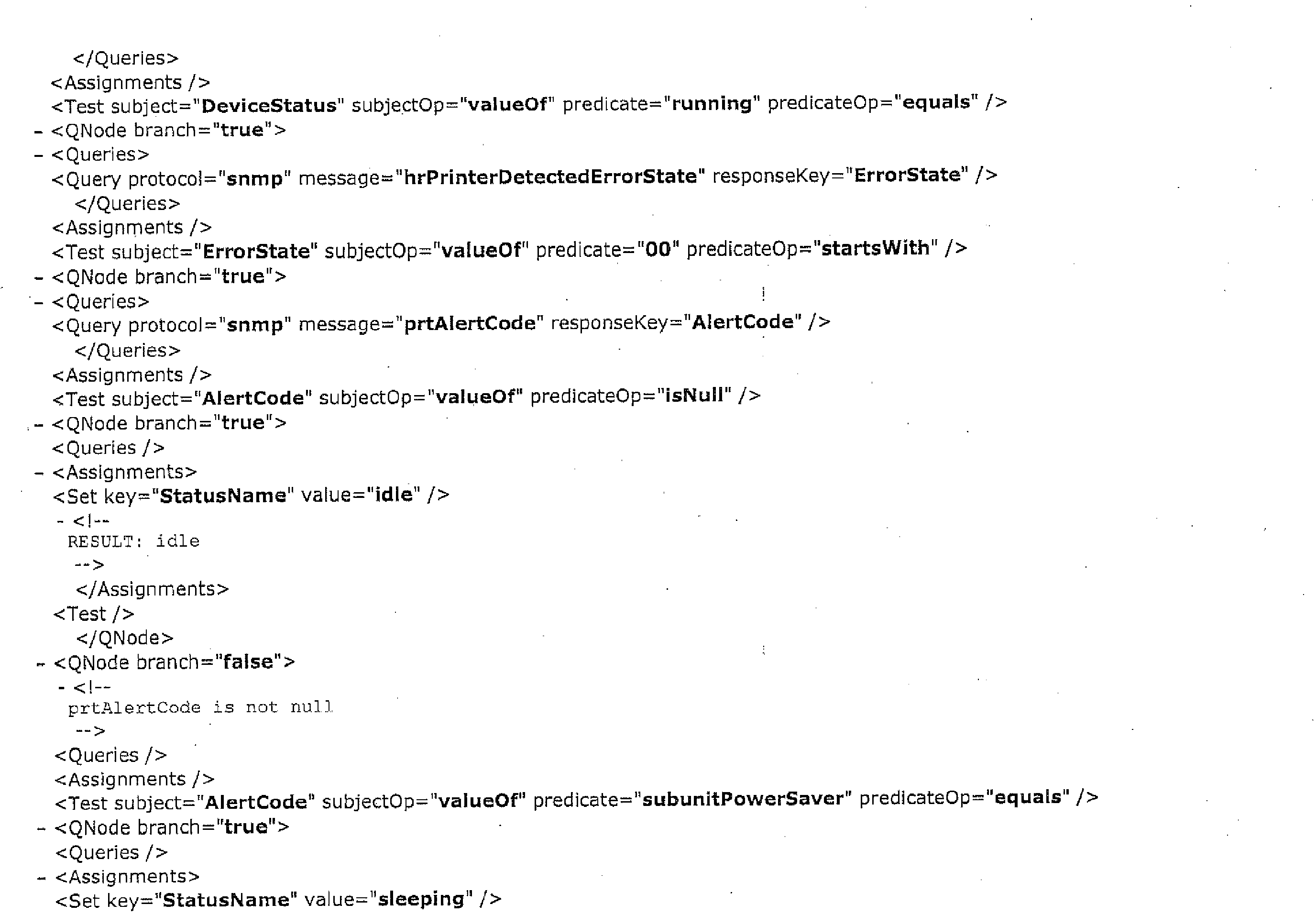

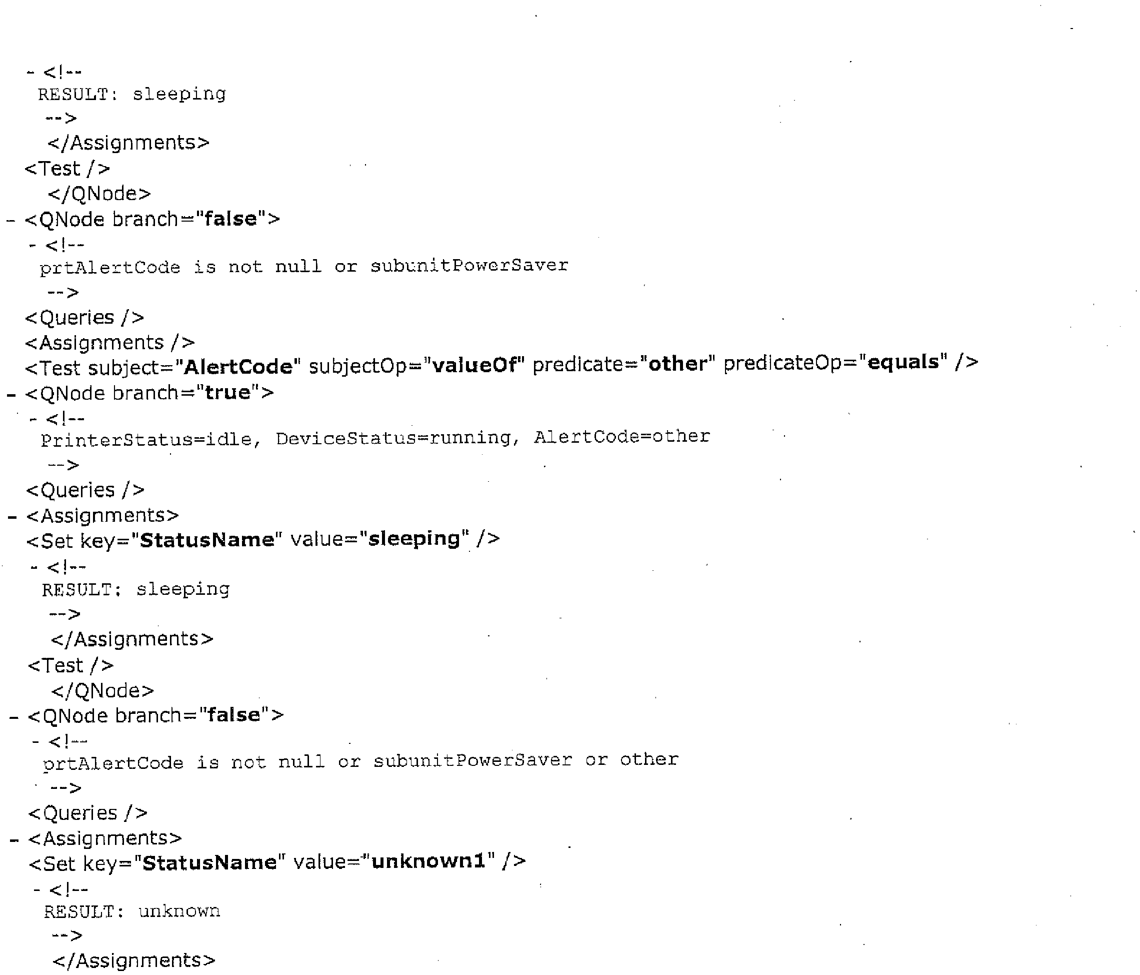

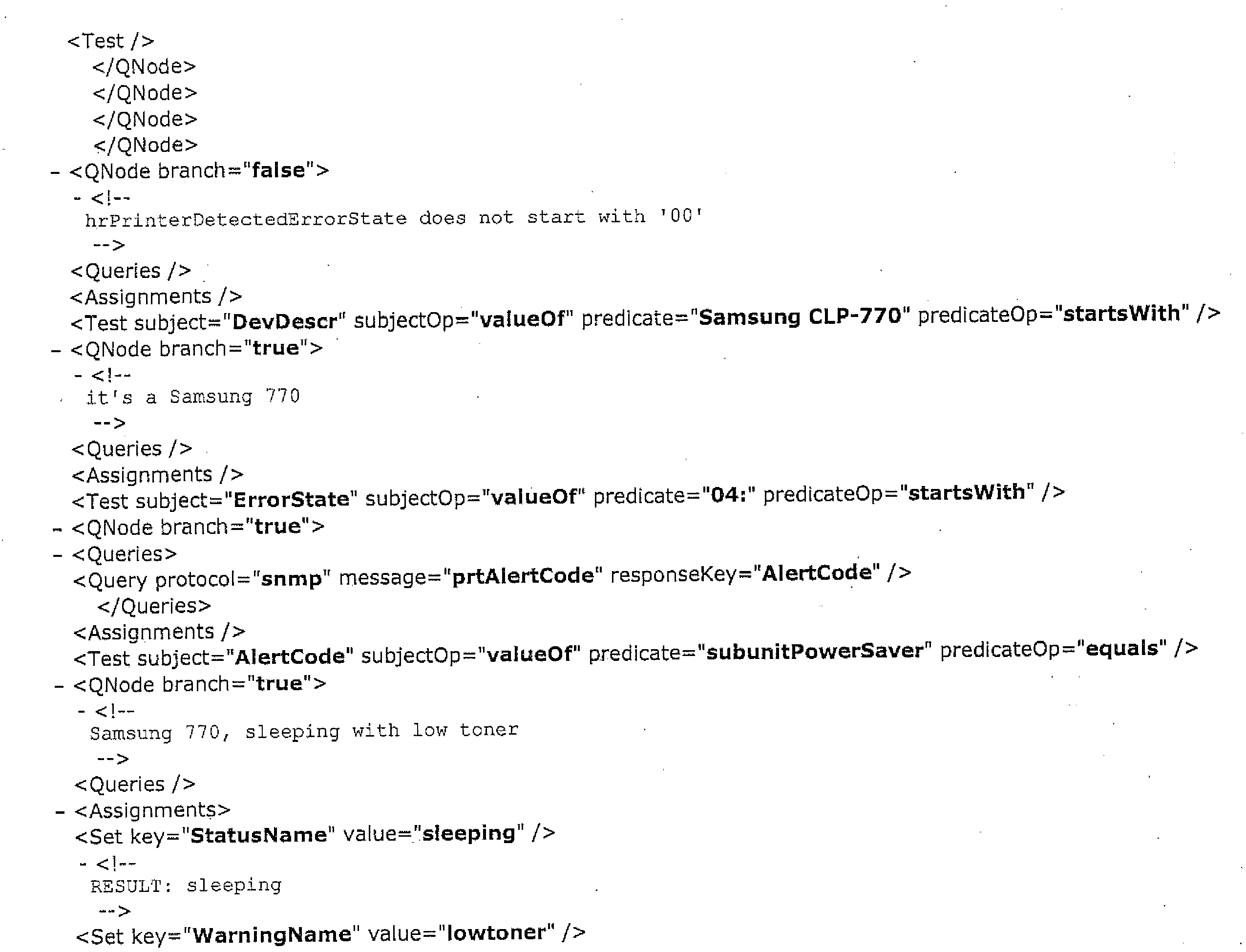

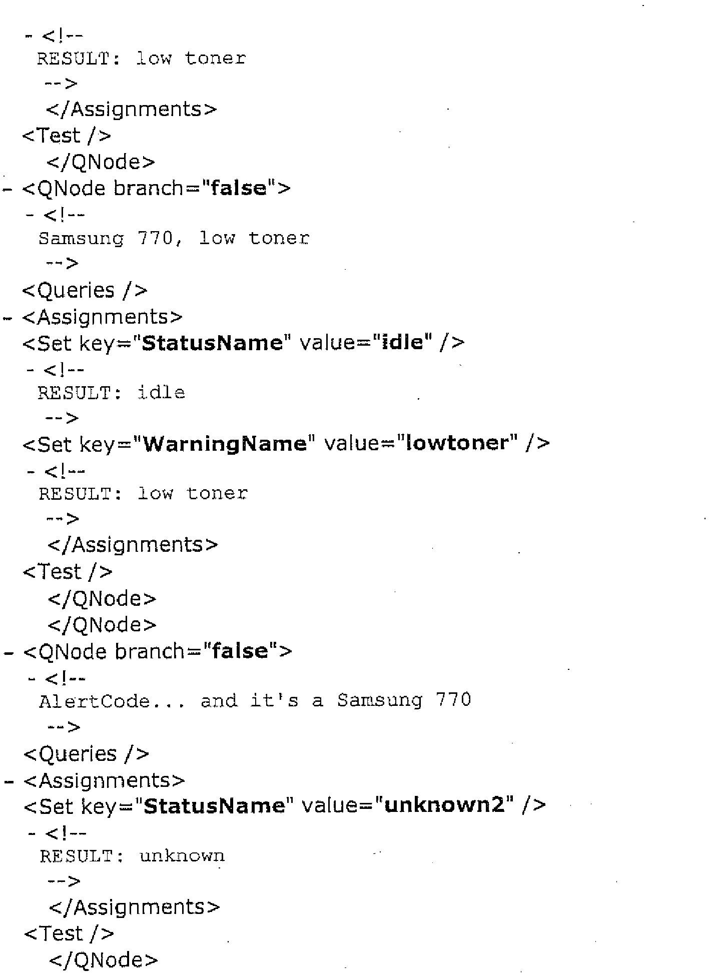

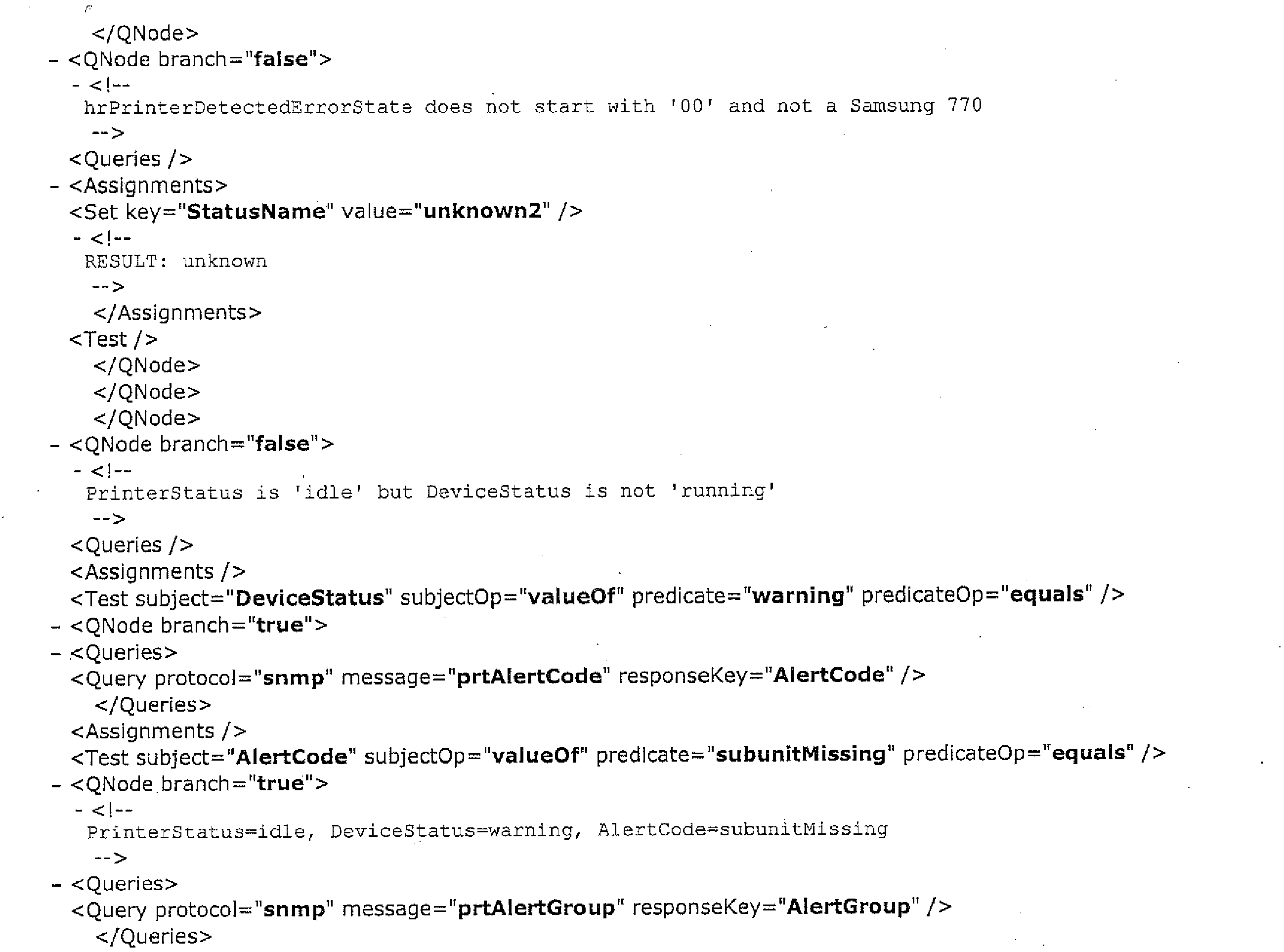

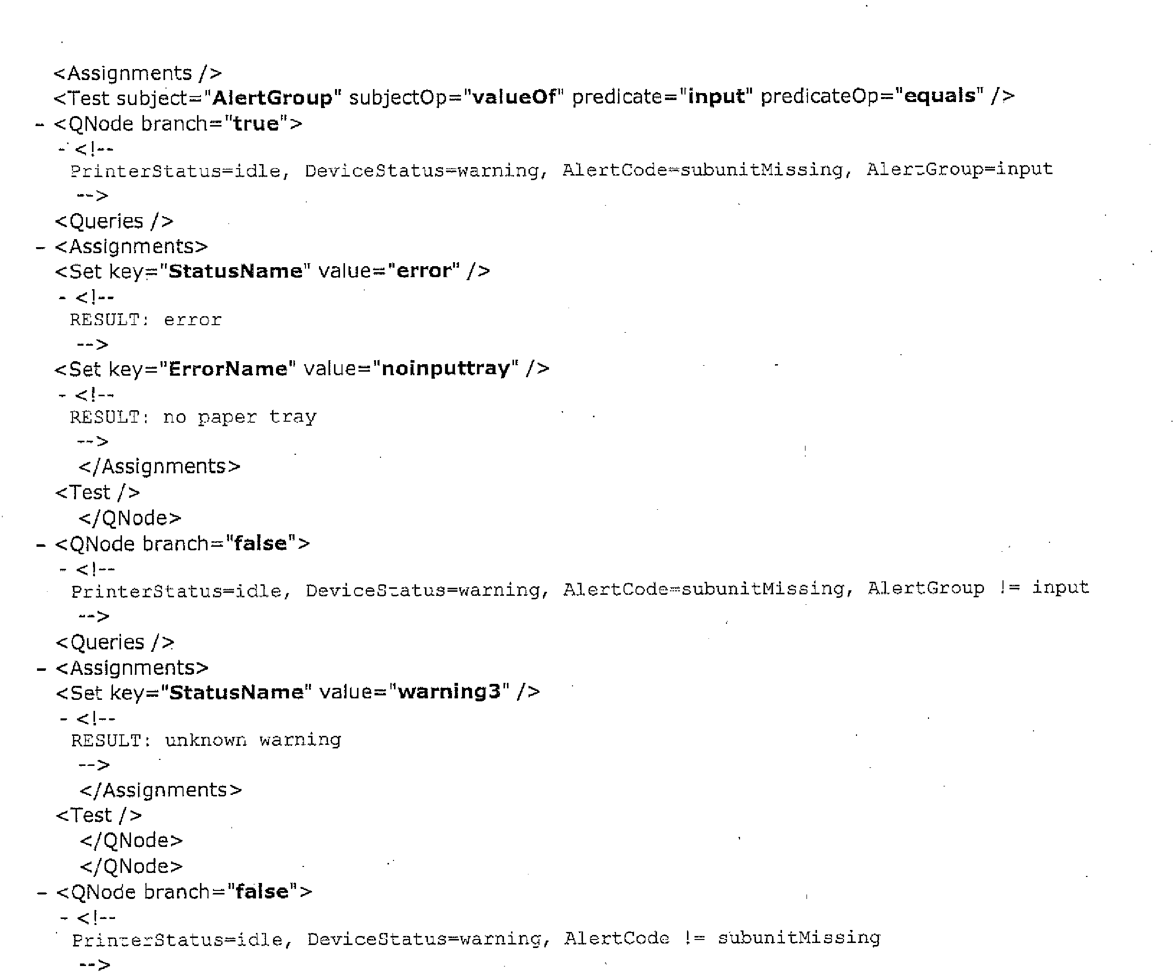

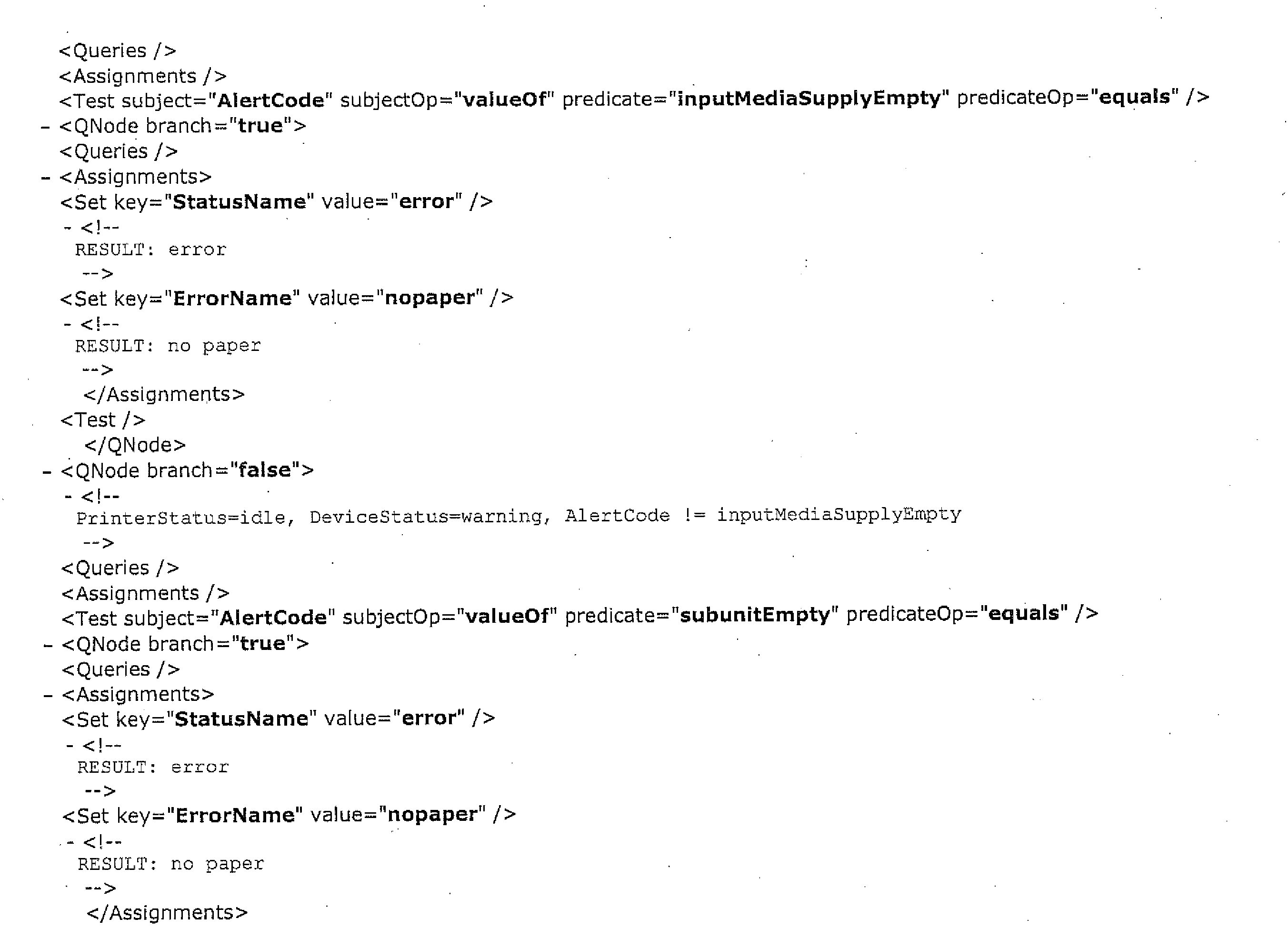

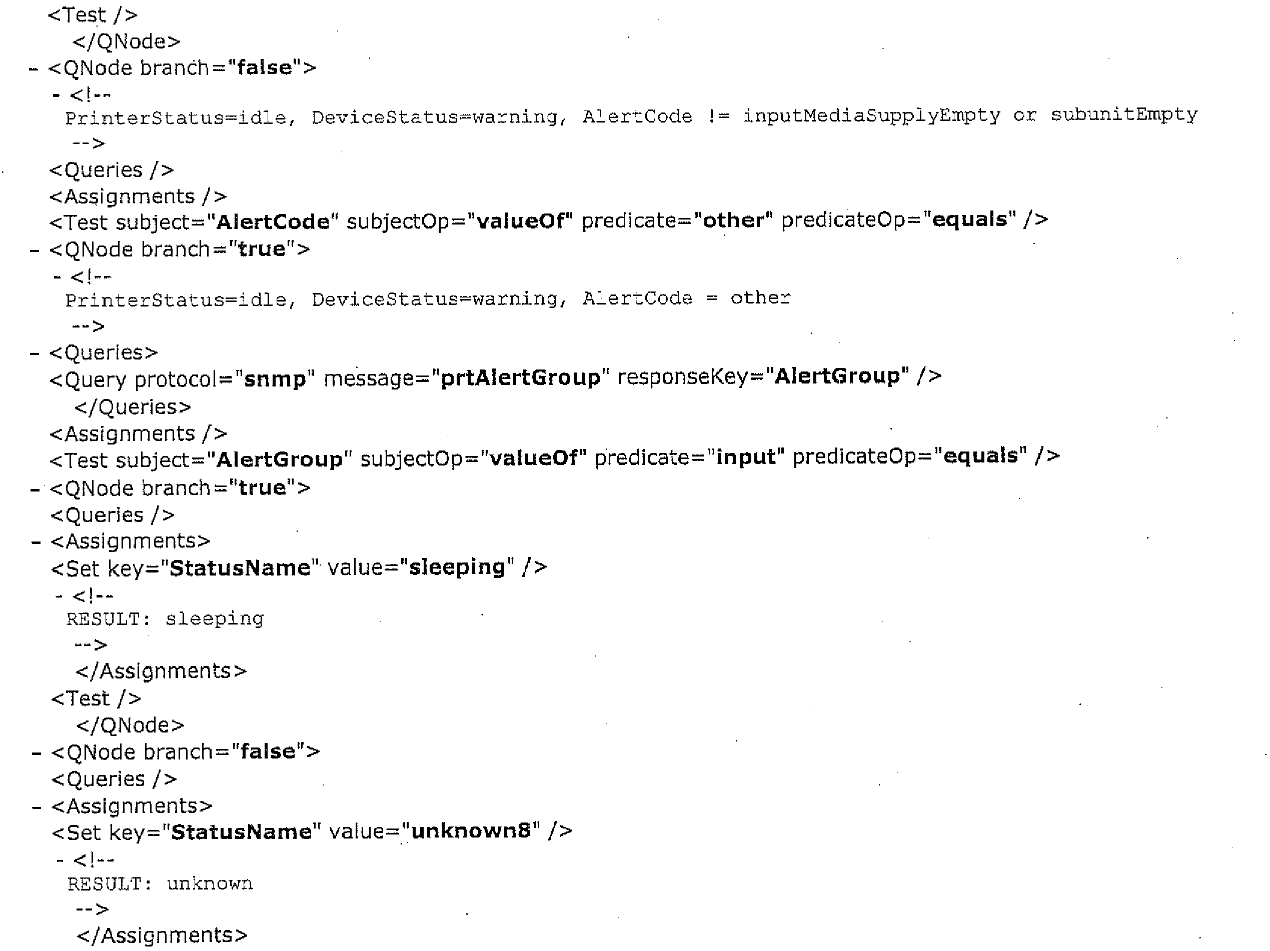

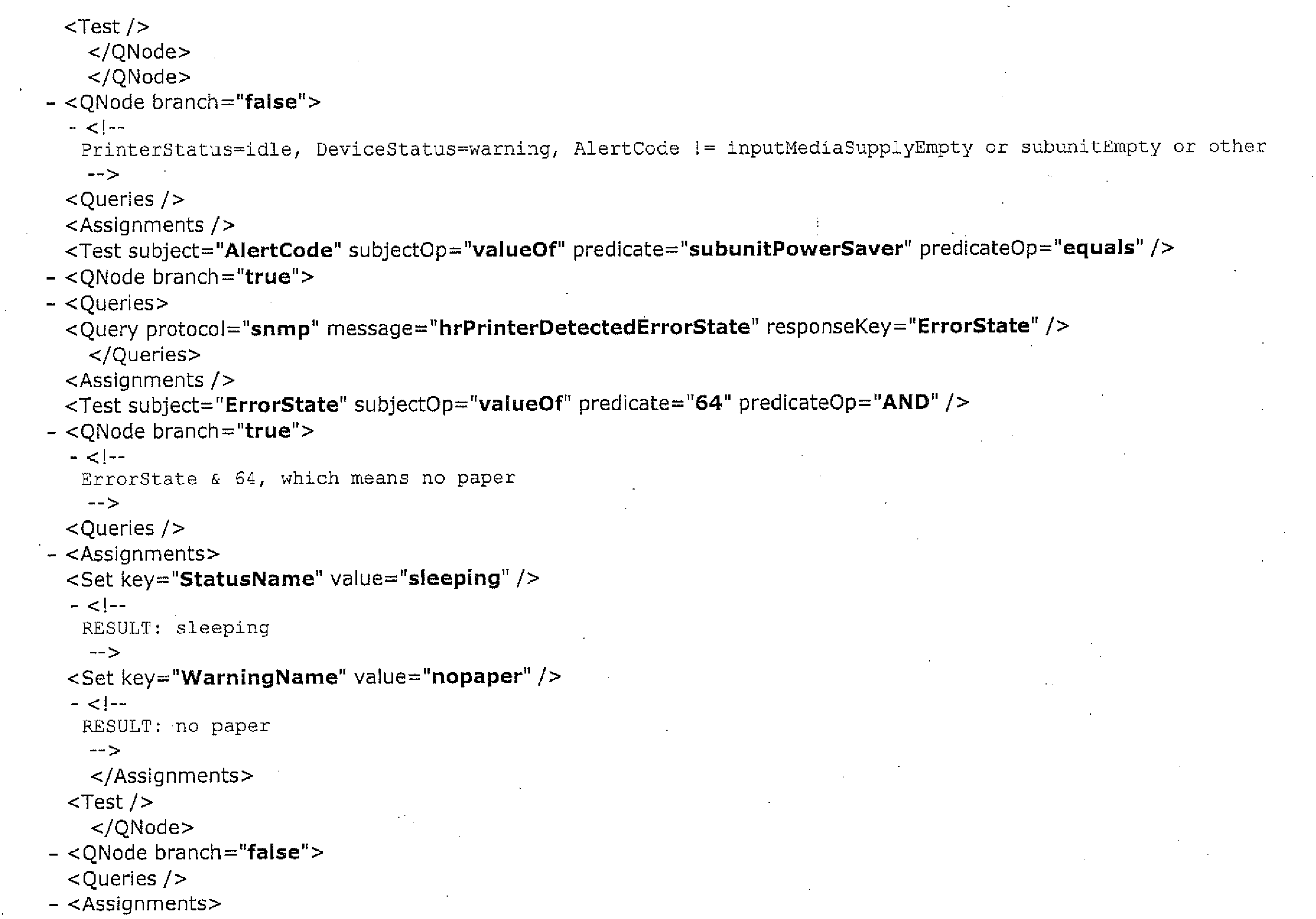

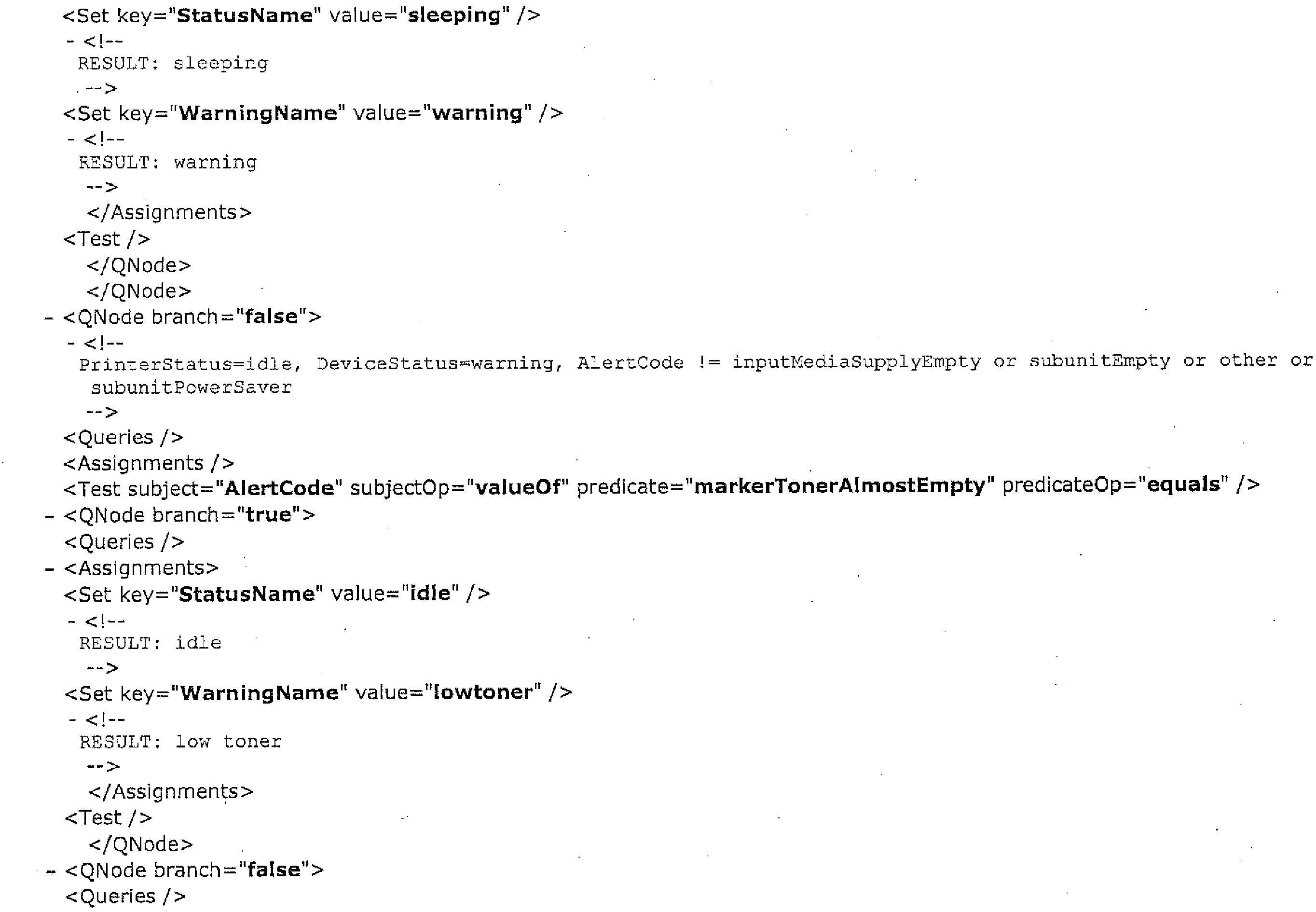

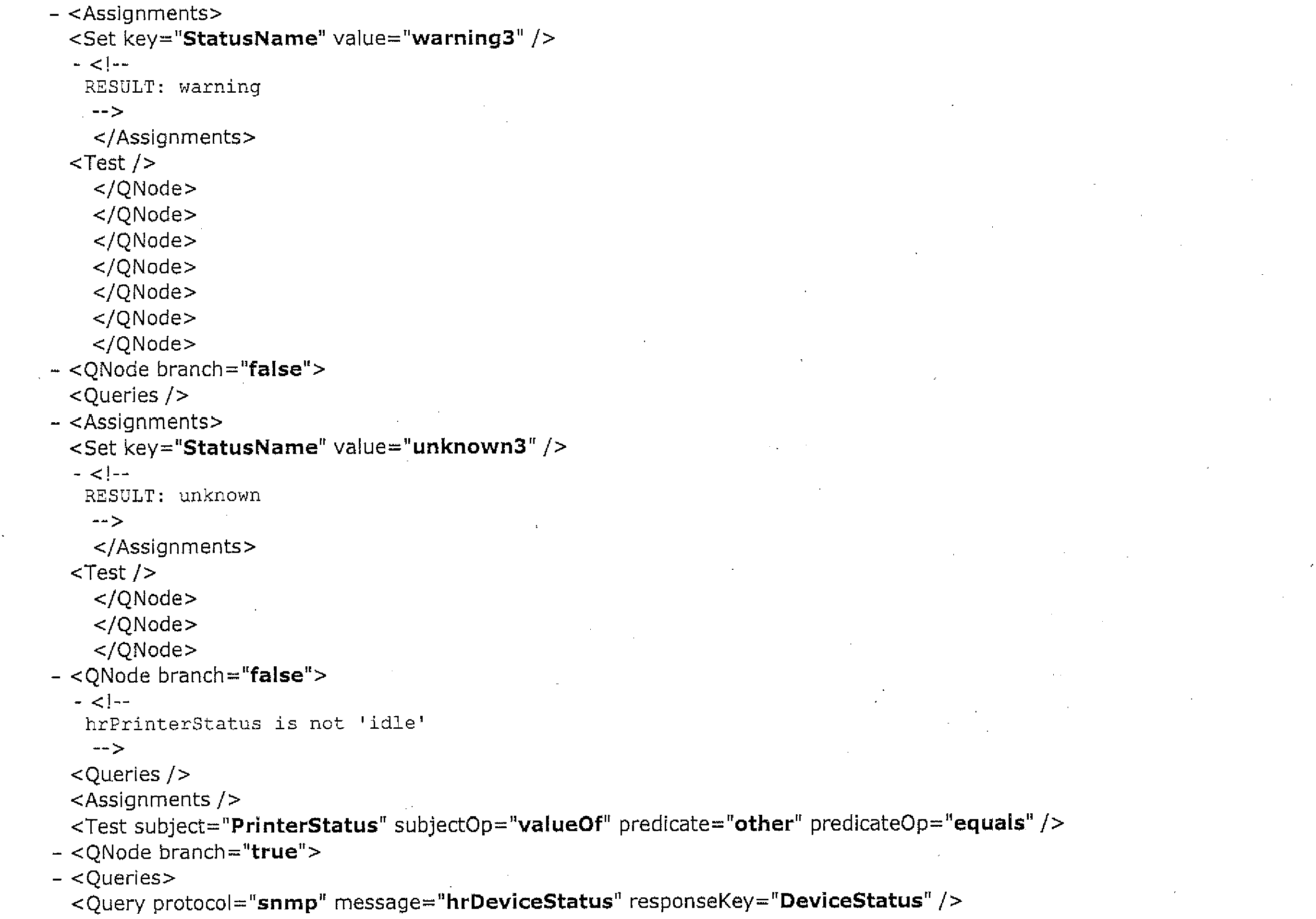

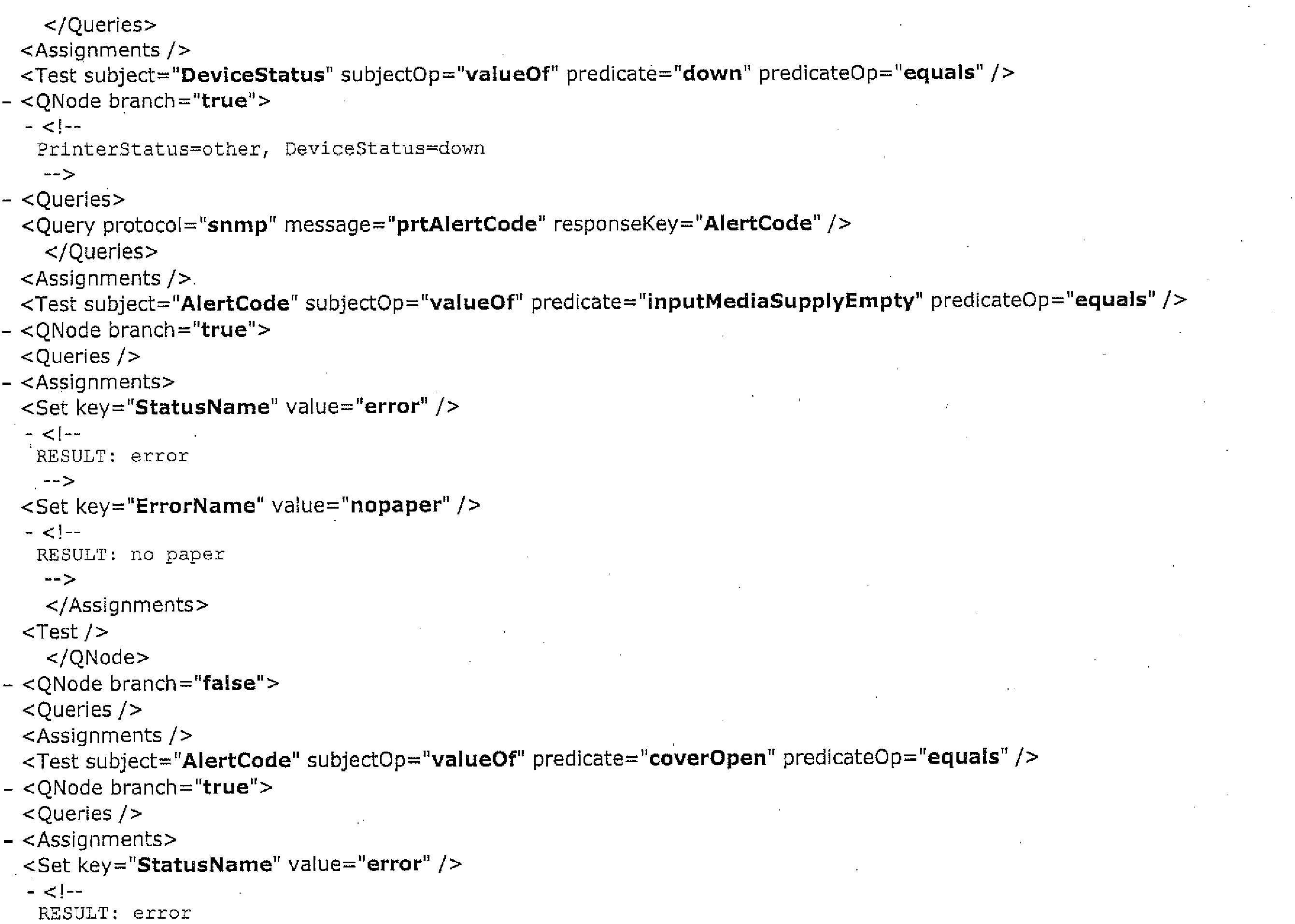

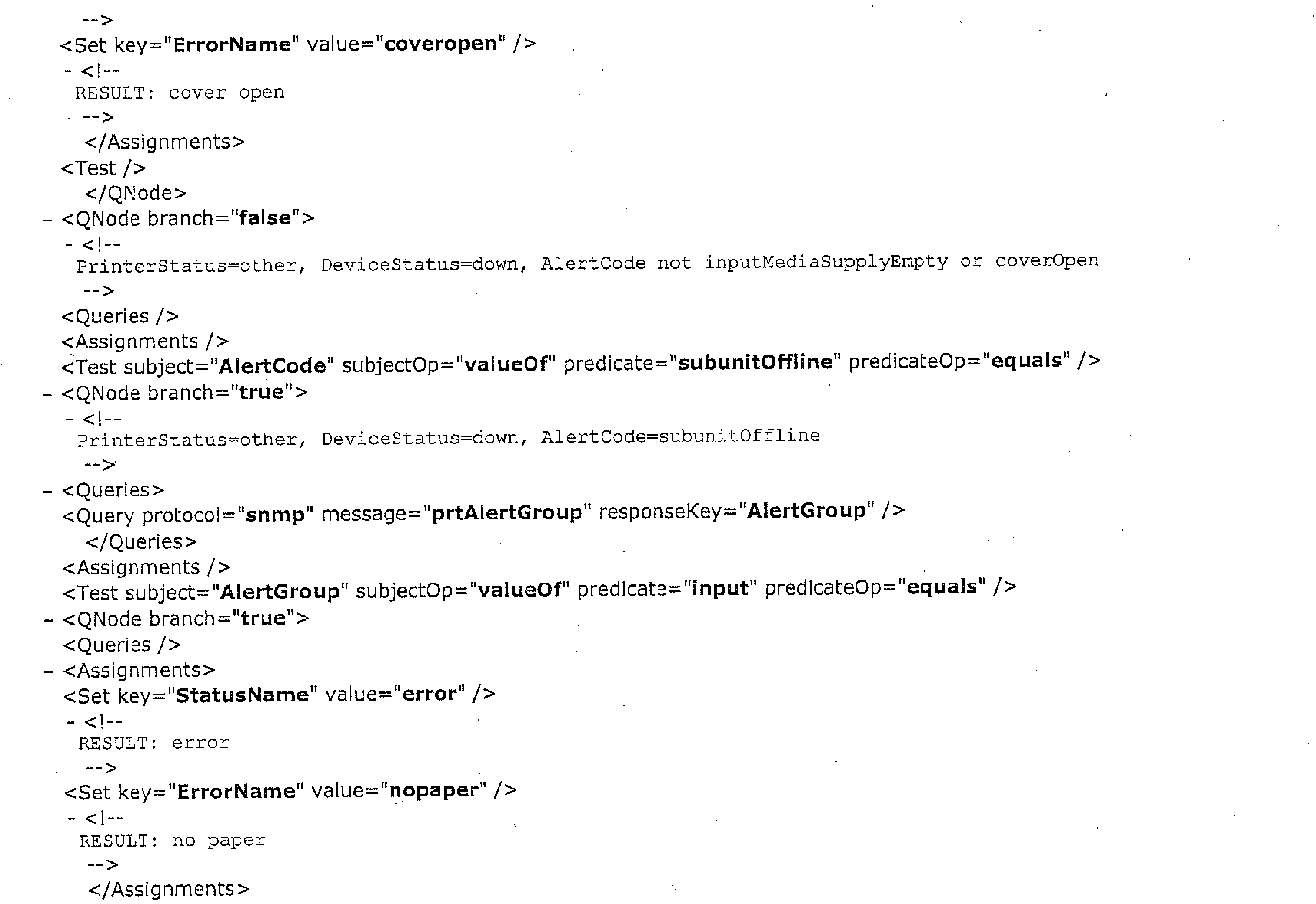

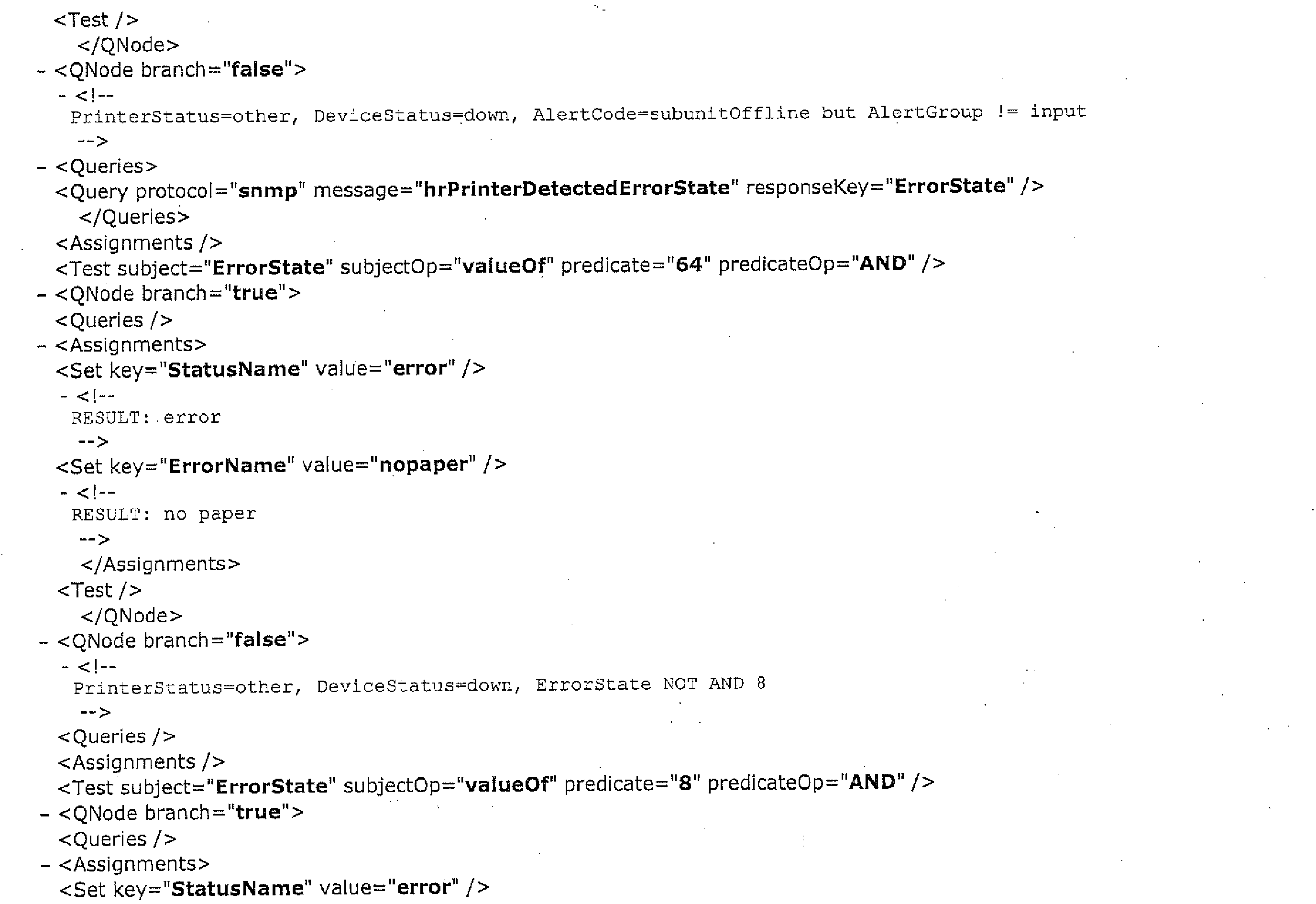

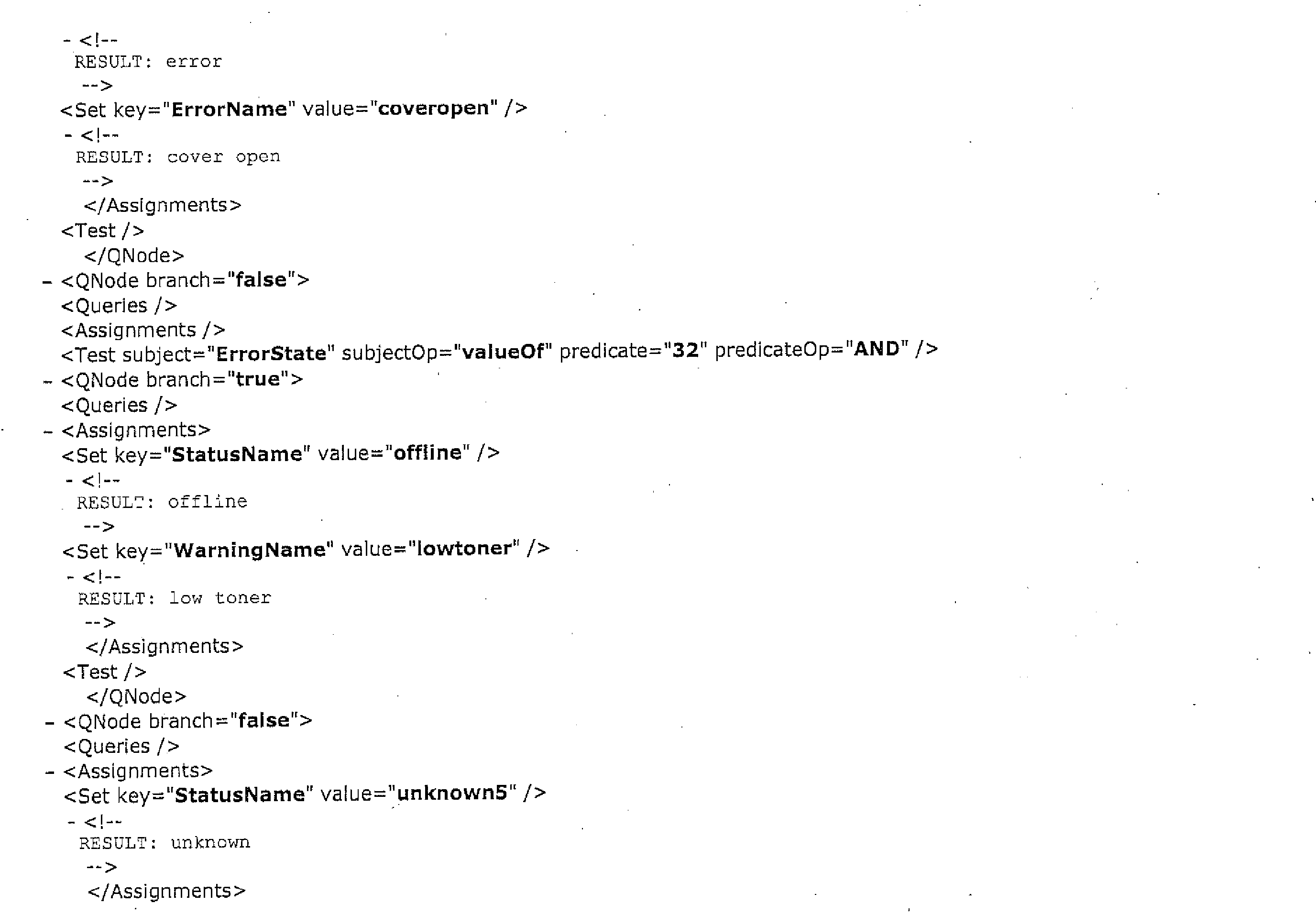

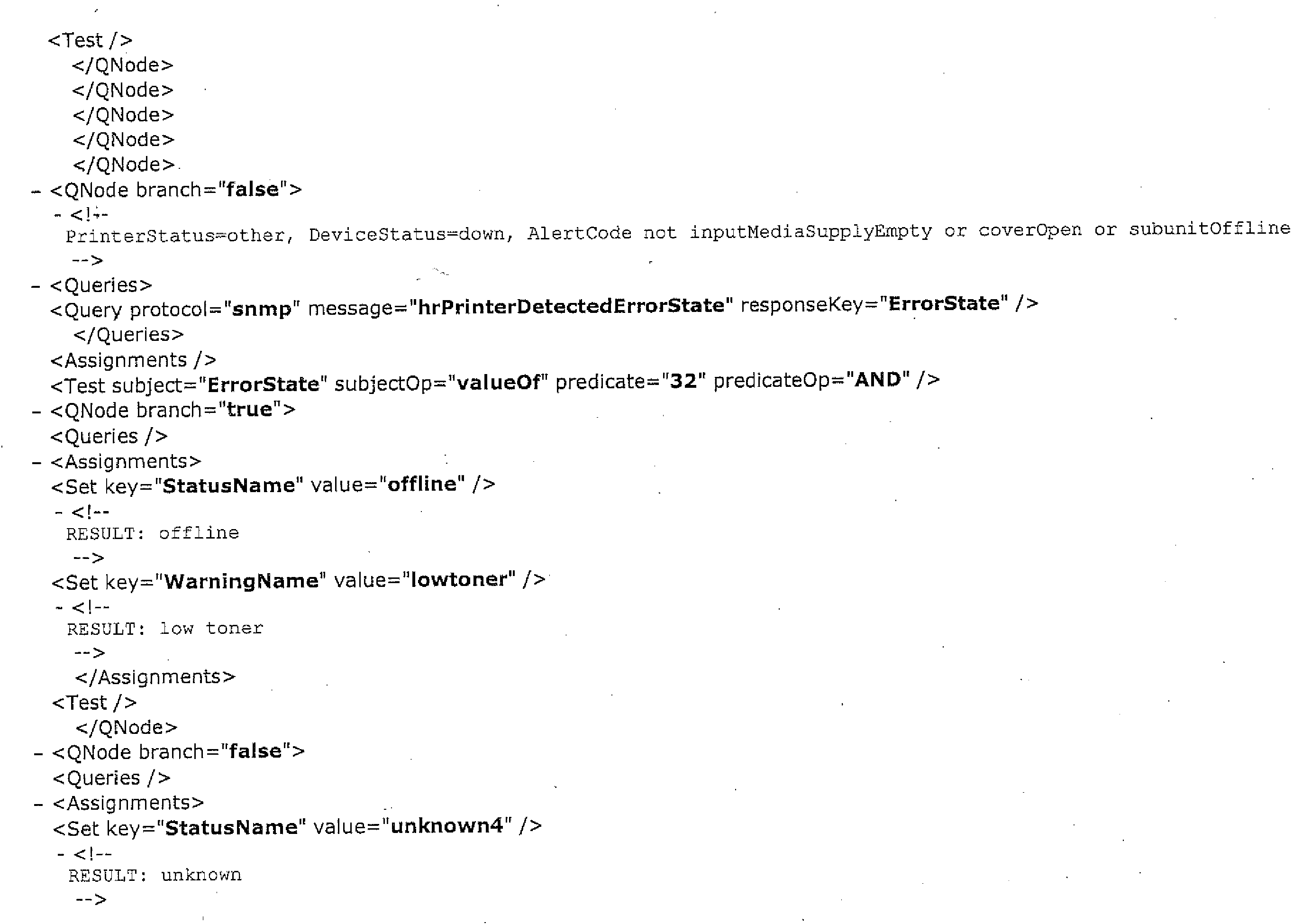

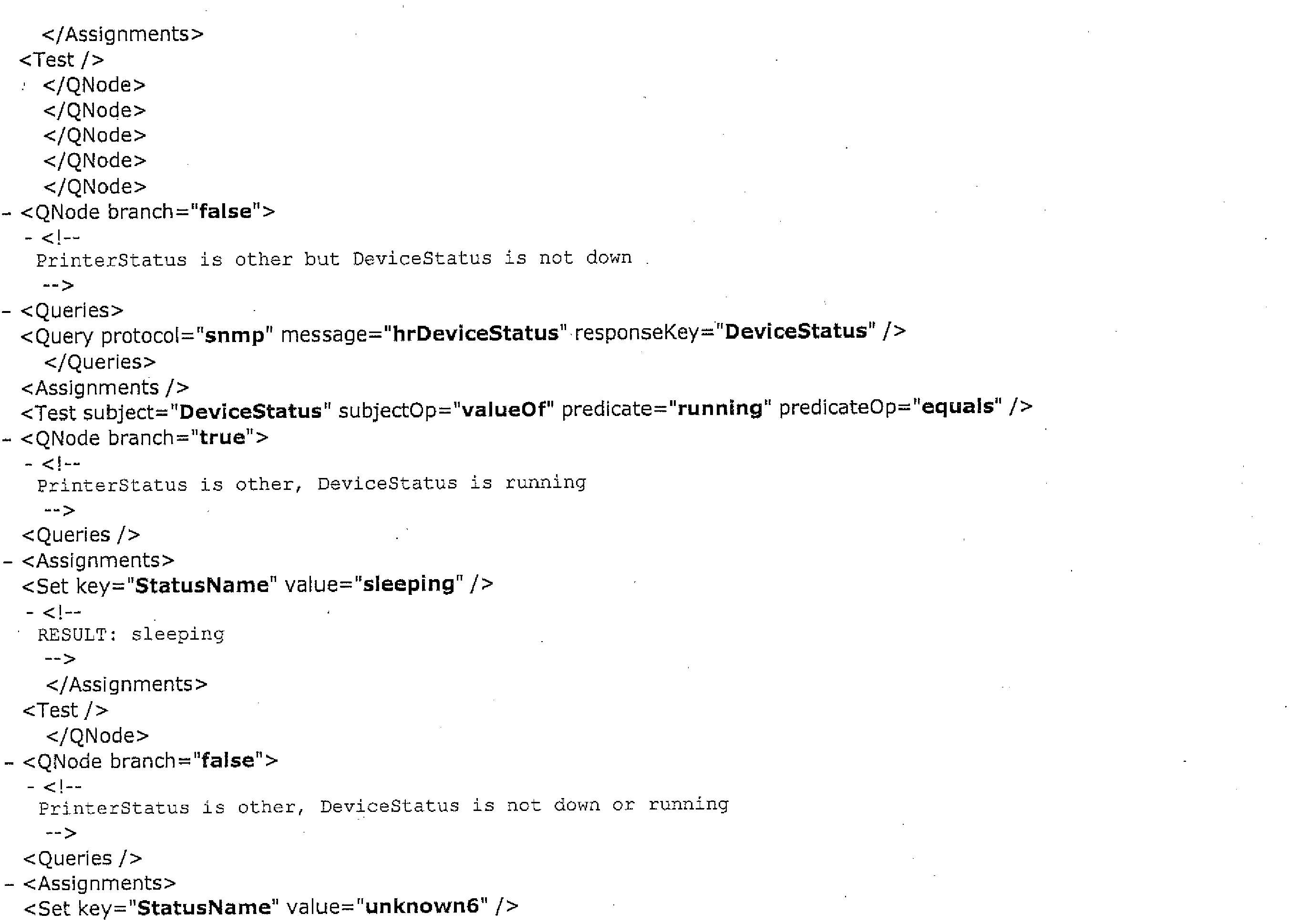

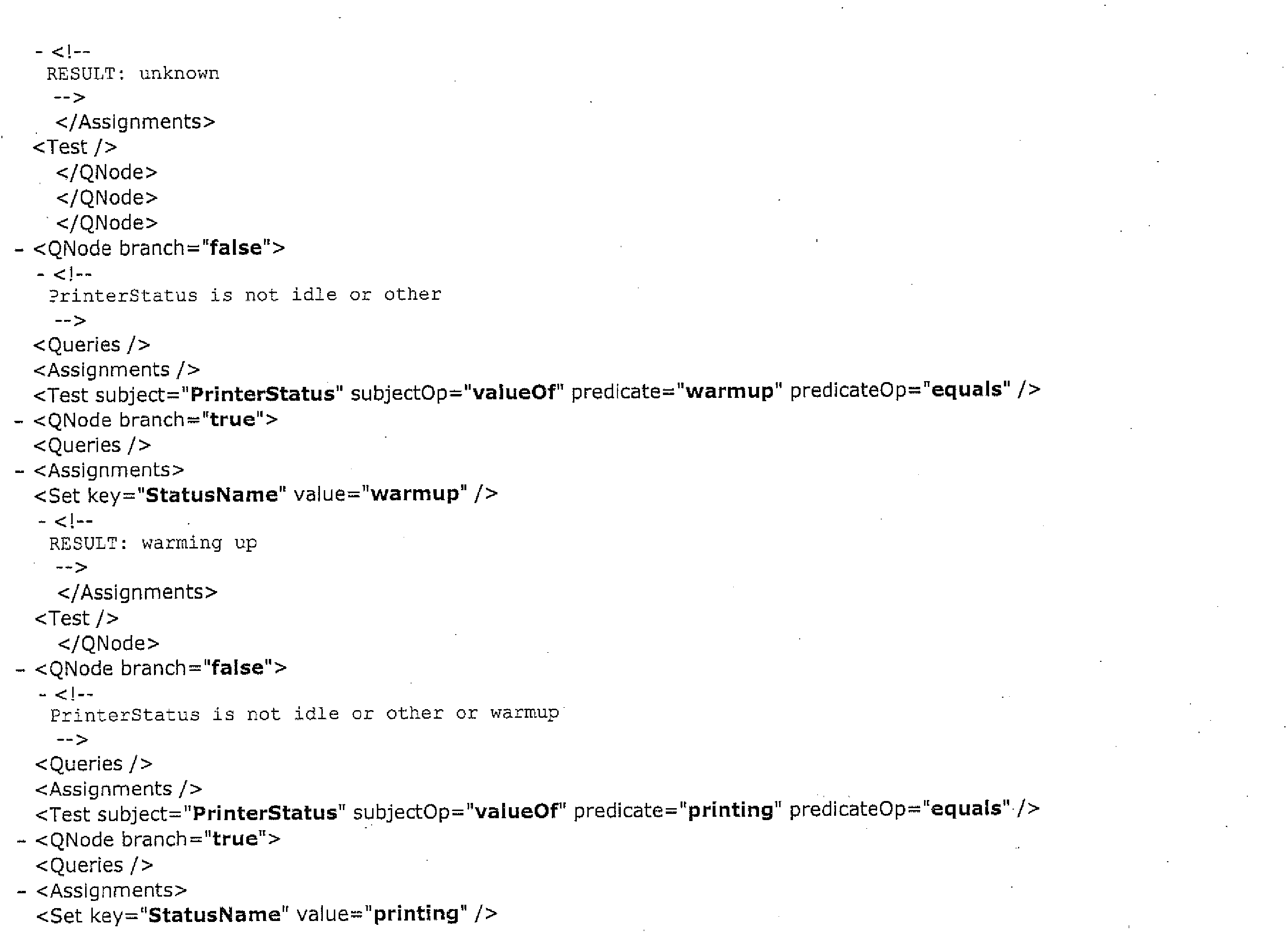

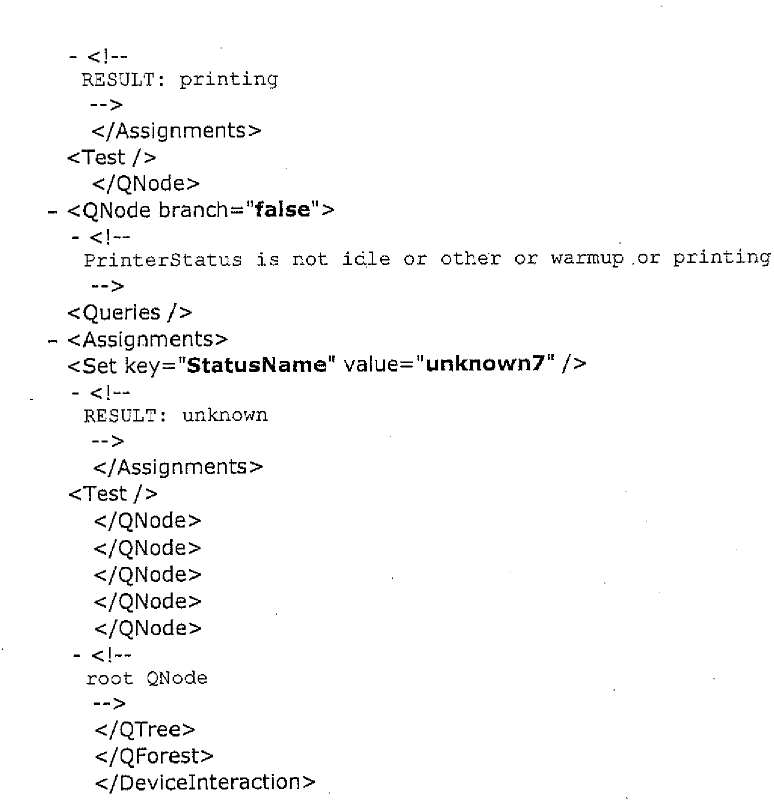

## Claims

1. A computing device comprising:
one or more processors;
one or more interfaces to a plurality of devices, and one or more interfaces from the plurality of devices;
computing logic, coupled to the one or more processors, the one or more interfaces to the plurality of devices, and the one or more interfaces from the plurality of devices, wherein the computing logic is configured to cause performance of:
receiving a request for a state of a device in a plurality of devices;
determining a particular query and a particular test specified by a particular node in a device interaction tree, wherein the particular test specifies one or more values, wherein the device interaction tree includes intermediate nodes and leaf nodes, wherein the intermediate nodes specify queries and tests, wherein the leaf nodes specify device states;
sending, to the device, one or more of the queries including the particular query;
receiving, from the device, one or more responses to the one or more queries, the one or more responses including a particular response to the particular query;
applying the particular test to the particular response, wherein the particular test evaluates the particular response against the one or more values;
as a result of applying the particular test to the particular response, traversing the device interaction tree away from the particular node towards one or more of the leaf nodes;
determining the state of the device by applying one or more of the tests to the one or more responses to reach a particular leaf node of the leaf nodes in the device interaction tree, wherein the particular leaf node specifies the state of the device;
providing the state of the device in response to the request for the state of the device.

2. The computing device as recited in Claim 1, wherein the particular query is a first query of the one or more queries, the particular response is a first response of the one or more responses, the particular test is a first test of the one or more tests, the one or more values are a first one or more values, and the particular node is a first node of the device interaction tree, and wherein, as a result of applying the first test to the first response, traversing the device interaction tree away from the first node comprises traversing the device interaction tree to a second node of the device interaction tree,
the computing logic further configured to cause performance of:
determining a second query and a second test associated with the second node, wherein the second test specifies a second one or more values;
wherein the one or more of the queries includes the second query;
wherein the one or more responses includes a second response to the second query;
applying the second test to the second response, wherein the second test evaluates the second response against the second one or more values;
as a result of applying the second test to the second response, traversing the device interaction tree away from the second node towards the particular leaf node.

3. The computing device as recited in Claim 1, wherein the request specifies an address of the device; wherein the one or more queries are sent to the address; wherein the device states include one or more of: operating statuses, device configurations, or device errors; and wherein the one or more of the queries include one or more of Simple Network Management Protocol queries, Printer Job Language queries, PostScript queries, or Hypertext Transfer Protocol queries.

4. The computing device as recited in Claim 1, wherein the computing logic is further configured to cause a device management application to perform the steps of receiving the request, determining the particular query and the particular test, sending the one or more queries, receiving the one or more responses, applying the particular test, traversing the device interaction tree, determining the state of the device, and providing the state of the device, the computing logic further configured to cause performance of:
updating the device interaction tree without modifying code of the device management application.

5. The computing device as recited in Claim 1, wherein the computing logic is further configured to cause a device management application to perform the steps of receiving the request, determining the particular query and the particular test, sending the one or more queries, receiving the one or more responses, applying the particular test, traversing the device interaction tree, determining the state of the device, and providing the state of the device, the computing logic further configured to cause performance of:
detecting that the device interaction tree cannot provide a particular state of a particular device in the plurality of devices; and
in response to detecting that the device interaction tree cannot provide the particular state of the particular device in the plurality of devices, updating the device interaction tree to account for the particular device without modifying code of the device management application.

6. The computing device as recited in Claim 1, wherein the computing logic is further configured to cause a device management application to perform the steps of receiving the request, determining the particular query and the particular test, sending the one or more queries, receiving the one or more responses, applying the particular test, traversing the device interaction tree, determining the state of the device, and providing the state of the device, the computing logic further configured to cause performance of:
receiving state information associated with query and response information;
updating the device interaction tree to account for the state information associated with the query and response information without modifying code of the device management application.

7. The computing device as recited in Claim 1, the computing logic further configured to cause performance of:
receiving, on a user interface, an indication that a particular state was observed for a particular device;
sending a particular query to the particular device;
receiving a particular response to the particular query; and
modifying the device interaction tree based at least in part on a set of information comprising the indication, the particular query, and the particular response.

8. The computing device as recited in Claim 1, wherein the device interaction tree includes, for any given device in the plurality of devices, a leaf node that specifies a state for the given device, and wherein the plurality of devices include at least two devices with different capabilities, at least two devices with different configurations, and at least two devices from different manufacturers, and at least two devices with a same device state that respond to a same query differently.

9. A method comprising:
receiving a request for a state of a device in a plurality of devices;
determining a particular query and a particular test specified by a particular node in a device interaction tree, wherein the particular test specifies one or more values, wherein the device interaction tree includes intermediate nodes and leaf nodes, wherein the intermediate nodes specify queries and tests, wherein the leaf nodes specify device states;
sending, to the device, one or more of the queries including the particular query;
receiving, from the device, one or more responses to the one or more queries, the one or more responses including a particular response to the particular query;
applying the particular test to the particular response, wherein the particular test evaluates the particular response against the one or more values;
as a result of applying the particular test to the particular response, traversing the device interaction tree away from the particular node towards one or more of the leaf nodes;
determining the state of the device by applying one or more of the tests to the one or more responses to reach a particular leaf node of the leaf nodes in the device interaction tree, wherein the particular leaf node specifies the state of the device;
providing the state of the device in response to the request for the state of the device;
wherein the method is performed by one or more computing devices.

10. A non-transitory computer-readable storage medium storing instructions which, when executed by one or more computing devices, cause performance of:
receiving a request for a state of a device in a plurality of devices;
determining a particular query and a particular test specified by a particular node in a device interaction tree, wherein the particular test specifies one or more values, wherein the device interaction tree includes intermediate nodes and leaf nodes, wherein the intermediate nodes specify queries and tests, wherein the leaf nodes specify device states;
sending, to the device, one or more of the queries including the particular query;
receiving, from the device, one or more responses to the one or more queries, the one or more responses including a particular response to the particular query;
applying the particular test to the particular response, wherein the particular test evaluates the particular response against the one or more values;
as a result of applying the particular test to the particular response, traversing the device interaction tree away from the particular node towards one or more of the leaf nodes;
determining the state of the device by applying one or more of the tests to the one or more responses to reach a particular leaf node of the leaf nodes in the device interaction tree, wherein the particular leaf node specifies the state of the device;
providing the state of the device in response to the request for the state of the device.
